(19) Europäisches Patentamt
European Patent Office
Office européen des brevets

(11) EP 4 495 164 A1

(12) **EUROPEAN PATENT APPLICATION**
published in accordance with Art. 153(4) EPC

(43) Date of publication:
**22.01.2025 Bulletin 2025/04**

(21) Application number: **23788176.8**

(22) Date of filing: **31.03.2023**

(51) International Patent Classification (IPC):
***C08G 64/00*** *(2006.01)* ***C09D 175/04*** *(2006.01)*
***C08G 18/00*** *(2006.01)* ***C08G 18/42*** *(2006.01)*
***C08G 18/44*** *(2006.01)*

(52) Cooperative Patent Classification (CPC):
**C08G 18/00; C08G 18/42; C08G 18/44; C08G 64/00; C09D 175/04**

(86) International application number:
**PCT/JP2023/013493**

(87) International publication number:
**WO 2023/199756 (19.10.2023 Gazette 2023/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.04.2022 JP 2022067900**

(71) Applicant: **Tosoh Corporation**
**Yamaguchi 746-8501 (JP)**

(72) Inventor: **HONDA Kohei**
**Yokkaichi-shi, Mie 510-8540 (JP)**

(74) Representative: **TBK**
**Bavariaring 4-6**
**80336 München (DE)**

(54) **COMPOUND, METHOD FOR PRODUCING SAME, COMPOSITION, URETHANE RESIN, AQUEOUS URETHANE RESIN DISPERSION, AND COATING AGENT**

(57) One aspect of the present invention relates to a compound represented by Formula (A1-1).

[Chem. 1]

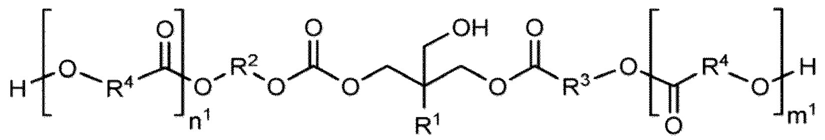

(A1-1)

[in Formula (A1-1),
$R^1$ represents a hydrogen atom, an alkyl group, or a hydroxyalkyl group, $R^2$ represents an alkanediyl group,
$R^3$ represents an alkanediyl group or *1-$R^a$-C(=O)-O-$R^b$-*2,
$R^4$ represents an alkanediyl group, *1-O-$R^c$-*2, or *1-$R^a$-C(=O)-O-$R^b$-*2,
$R^a$, $R^b$, and $R^c$ each independently represent an alkanediyl group,
*1 represents a site for bonding to a carbonyl group,
*2 represents a site for bonding to an oxygen atom,
$n^1$ and $m^1$ each represent an integer of 0 or more, and
in a case where $R^4$ is present in plurality, a plurality thereof may be the same or different from each other].

## Description

### Technical Field

The present invention relates to a compound, a method for producing the same, a composition, a urethane resin, an aqueous urethane resin dispersion, and a coating agent.

### Background Art

Like a polyester polyol, a polyether polyol, or the like, a polycarbonate polyol is useful as a raw material for producing a urethane resin (also called a polyurethane resin) by being subjected to a reaction with a polyisocyanate compound and is useful as a raw material for an adhesive, a coating material, and the like.

Since a polyester polyol has an ester bond, a urethane resin obtained from the polyester polyol has a disadvantage in that it has poor hydrolysis resistance. In addition, since a polyether polyol has an ether bond, a urethane resin obtained from the polyether polyol has a disadvantage in that it has poor weather resistance and poor heat resistance. In contrast to these substances, a urethane resin obtained from a polycarbonate polyol tends to be excellent in durability (heat resistance, weather resistance, hydrolysis resistance, chemical resistance, and the like).

Polycarbonate polyols are usually produced by reacting a carbonate ester with a diol in the presence of a transesterification catalyst (transesterification reaction).

Polycarbonate polyols having various structures have been proposed so far according to the intended purpose. For example, Patent Literature 1 and Patent Literature 2 propose a polycarbonate polyol that is obtained by a transesterification reaction of a polycarbonate diol with a triol compound and/or a tetraol compound.

### Citation List

### Patent Literature

[Patent Literature 1] Japanese Unexamined Patent Publication No. H3-220233
[Patent Literature 2] Japanese Unexamined Patent Publication No. 2012-184380

## Summary of Invention

### Technical Problem

The present invention is directed to providing a novel compound useful as a raw material for a urethane resin and the like, and a method for producing the same, as well as a urethane resin made from the compound as a raw material. In addition, the present invention is directed to providing a composition containing the compound, and a urethane resin made from the composition as a raw material. In addition, another object of the present invention is to provide an aqueous urethane resin dispersion containing the urethane resin having an acidic group.

### Solution to Problem

The present invention provides each of the following inventions.

[1] A compound represented by Formula (A1-1),

[Chem. 1]

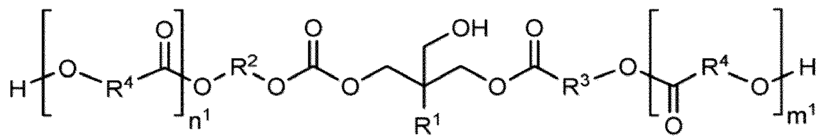

(A1-1)

[in Formula (A1-1),

$R^1$ represents a hydrogen atom, an alkyl group, or a hydroxyalkyl group, $R^2$ represents an alkanediyl group,
$R^3$ represents an alkanediyl group or * 1-$R^a$-C(=O)-O-$R^b$-*2,
$R^4$ represents an alkanediyl group, *1-O-$R^c$-*2, or * 1-$R^a$-C(=O)-O-$R^b$-*2,
$R^a$, $R^b$, and $R^c$ each independently represent an alkanediyl group,
*1 represents a site for bonding to a carbonyl group,
*2 represents a site for bonding to an oxygen atom,
$n^1$ and $m^1$ each represent an integer of 0 or more, and
in a case where $R^4$ is present in plurality, a plurality thereof may be the same or different from each other].

[2] A composition comprising:

the compound according to [1];
a polycarbonate polyol represented by Formula (A1-2); and
a polyester polyol represented by Formula (A1-3),
wherein in a case where a total number of moles of a group represented by Formula (a1-1), which is contained in the composition, is denoted as $C_{A1-1}$, a total number of moles of a group represented by Formula (a1-2), which is contained in the composition, is denoted as $C_{A1-2}$, and a total number of moles of a group represented by Formula (a1-3), which is contained in the composition, is denoted as $C_{A1-3}$,
a molar ratio $(C_{A1-1}/(C_{A1-1} + C_{A1-2} + C_{A1-3}) \times 100)$ is 5.3 to 99,

[Chem. 2]

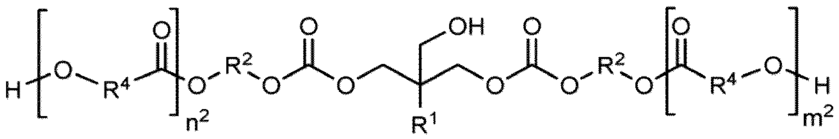

(A1-2)

[in Formula (A1-2), $R^1$, $R^2$, and $R^4$ respectively have the same meanings as defined above,
$n^2$ and $m^2$ each represent an integer of 0 or more,
a plurality of $R^2$'s may be the same or different from each other, and
in a case where $R^4$ is present in plurality, a plurality thereof may be the same or different from each other]

[Chem. 3]

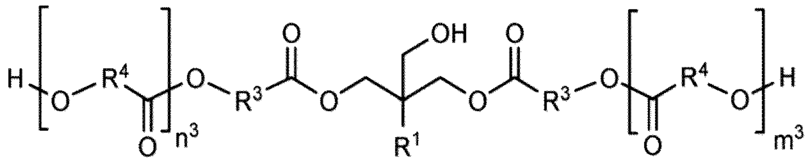

(A1-3)

[in Formula (A1-3), $R^1$, $R^3$, and $R^4$ respectively have the same meanings as defined above,
$n^3$ and $m^3$ each represent an integer of 0 or more,
a plurality of $R^3$'s may be the same or different from each other, and
in a case where $R^4$ is present in plurality, a plurality thereof may be the same or different from each other]

[Chem. 4]

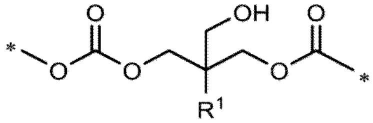

(a1-1)

[in Formula (a1-1), $R^1$ has the same meaning as defined above, and * represents a bonding site]

[Chem. 5]

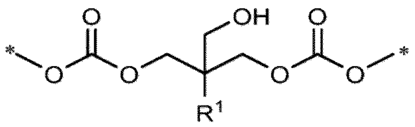

(a1-2)

[in Formula (a1-2), $R^1$ has the same meaning as defined above, and * represents a bonding site]

[Chem. 6]

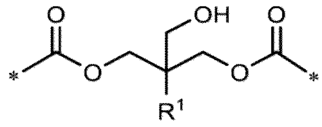

(a1-3)

[in Formula (a1-3), $R^1$ has the same meaning as defined above, and * represents a bonding site].

[3] The composition according to [2], further comprising:

a polycarbonate polyol represented by Formula (A2-2); and
a polyester polyol represented by Formula (A2-3),
wherein in a case where a total number of moles of a group represented by Formula (a1-1), which is contained in the composition, is denoted as $C_{A1-1}$, a total number of moles of a group represented by Formula (a1-2), which is contained in the composition, is denoted as $C_{A1-2}$, a total number of moles of a group represented by Formula (a1-3), which is contained in the composition, is denoted as $C_{A1-3}$, a total number of moles of a group represented by Formula (a2-2), which is contained in the composition, is denoted as $C_{A2-2}$, and a total number of moles of a group represented by Formula (a2-3), which is contained in the composition, is denoted as $C_{A2-3}$,
a molar ratio $((C_{A2-2} + C_{A2-3})/(C_{A1-1} + C_{A1-2} + C_{A1-3}))$ is 0.01 to 0.750,

[Chem. 7]

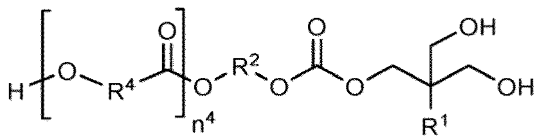

(A2-2)

[in Formula (A2-2), $R^1$, $R^2$, and $R^4$ respectively have the same meanings as defined above,
$n^4$ represents an integer of 0 or more, and
in a case where $R^4$ is present in plurality, a plurality thereof may be the same or different from each other]

[Chem. 8]

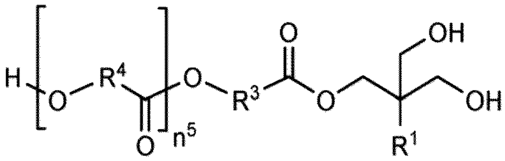

(A2-3)

[in Formula (A2-3), $R^1$, $R^3$, and $R^4$ respectively have the same meanings as defined above,
$n^5$ represents an integer of 0 or more, and
in a case where $R^4$ is present in plurality, a plurality thereof may be the same or different from each other]

[Chem. 9]

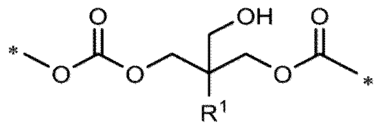

(a1-1)

[in Formula (a1-1), $R^1$ has the same meaning as defined above, and * represents a bonding site]

[Chem. 10]

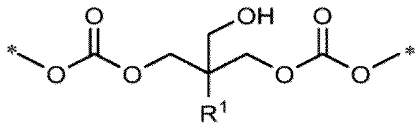

(a1-2)

[in Formula (a1-2), $R^1$ has the same meaning as defined above, and * represents a bonding site]

[Chem. 11]

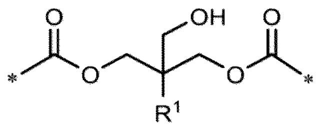

(a1-3)

[in Formula (a1-3), $R^1$ has the same meaning as defined above, and * represents a bonding site]

[Chem. 12]

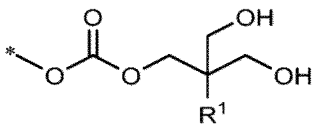

(a2-2)

[in Formula (a2-2), $R^1$ has the same meaning as defined above, and * represents a bonding site]

[Chem. 13]

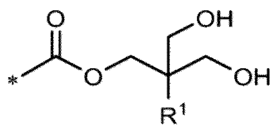

(a2-3)

[in Formula (a2-3), $R^1$ has the same meaning as defined above, and * represents a bonding site].

[4] The composition according to [2] or [3], further comprising:

a polycarbonate polyol represented by Formula (A-3); and
a polycarbonate diol represented by Formula (A-4),

[Chem. 14]

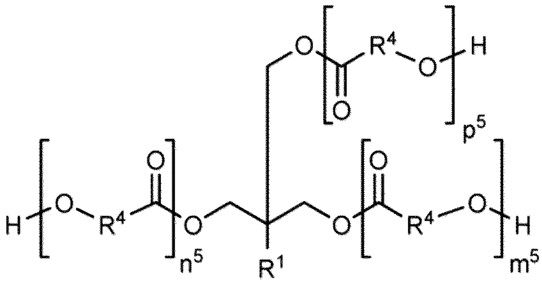

(A-3)

[in Formula (A-3), $R^1$ and $R^4$ respectively have the same meanings as defined above, $n^5$, $m^5$, and $p^5$ each represent an integer of 1 or more, and a plurality of $R^4$'s may be the same or different from each other]

[Chem. 15]

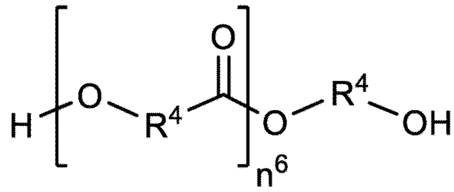

(A-4)

[in Formula (A-4), $R^4$ has the same meaning as defined above, and $n^6$ represents an integer of 1 or more, and a plurality of $R^4$'s may be the same or different from each other].

[5] The composition according to any one of [2] to [4],

wherein in a case where a total number of moles of a group represented by Formula (a1-1), which is contained in the composition, is denoted as $C_{A1-1}$, and a total number of moles of a group represented by Formula (I), which is contained in the composition, is denoted as $C_T$, a molar ratio ($C_{A1-1}/C_T$) is 0.02 to 0.99,

[Chem. 16]

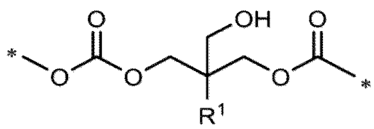

(a1-1)

[in Formula (a1-1), $R^1$ has the same meaning as defined above, and * represents a bonding site]

[Chem. 17]

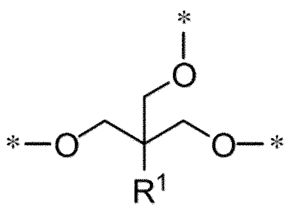

(I)

[in Formula (I), $R^1$ has the same meaning as defined above, and * represents a bonding site].

[6] The composition according to any one of [2] to [5],

wherein in a case where a total number of moles of a group represented by Formula (a1-2), which is contained in the composition, is denoted as $C_{A1-2}$, and a total number of moles of a group represented by Formula (a1-3), which is contained in the composition, is denoted as $C_{A1-3}$,
a molar ratio ($C_{A1-2}/C_T$) is 0.001 to 0.99,

[Chem. 18]

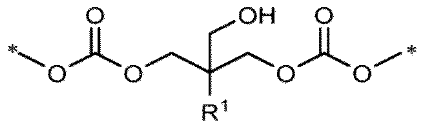

(a1-2)

[in Formula (a1-2), $R^1$ has the same meaning as defined above, and * represents a bonding site]

[Chem. 19]

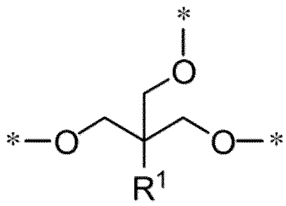

(I)

[in Formula (I), $R^1$ has the same meaning as defined above, and * represents a bonding site].

[7] The composition according to any one of [2] to [6],

wherein in a case where a total number of moles of a group represented by Formula (a1-3), which is contained in the composition, is denoted as $C_{A1-3}$, and a total number of moles of a group represented by Formula (I), which is contained in the composition, is denoted as $C_T$,
a molar ratio ($C_{A1-3}/C_T$) is 0.005 to 0.34,

[Chem. 20]

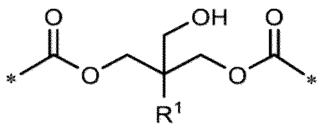

(a1-3)

[in Formula (a1-3), $R^1$ has the same meaning as defined above, and * represents a bonding site]

[Chem. 21]

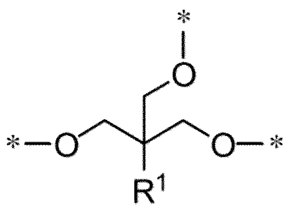

(I)

[in Formula (I), $R^1$ has the same meaning as defined above, and * represents a bonding site].

[8] The composition according to any one of [2] to [7],

wherein in a case where a total number of moles of a group represented by Formula (a2-3), which is contained in the composition, is denoted as $C_{A2-3}$, and a total number of moles of a group represented by Formula (I), which is

contained in the composition, is denoted as $C_T$,
a molar ratio ($C_{A2-3}/C_T$) is 0.001 to 0.234,

[Chem. 22]

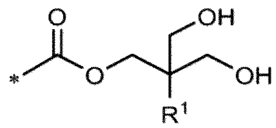

(a2-3)

[in Formula (a2-3), $R^1$ has the same meaning as defined above, and * represents a bonding site]

[Chem. 23]

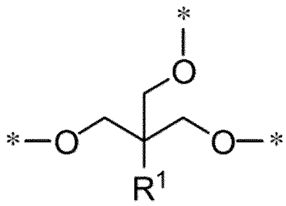

(I)

[in Formula (I), $R^1$ has the same meaning as defined above, and * represents a bonding site].

[9] The composition according to any one of [2] to [8],

wherein in a case where a total number of moles of a group represented by Formula (d), which is contained in the composition, is denoted as $C_D$, a total number of moles of a group represented by Formula (a2-2), which is contained in the composition, is denoted as $C_{A2-2}$, and a total number of moles of a group represented by Formula (a2-3), which is contained in the composition, is denoted as $C_{A2-3}$,
a molar ratio ($C_{A2-3}/(C_{A2-2} + C_{A2-3} + C_D) \times 100$) is 0.010 to 10.20,

[Chem. 24]

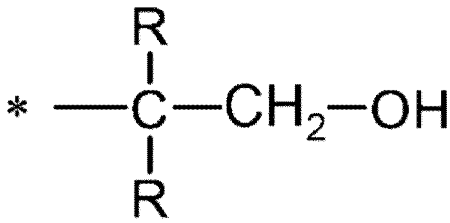

(d)

[in Formula (d), R is a hydrogen atom or an alkanediyl group, and * represents a bonding site, and R's may be the same or different from each other]

[Chem. 25]

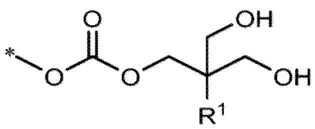

(a2-2)

[in Formula (a2-2), $R^1$ has the same meaning as defined above, and * represents a bonding site]

[Chem. 26]

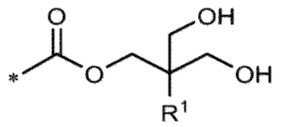

(a2-3)

[in Formula (a2-3), $R^1$ has the same meaning as defined above, and * represents a bonding site].

[10] The composition according to any one of [2] to [9],

wherein in a case where a total number of moles of a group represented by Formula (d), which is contained in the composition, is denoted as $C_D$, a total number of moles of a group represented by Formula (a2-2), which is contained in the composition, is denoted as $C_{A2-2}$, and a total number of moles of a group represented by Formula (a2-3), which is contained in the composition, is denoted as $C_{A2-3}$,
a molar ratio $((C_{A2-2} + C_{A2-3})/(C_{A2-2} + C_{A2-3} + C_D) \times 100)$ is 0.100 to 12.00,

[Chem. 27]

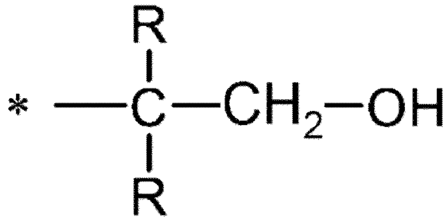

(d)

[in Formula (d), R is a hydrogen atom or an alkanediyl group, and * represents a bonding site, and R's may be the same or different from each other]

[Chem. 28]

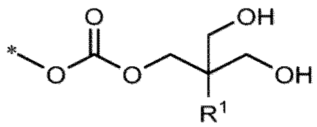

(a2-2)

[in Formula (a2-2), $R^1$ has the same meaning as defined above, and * represents a bonding site]

[Chem. 29]

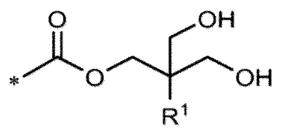

(a2-3)

[in Formula (a2-3), $R^1$ has the same meaning as defined above, and * represents a bonding site].

[11] The composition according to any one of [2] to [10],

wherein in a case where a total number of moles of a group represented by Formula (f'), which is contained in the composition, is denoted as $C_F$, and a total number of moles of a group represented by Formula (I), which is contained in the composition, is denoted as $C_T$,
a molar ratio $(C_F/C_T \times 100)$ is 1.70 to 45.0,

[Chem. 30]

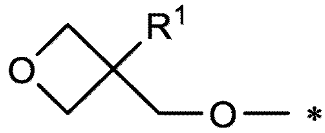

(f')

[in Formula (f), $R^1$ has the same meaning as defined above, and * represents a bonding site]

[Chem. 31]

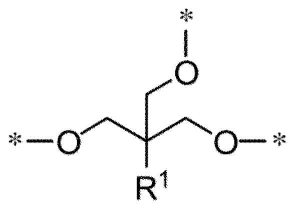

(I)

[in Formula (I), $R^1$ has the same meaning as defined above, and * represents a bonding site].

[12] The composition according to any one of [2] to [11],

wherein $R^3$ is an alkanediyl group, and
$R^4$ is an alkanediyl group or * 1-O-$R^c$-*2.

[13] The composition according to any one of [2] to [12],

wherein the composition contains a reaction product of a polycarbonate polyol (B) and a polyester polyol (C), and the polyester polyol (C) includes a polyester polyol (β) which is a ring-opening addition polymer of a cyclic ester compound, where the ring-opening addition polymer is obtained by using a diol as an initiator, and/or a polyester polyol (β') which is a ring-opening addition polymer of a cyclic ester compound, where the ring-opening addition polymer is obtained by using, as an initiator, a polyhydric alcohol having three or more hydroxyl groups as functional groups.

[14] A method for producing the compound according to [1], the method comprising:

a reaction step of reacting a polycarbonate polyol with a polyester polyol in a mixed liquid containing the polycarbonate polyol, the polyester polyol, and a transesterification catalyst to obtain the compound,
wherein at least one of the polycarbonate polyol or the polyester polyol contains a group represented by Formula (I), or
the mixed liquid further contains a polyhydric alcohol represented by Formula (e),

[Chem. 32]

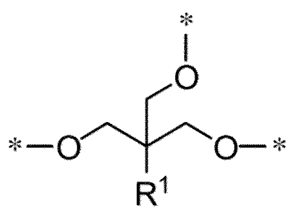

(I)

[in Formula (I), $R^1$ has the same meaning as defined above, and * represents a bonding site]

[Chem. 33]

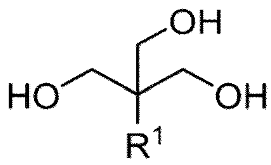

(e)

[in Formula (e), $R^1$ has the same meaning as defined above].

[15] The method for producing the same according to [14], wherein a content of the transesterification catalyst in the mixed liquid is 0.001 to 0.050 parts by mass with respect to 100 parts by mass of a total amount of a polyol component in the mixed liquid.

[16] The method for producing the same according to [14] or [15], wherein the transesterification catalyst includes lithium acetylacetonate.

[17] A urethane resin,

wherein the urethane resin is a polycondensate of a polyol component and a polyisocyanate component, or a crosslinked product thereof, and
the polyol component includes the compound according to [1].

[18] The urethane resin according to [17],

wherein the polyol component includes a polycarbonate polyol represented by Formula (A1-2) and a polyester polyol represented by Formula (A1-3), and
in a case where a total number of moles of a group represented by Formula (a1-1), which is contained in the polyol component, is denoted as $C_{A1-1}$, a total number of moles of a group represented by Formula (a1-2), which is contained in the polyol component, is denoted as $C_{A1-2}$, and a total number of moles of a group represented by Formula (a1-3), which is contained in the polyol component, is denoted as $C_{A1-3}$,
a molar ratio ($C_{A1-1}/(C_{A1-1} + C_{A1-2} + C_{A1-3}) \times 100$) is 5.3 to 99,

[Chem. 34]

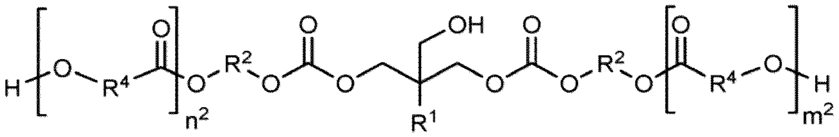

(A1-2)

[in Formula (A1-2), $R^1$, $R^2$, and $R^4$ respectively have the same meanings as defined above, and nand $m^2$ each represent an integer of 0 or more,
a plurality of $R^2$'s may be the same or different from each other, and
in a case where $R^4$ is present in plurality, a plurality thereof may be the same or different from each other]

[Chem. 35]

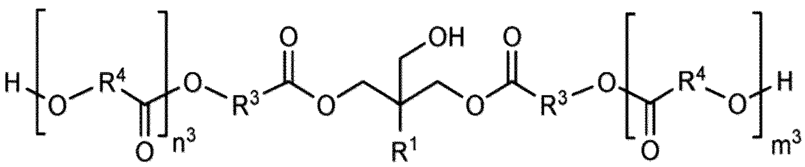

(A1-3)

[in Formula (A1-3), $R^1$, $R^3$, and $R^4$ respectively have the same meanings as defined above,
$n^3$ and $m^3$ each represent an integer of 0 or more,
a plurality of $R^3$'s may be the same or different from each other, and
in a case where $R^4$ is present in plurality, a plurality thereof may be the same or different from each other]

[Chem. 36]

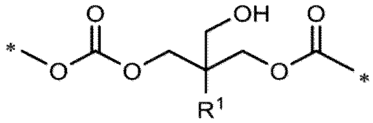

(a1-1)

[in Formula (a1-1), $R^1$ has the same meaning as defined above, and * represents a bonding site]

[Chem. 37]

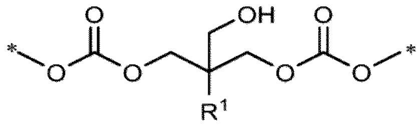

(a1-2)

[in Formula (a1-2), $R^1$ has the same meaning as defined above, and * represents a bonding site]

[Chem. 38]

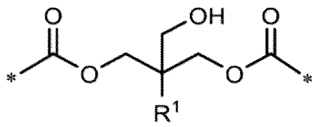

(a1-3)

[in Formula (a1-3), $R^1$ has the same meaning as defined above, and * represents a bonding site].

[19] The urethane resin according to [17] or [18],

wherein the polyol component further includes a polycarbonate polyol represented by Formula (A2-2) and a polyester polyol represented by Formula (A2-3), and

in a case where a total number of moles of a group represented by Formula (a1-1), which is contained in the polyol component, is denoted as $C_{A1-1}$, a total number of moles of a group represented by Formula (a1-2), which is contained in the polyol component, is denoted as $C_{A1-2}$, a total number of moles of a group represented by Formula (a1-3), which is contained in the polyol component, is denoted as $C_{A1-3}$, a total number of moles of a group represented by Formula (a2-2) contained in the polyol component is denoted as $C_{A2-2}$, and a total number of moles of a group represented by Formula (a2-3) contained in the polyol component is denoted as $C_{A2-3}$, a molar ratio $((C_{A2-2} + C_{A2-3})/(C_{A1-1} + C_{A1-2} + C_{A1-3}))$ is 0.01 to 0.750,

[Chem. 39]

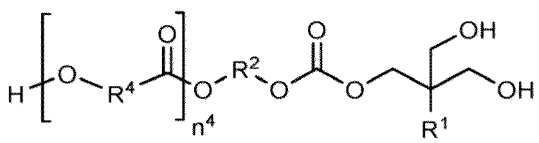

(A2-2)

[in Formula (A2-2), $R^1$, $R^2$, and $R^4$ respectively have the same meanings as defined above,
$n^4$ represents an integer of 0 or more, and
in a case where $R^4$ is present in plurality, a plurality thereof may be the same or different from each other]

[Chem. 40]

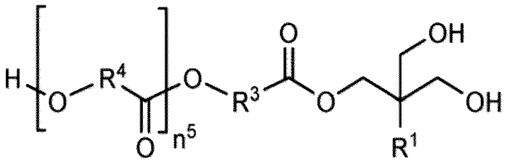 (A2-3)

[in Formula (A2-3), $R^1$, $R^3$, and $R^4$ respectively have the same meanings as defined above, $n^5$ represents an integer of 0 or more, and in a case where $R^4$ is present in plurality, a plurality thereof may be the same or different from each other]

[Chem. 41]

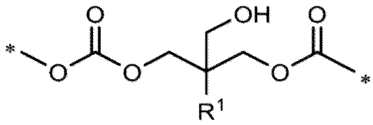 (a1-1)

[in Formula (a1-1), $R^1$ has the same meaning as defined above, and * represents a bonding site]

[Chem. 42]

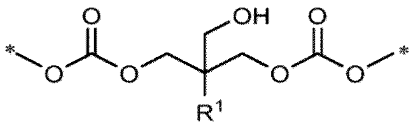 (a1-2)

[in Formula (a1-2), $R^1$ has the same meaning as defined above, and * represents a bonding site]

[Chem. 43]

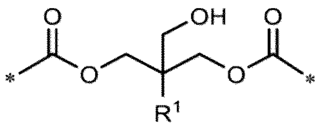 (a1-3)

[in Formula (a1-3), $R^1$ has the same meaning as defined above, and * represents a bonding site]

[Chem. 44]

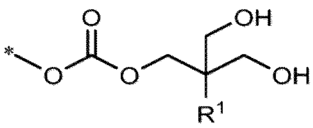 (a2-2)

[in Formula (a2-2), $R^1$ has the same meaning as defined above, and * represents a bonding site]

[Chem. 45]

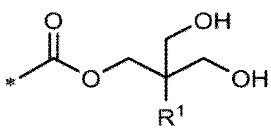 (a2-3)

[in Formula (a2-3), $R^1$ has the same meaning as defined above, and * represents a bonding site].

[20] The urethane resin according to any one of [17] to [19], wherein the polyol component further includes a polycarbonate polyol represented by Formula (A-3) and a polycarbonate diol represented by Formula (A-4),

[Chem. 46]

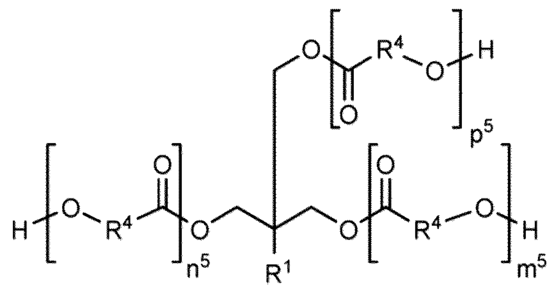

(A-3)

[in Formula (A-3), $R^1$ and $R^4$ respectively have the same meanings as defined above,
$n^5$, $m^5$, and $p^5$ each represent an integer of 1 or more, and
a plurality of $R^4$'s may be the same or different from each other]

[Chem. 47]

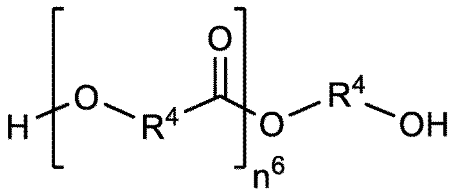

(A-4)

[in Formula (A-4), $R^4$ has the same meaning as defined above, and $n^6$ represents an integer of 1 or more, and
a plurality of $R^4$'s may be the same or different from each other].

[21] The urethane resin according to any one of [17] to [20],

wherein in a case where a total number of moles of a group represented by Formula (a1-1), which is contained in the polyol component, is denoted as $C_{A1-1}$, and a total number of moles of a group represented by Formula (I) contained in the polyol component is denoted as $C_T$,
a molar ratio ($C_{A1-1}/C_T$) is 0.02 to 0.99,

[Chem. 48]

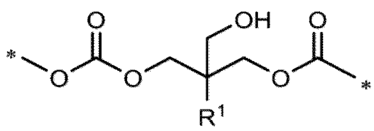

(a1-1)

[in Formula (a1-1), $R^1$ has the same meaning as defined above, and * represents a bonding site]

[Chem. 49]

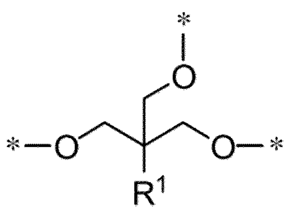

(I)

[in Formula (I), $R^1$ has the same meaning as defined above, and * represents a bonding site].

[22] The urethane resin according to any one of [17] to [21],

wherein in a case where a total number of moles of a group represented by Formula (a1-2), which is contained in the polyol component, is denoted as $C_{A1-2}$, and a total number of moles of a group represented by Formula (I) contained in the polyol component is denoted as $C_T$,
a molar ratio ($C_{A1-2}/C_T$) is 0.001 to 0.99,

[Chem. 50]

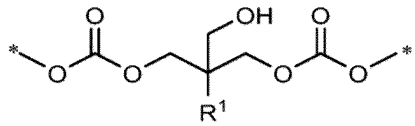
(a1-2)

[in Formula (a1-2), $R^1$ has the same meaning as defined above, and * represents a bonding site]

[Chem. 51]

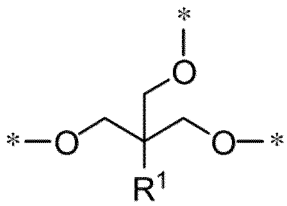
(I)

[in Formula (I), $R^1$ has the same meaning as defined above, and * represents a bonding site].

[23] The urethane resin according to any one of [17] to [22],

wherein in a case where a total number of moles of a group represented by Formula (a1-3), which is contained in the polyol component, is denoted as $C_{A1-3}$, and a total number of moles of a group represented by Formula (I) contained in the polyol component is denoted as $C_T$,
a molar ratio ($C_{A1-3}/C_T$) is 0.005 to 0.340,

[Chem. 52]

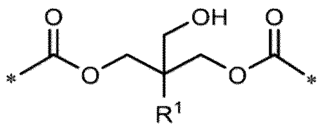
(a1-3)

[in Formula (a1-3), $R^1$ has the same meaning as defined above, and * represents a bonding site]

[Chem. 53]

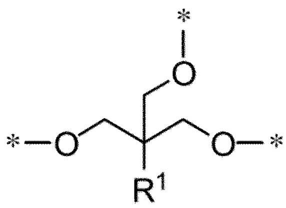
(I)

[in Formula (I), $R^1$ has the same meaning as defined above, and * represents a bonding site].

[24] The urethane resin according to any one of [17] to [23],

wherein in a case where a total number of moles of a group represented by Formula (a2-3) contained in the polyol component is denoted as $C_{A2-3}$, and a total number of moles of a group represented by Formula (I) contained in

the polyol component is denoted as $C_T$,
a molar ratio ($C_{A2-3}/C_T$) is 0.001 to 0.234,

[Chem. 54]

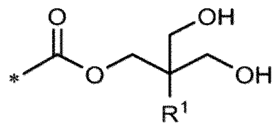

(a2-3)

[in Formula (a2-3), $R^1$ has the same meaning as defined above, and * represents a bonding site]

[Chem. 55]

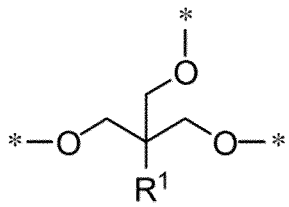

(I)

[in Formula (I), $R^1$ has the same meaning as defined above, and * represents a bonding site].

[25] The urethane resin according to any one of [17] to [24],

wherein in a case where a total number of moles of a group represented by Formula (d) contained in the polyol component is denoted as $C_D$, a total number of moles of a group represented by Formula (a2-2) contained in the polyol component is denoted as $C_{A2-2}$, and a total number of moles of a group represented by Formula (a2-3) contained in the polyol component is denoted as $C_{A2-3}$,
a molar ratio ($C_{A2-3}/(C_{A2-2} + C_{A2-3} + C_D) \times 100$) is 0.010 to 10.20,

[Chem. 56]

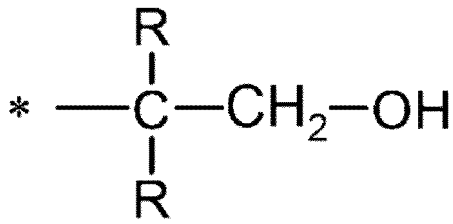

(d)

[in Formula (d), R is a hydrogen atom or an alkanediyl group, and * represents a bonding site, and R's may be the same or different from each other]

[Chem. 57]

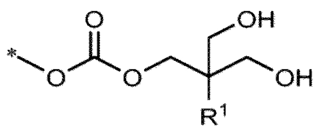

(a2-2)

[in Formula (a2-2), $R^1$ has the same meaning as defined above, and * represents a bonding site]

[Chem. 58]

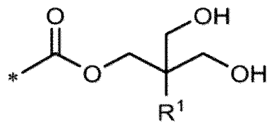

(a2-3)

[in Formula (a2-3), $R^1$ has the same meaning as defined above, and * represents a bonding site].

[26] The urethane resin according to any one of [17] to [25],

wherein in a case where a total number of moles of a group represented by Formula (d) contained in the polyol component is denoted as $C_D$, a total number of moles of a group represented by Formula (a2-2) contained in the polyol component is denoted as $C_{A2-2}$, and a total number of moles of a group represented by Formula (a2-3) contained in the polyol component is denoted as $C_{A2-3}$,
a molar ratio $((C_{A2-2} + C_{A2-3})/(C_{A2-2} + C_{A2-3} + C_D) \times 100)$ is 0.100 to 12.00,

[Chem. 59]

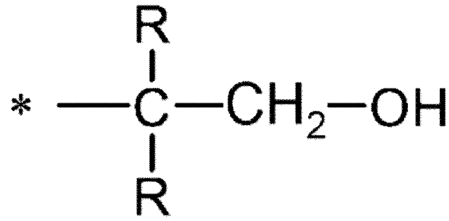

(d)

[in Formula (d), R is a hydrogen atom or an alkanediyl group, and * represents a bonding site, and R's may be the same or different from each other]

[Chem. 60]

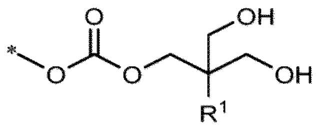

(a2-2)

[in Formula (a2-2), $R^1$ has the same meaning as defined above, and * represents a bonding site]

[Chem. 61]

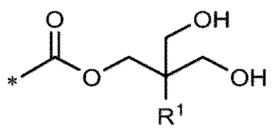

(a2-3)

[in Formula (a2-3), $R^1$ has the same meaning as defined above, and * represents a bonding site].

[27] The urethane resin according to any one of [17] to [26],

wherein in a case where a total number of moles of a group represented by Formula (f') contained in the polyol component is denoted as $C_F$, and a total number of moles of a group represented by Formula (I) contained in the polyol component is denoted as $C_T$,
a molar ratio $(C_F/C_T \times 100)$ is 1.70 to 45.0,

[Chem. 62]

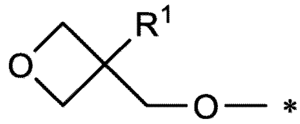 (f')

[in Formula (f), $R^1$ has the same meaning as defined above, and * represents a bonding site]

[Chem. 63]

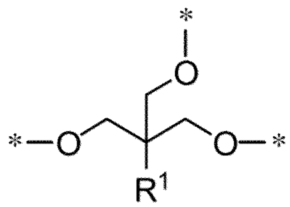 (I)

[in Formula (I), $R^1$ has the same meaning as defined above, and * represents a bonding site].

[28] The urethane resin according to any one of [17] to [28],

wherein $R^3$ is an alkanediyl group, and
$R^4$ is an alkanediyl group or * 1-O-$R^c$-*2.

[29] The urethane resin according to any one of [17] to [29],

wherein the polyol component is a reaction product of a polycarbonate polyol (B) and a polyester polyol (C), and the polyester polyol (C) includes a polyester polyol (β) which is a ring-opening addition polymer of a cyclic ester compound, where the ring-opening addition polymer is obtained by using a diol as an initiator, and/or a polyester polyol (β') which is a ring-opening addition polymer of a cyclic ester compound, where the ring-opening addition polymer is obtained by using, as an initiator, a polyhydric alcohol having three or more hydroxyl groups as functional groups.

[30] The urethane resin according to any one of [17] to [29],
wherein the polyol component further includes a polyol having an acidic group.
[31] An aqueous urethane resin dispersion comprising:

an aqueous medium; and
the urethane resin according to [30] which is dispersed in the aqueous medium, or a neutralized product thereof.

[32] A coating agent comprising:
the urethane resin according to any one of [17] to [30].

## Advantageous Effects of Invention

According to the present invention, it is possible to provide a novel compound useful as a raw material for a urethane resin and the like, and a method for producing the same, as well as a urethane resin made from the compound as a raw material. In addition, according to the present invention, it is possible to provide a composition containing the compound, and a urethane resin made from the composition as a raw material. In addition, according to the present invention, it is possible to provide an aqueous urethane resin dispersion containing the urethane resin having an acidic group.

## Brief Description of Drawings

FIG. 1 is a view showing a $^1$H-NMR spectrum of a composition containing a polycarbonate polyol obtained in Example 5.

FIG. 2 is an enlarged view of a range from 3.300 ppm or more and 3.800 ppm or less in the $^1$H-NMR spectrum of the composition containing the polycarbonate polyol obtained in Example 5.

## Description of Embodiments

Hereinafter, embodiments according to the present invention will be described in detail. It is noted that in the present specification, a numerical value range expressed using "to" indicates a range including numerical values before and after "to" as a minimum value and a maximum value. The minimum value or maximum value of a numerical value range indicated using "to" can be combined, in any desired manner, with the maximum value or minimum value of another numerical value range indicated using "to". In addition, the upper limit value and the lower limit value, which are denoted individually, can be also combined in any desired manner.

<Compound (A1-1)>

A compound according to the present embodiment is a compound represented by Formula (A1-1) (hereinafter also referred to as a "compound (A1-1)").

[Chem. 64]

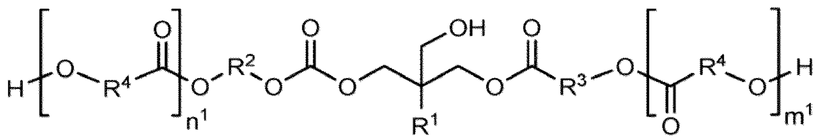

(A1-1)

[In Formula (A1-1), $R^1$ represents a hydrogen atom, an alkyl group, or a hydroxyalkyl group, $R^2$ represents an alkanediyl group, $R^3$ represents an alkanediyl group or * 1-$R^a$-C(=O)-O-$R^b$-*2, $R^4$ represents an alkanediyl group, *1-O-$R^c$-*2, or * 1-$R^a$-C(=O)-O-$R^b$-*2, $R^a$, $R^b$, and $R^c$ each independently represent an alkanediyl group, *1 represents a site for bonding to a carbonyl group, *2 represents a site for bonding to an oxygen atom, and $n^1$ and $m^1$ each represent an integer of 0 or more. In a case where $R^4$ is present in plurality, a plurality thereof may be the same or different from each other.]

The alkyl group and the hydroxyalkyl group represented by $R^1$ may be linear or branched. The alkyl group and the hydroxyalkyl group may have, for example, 1 to 6 carbon atoms, 2 to 5 carbon atoms, or 3 to 4 carbon atoms. Specific examples of the alkyl group and the hydroxyalkyl group include a methyl group, an ethyl group, a propyl group, an isopropyl group, a butyl group, a pentyl group, a hexyl group, a hydroxymethyl group, a hydroxyethyl group, a hydroxypropyl group, and a hydroxybutyl group. $R^1$ is preferably an alkyl group or a hydroxyalkyl group, and more preferably an alkyl group or hydroxyalkyl group having 1 to 2 carbon atoms.

The alkanediyl group represented by $R^2$ and $R^3$ may be linear or branched. The alkanediyl group represented by $R^2$ and the alkanediyl group represented by $R^3$ may be the same or may be different from each other.

The alkanediyl group represented by $R^2$ and $R^3$ may have, for example, 2 to 10 carbon atoms. Specific examples of the alkanediyl group include an ethanediyl group, a 1,2-propanediyl group, a 1,3-propanediyl group, a 1,2-butanediyl group, a 1,3-butanediyl group, a 1,4-butanediyl group, a 1,5-pentanediyl group, a 2,2-dimethyl-1,3-propanediyl group, a 1,6-hexanediyl group, a 3-methyl-1,5-pentanediyl group, a 1,8-octanediyl group, a 2-ethyl-1,6-hexanediyl group, a 1,9-nonanediyl group, a 2-methyloctane-1,8-diyl group, and a 2-butyl-2-ethyl-1,3-propanediyl group.

The alkanediyl group represented by $R^4$ may be linear or branched. In a case where there are two or more kinds of alkanediyl groups represented by $R^4$, all of them may be a linear alkanediyl group or a branched alkanediyl group, or a part thereof may be a linear alkanediyl group and the other part thereof may be a branched alkanediyl group.

Examples of the number of carbon atoms of the alkanediyl group represented by $R^4$ include the same ones as those of the alkanediyl groups described in the description of $R^2$ and $R^3$. Among these, a 1,4-butanediyl group, a 1,5-pentanediyl group, a 1,6-hexanediyl group, a 3-methyl-1,5-pentanediyl group, a 2-ethyl-1,6-hexanediyl group, a 1,9-nonanediyl group, a 2-methyloctane-1,8-diyl group, or the like is preferable.

The alkanediyl group represented by $R^a$, $R^b$, and $R^c$ may be the same as the alkanediyl group described above. The alkanediyl group represented by $R^a$, $R^b$, and $R^c$ may have, for example, 2 to 10 carbon atoms. In a case where there are two or more kinds of alkanediyl groups represented by $R^a$, all of them may be a linear alkanediyl group or a branched alkanediyl group, or a part thereof may be a linear alkanediyl group and the other part thereof may be a branched alkanediyl group. In a case where there are two or more kinds of alkanediyl groups represented by $R^b$, all of them may be a linear alkanediyl group or a branched alkanediyl group, or a part thereof may be a linear alkanediyl group and the other part

thereof may be a branched alkanediyl group. In a case where there are two or more kinds of alkanediyl groups represented by $R^c$, all of them may be a linear alkanediyl group or a branched alkanediyl group, or a part thereof may be a linear alkanediyl group and the other part thereof may be a branched alkanediyl group.

In a case where the compound (A1-1) contains two or more kinds of alkanediyl groups as $R^2$, $R^3$, $R^4$, $R^a$, $R^b$, or $R^c$, all of them may be a linear alkanediyl group or a branched alkanediyl group, or a part thereof may be a linear alkanediyl group and the other part thereof may be a branched alkanediyl group.

$n^1$ and $m^1$ may each be 0 to 65, or may be 1 to 60, or 2 to 50.

The number average molecular weight of the compound (A1-1) may be, for example, 200 to 6,000 g/mol. Here, the number average molecular weight is the number average molecular weight in terms of a difunctional polyoxypropylene polyol, which is measured using gel permeation chromatography (GPC).

The hydroxyl group value of the compound (A1-1) may be, for example, 30 to 800 mgKOH/g. Here, the hydroxyl group value means the number of milligrams (mg) of potassium hydroxide equivalent to the hydroxyl group in 1 g of the compound (A1-1), and it is measured in accordance with JIS K1557-1.

The state of the compound (A1-1) is not particularly limited, and it may be a solid at 25°C or may be a liquid at 25°C. The state of the compound (A1-1) can be changed by the kind (the number of carbon atoms, the presence or absence of branching, and the like) of the alkanediyl group contained as $R^2$, $R^3$, $R^4$, $R^a$, $R^b$, or $R^c$ in the compound (A1-1), as well as the hydroxyl group value and the like of the compound (A1-1). For example, in a case where the total number of moles of branched alkanediyl groups in the compound (A1-1) with respect to the total number of moles of alkanediyl groups contained in the compound (A1-1) as $R^2$, $R^3$, $R^4$, $R^a$, $R^b$, or $R^c$ is 0.2 to 1.0, and in a case where the compound (A1-1) has a high hydroxyl group value, the compound (A1-1) tends to be a liquid at 25°C.

In the present embodiment, from the viewpoint that a urethane resin having excellent durability such as heat resistance or moist heat resistance/hot water resistance is likely to be formed in a case where the compound (A1-1) is used as a raw material for a urethane resin, it is more preferable that $R^3$ contained in the compound (A1-1) is an alkanediyl group and $R^4$ is an alkanediyl group or * 1-O-$R^c$-*2.

In addition, in the present embodiment, from the viewpoint that a urethane resin having excellent 100% modulus and excellent heat resistance is likely to be formed in a case where the compound (A1-1) is used as a raw material for a urethane resin, a ratio of the total number of moles of the alkanediyl groups contained as $R^2$ and *1-O-$R^c$-*2 contained as $R^4$ to the total number of moles of the alkanediyl groups contained as $R^2$, $R^3$, and $R^4$, *1-O-$R^c$-*2, and *1-$R^a$-C(=O)-O-$R^b$-*2 in the compound (A1-1) is preferably 0.10 or more (for example, 0.10 to 0.90), more preferably 0.20 or more (for example, 0.20 to 0.80), still more preferably 0.30 or more (for example, 0.30 to 0.70), and particularly preferably 0.40 or more (for example, 0.40 to 0.60).

The compound (A1-1) described above may be, for example, a reaction product of a polycarbonate polyol (B) and a polyester polyol (C). In addition, the compound (A1-1) may be a reaction product of a polycarbonate polyol (B), a polyester polyol (C), and a diol (D) and/or a polyhydric alcohol (E) represented by Formula (e). The compound (A1-1) is a molecule in which, among oxy groups (-O-) in a group represented by Formula (I), one forms a carbonate bond derived from the polycarbonate polyol (B), another forms an ester bond derived from the polyester polyol (C), and the other is bonded to a hydrogen atom to form a hydroxy group.

[Chem. 65]

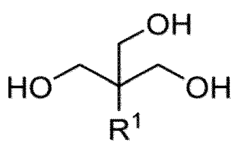

(e)

[In Formula (e), $R^1$ has the same meaning as defined above.]

[Chem. 66]

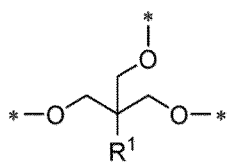

(I)

[In Formula (I), $R^1$ has the same meaning as defined above.]

The polycarbonate polyol (B) may be any polycarbonate polyol having two or more hydroxyl groups as functional groups. The polycarbonate polyol (B) may be a polycarbonate polyol (B-1) having two hydroxyl groups as functional groups (that is, a polycarbonate diol), may be a polycarbonate polyol (B-2) having more than two hydroxyl groups as functional groups, or may be a combination of two or more selected from the polycarbonate polyol (B-1) and the polycarbonate polyol (B-2).

Examples of the polycarbonate polyol (B-1) include those obtained from a reaction between carbonates and a diol.

Examples of the carbonates that can be used in a reaction to obtain the polycarbonate polyol (B-1) include dialkyl carbonates such as dimethyl carbonate and diethyl carbonate; alkylene carbonates such as ethylene carbonate and propylene carbonate; diaryl carbonates such as diphenyl carbonate, dinaphthyl carbonate, dianthryl carbonate, diphenanthryl carbonate, diindanyl carbonate, and tetrahydronaphthyl carbonate; and combinations of any two or more of these.

Examples of the diol that can be used in a reaction to obtain the polycarbonate polyol (B-1) include ethylene glycol, 1,2-propanediol, 1,3-propanediol, 1,2-butanediol, 1,3-butanediol, 1,4-butanediol, 1,5-pentanediol, 2,2-dimethyl-1,3-propanediol, 1,6-hexanediol, 3-methyl-1,5-pentanediol, 3,3-dimethylolheptane, diethylene glycol, and dipropylene glycol, neopentyl glycol, cyclohexane-1,4-diol, cyclohexane-1,4-dimethanol, a diol of dimer acid, an ethylene oxide or propylene oxide adduct of bisphenol A, bis(β-hydroxyethyl)benzene, xylylene glycol, 1,8-octanediol, 2-ethyl-1,6-hexanediol, 1,9-nonanediol, 2-methyloctane-1,8-diol, and 2-butyl-2-ethyl-1,3-propanediol. These may be used alone, or two or more kinds thereof may be used in combination.

Examples of the polycarbonate polyol (B-2) include those obtained from a reaction between carbonates, a diol, and a polyhydric alcohol having three or more hydroxyl groups as functional groups.

Examples of the carbonates that can be used in a reaction to obtain the polycarbonate polyol (B-2) include the same ones as those described in the description of the polycarbonate polyol (B-1). Among these, dimethyl carbonate, diethyl carbonate, or ethylene carbonate is preferable.

Examples of the diol that can be used in a reaction to obtain the polycarbonate polyol (B-2) include the same ones as the diols described in the description of the polycarbonate polyol (B-1). Among these, 1,4-butanediol, 1,5-pentanediol, 1,6-hexanediol, 1,9-nonanediol, 3-methyl-1,5-pentanediol, or 2-methyl-1,8-octanediol is preferable.

Examples of the polyhydric alcohol having three or more hydroxyl groups as functional groups, which can be used in a reaction to obtain the polycarbonate polyol (B-2), include trimethylolpropane, trimethylolethane, glycerin, pentaerythritol, sorbitol, and combinations of any two or more of these.

The polyester polyol (C) may be any polyester polyol having two or more hydroxyl groups as functional groups. The polyester polyol (C) may be a polyester polyol (C-1) having two hydroxyl groups as functional groups (that is, a polyester diol), may be a polyester polyol (C-2) having more than two hydroxyl groups as functional groups, or may be a combination of two or more selected from the polyester polyol (C-1) and the polyester polyol (C-2).

Examples of the polyester polyol (C-1) include the following polyester polyols (α) and (β), and combinations of any two or more of these.

(α) A polyester polyol (polyester polyol (α)) obtained from a diol (C-1-1) and a dicarboxylic acid and/or anhydride thereof (C-1-2)

(β) A polyester polyol (polyester polyol (β)) obtained by subjecting a cyclic ester compound (C-1-4) such as a lactone to a ring-opening addition polymerization using a diol (C-1-1) as an initiator

The polyester polyol (β) can be said to be a ring-opening addition polymer of a cyclic ester compound, where the ring-opening addition polymer is obtained by using a diol as an initiator.

Examples of the diol (C-1-1) include the same ones as the diols described in the description of the polycarbonate polyol (B-1). Among these, 1,4-butanediol, 1,5-pentanediol, 1,6-hexanediol, 1,9-nonanediol, 3-methyl-1,5-pentanediol, or 2-methyl-1,8-octanediol is preferable.

Examples of the dicarboxylic acid and/or anhydride thereof (C-1-2) include phthalic acid, isophthalic acid, terephthalic acid, tetrahydrophthalic acid, hexahydrophthalic acid, cyclohexanedicarboxylic acid, maleic acid, fumaric acid, oxalic acid, malonic acid, succinic acid, glutaric acid, adipic acid, pimelic acid, suberic acid, sebacic acid, dodecanedioic acid, hydrogenated dimer fatty acid or the like, tartaric acid, and anhydrides thereof, as well as combinations of any two or more of these.

Examples of the cyclic ester compound (C-1-4) include β-propiolactone, β-butyrolactone, γ-butyrolactone, β-valerolactone, γ-valerolactone, δ-valerolactone, α-caprolactone, β-caprolactone, γ-caprolactone, δ-caprolactone, ε-caprolactone, α-methyl-ε-caprolactone, β-methyl-ε-caprolactone, 4-methylcaprolactone, γ-caprylolactone, ε-caprylolactone, ε-palmitolactone, and combinations of any two or more of these. Among these, a ring-opening addition polymer of ε-caprolactone, which is obtained by using trimethylolpropane as an initiator, is preferable in terms of stability during polymerization and economic efficiency.

Examples of the polyester polyol (C-2) include the following polyester polyols (α') and (β'), and combinations of any two or more of these.

(α') A polyester polyol (polyester polyol (α')) obtained from a diol (C-2-1), a dicarboxylic acid and/or anhydride thereof (C-2-2), and a polyhydric alcohol (C-2-3) having three or more hydroxyl groups as functional groups

(β') A polyester polyol (polyester polyol (β')) obtained by subjecting a cyclic ester compound (C-2-4) such as a lactone to a ring-opening addition polymerization by using, as an initiator, a polyhydric alcohol (C-2-3) having three or more hydroxyl groups as functional groups

The polyester polyol (β') can be said to be a ring-opening addition polymer of a cyclic ester compound, where the ring-opening addition polymer is obtained by using, as an initiator, a polyhydric alcohol having three or more hydroxyl groups as functional groups.

Examples of the diol (C-2-1) include the same ones as the diols described in the description of the polycarbonate polyol (B-1).

Examples of the dicarboxylic acid and/or anhydride thereof (C-2-2) include the same ones as those described in the description of dicarboxylic acid and/or its anhydride (C-1-2).

Examples of the polyhydric alcohol (C-2-3) having three or more hydroxyl groups as functional groups include trimethylolpropane, trimethylolethane, glycerin, pentaerythritol, sorbitol, and combinations of any two or more of these.

Examples of the cyclic ester compound (C-2-4) include the same ones as those described in the description of the cyclic ester compound (C-1-4).

In the present embodiment, from the viewpoint that a urethane resin having excellent durability such as heat resistance or moist heat resistance is likely to be formed in a case where the polyester polyol (C) is used as a raw material for a urethane resin, it is more preferable that the polyester polyol (C) includes the polyester polyol (β) and/or the polyester polyol (β').

Specific examples of the diol (D) include the same ones as the diols described in the description of the polycarbonate polyol (B-1). Among these, 1,4-butanediol, 1,5-pentanediol, 1,6-hexanediol, 1,9-nonanediol, 3-methyl-1,5-pentanediol, or 2-methyl-1,8-octanediol is preferable.

Specific examples of the polyhydric alcohol (E) include trimethylolpropane, trimethylolethane, glycerin, and pentaerythritol. These may be used alone, or two or more kinds thereof may be used in combination.

One of the hydroxy groups contained in the compound (A1-1) may be, for example, a hydroxy group derived from a compound represented by Formula (e) (an unreacted hydroxy group among the hydroxy groups in the compound represented by Formula (e)):

[Chem. 67]

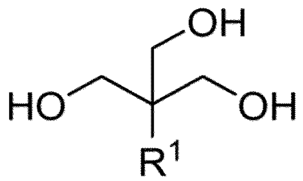

(e)

[In Formula (e), $R^1$ has the same meaning as defined above.]

Such a hydroxy group tends to have low reactivity as compared with a hydroxy group bonded to a molecular chain containing $R^2$, $R^3$, and/or $R^4$ due to the effect of steric hindrance. In addition, since the length from the hydroxyl group derived from the compound represented by Formula (e) to the branch (a portion for bonding to $R^1$) is short as compared with the length from the hydroxy group bonded to a molecular chain containing $R^2$, $R^3$, and/or $R^4$, to the branch, a urethane resin obtained by a reaction between the compound (A1-1) and an isocyanate compound tends to have higher rigidity. The compound (A1-1) is expected to be used as a raw material for a variety of urethane resins, by utilizing the reactivity of the hydroxy group and the high rigidity due to the difference in the length from the hydroxy group to the branch. Further, in the compound (A1-1), one of the bonds contained in Formula (I) is a carbonate bond, and another is an ester bond. The carbonate bond tends to contribute to improving heat resistance, and the ester bond tends to contribute to improving flexibility. The compound (A1-1) is expected to be used for a variety of urethane raw materials, by utilizing the carbonate bond and the ester bond described above.

<Composition>

The composition according to the present embodiment contains the compound (A1-1). The composition may further contain at least one of a polycarbonate polyol represented by Formula (A1-2) (hereinafter referred to as a

"compound (A1-2)") or a polyester polyol represented by Formula (A1-3) (hereinafter referred to as a "compound (A1-3)").

[Chem. 68]

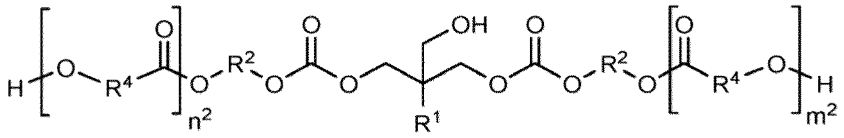

(A1-2)

[In Formula (A1-2), $R^1$, $R^2$, and $R^4$ respectively have the same meanings as defined above, and $n^2$ and $m^2$ each represent an integer of 0 or more. A plurality of $R^2$'s may be the same or different from each other, and in a case where $R^4$ is present in plurality, a plurality thereof may be the same or different from each other.]

[Chem. 69]

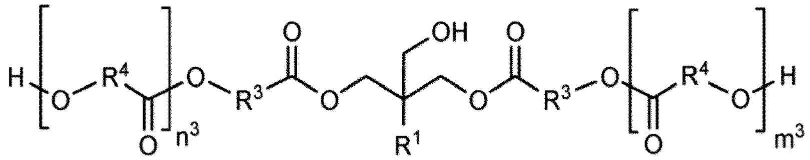

(A1-3)

[In Formula (A1-3), $R^1$, $R^3$, and $R^4$ respectively have the same meanings as defined above, and $n^3$ and $m^3$ each represent an integer of 0 or more. A plurality of $R^3$'s may be the same or different from each other, and in a case where $R^4$ is present in plurality, a plurality thereof may be the same or different from each other.]

The atom or group contained as $R^1$ in the compound (A1-2) may be the same as the atom or group contained as $R^1$ in the compound (A1-1). Similarly, the atom or group contained as $R^1$ in the compound (A1-3) may be the same as the atom or group contained as $R^1$ in the compound (A1-1). In a case where a composition contains two or more kinds of compounds (A1-1) having different alkyl groups and/or hydroxyalkyl groups represented by $R^1$, the composition may contain two or more kinds of compounds (A1-2) having different alkyl groups and/or hydroxyalkyl groups represented by $R^1$, and/or two or more kinds of compounds (A1-3) having different alkyl groups and/or hydroxyalkyl groups represented by $R^1$. In this case, the combination of groups contained as $R^1$ in a plurality of compounds corresponding to the compound (A1-2) and/or the compound (A1-3) may be the same as the combination of groups contained as $R^1$ in a plurality of compounds corresponding to the compound (A1-1).

The alkanediyl group contained as $R^2$ in the compound (A1-2) may be the same as the alkanediyl group contained as $R^2$ in the compound (A1-1). In a case where a composition contains two or more kinds of compounds (A1-1) having different alkanediyl groups represented by $R^2$, the composition may contain two or more kinds of compounds (A1-2) having different alkanediyl groups represented by $R^2$. In this case, the combination of alkanediyl groups contained as $R^2$ in a plurality of compounds corresponding to the compound (A1-2) may be the same as the combination of alkanediyl groups contained as $R^2$ in a plurality of compounds corresponding to the compound (A1-1).

The group contained as $R^3$ in the compound (A1-3) may be the same as the group contained as $R^3$ in the compound (A1-1). In a case where a composition contains two or more kinds of compounds (A1-1) having different groups represented by $R^3$, the composition may contain two or more kinds of compounds (A1-3) having different groups represented by $R^3$. In this case, the combination of groups contained as $R^3$ in a plurality of compounds corresponding to the compound (A1-3) may be the same as the combination of groups contained as $R^3$ in a plurality of compounds corresponding to the compound (A1-1).

The group contained as $R^4$ in the compound (A1-2) may be the same as the group contained as $R^4$ in the compound (A1-1). Similarly, the group contained as $R^4$ in the compound (A1-3) may be the same as the group contained as $R^4$ in the compound (A1-1). In a case where the compound (A1-1) contains two or more kinds of groups as $R^4$, the compound (A1-2) and/or the compound (A1-3) may contain two or more kinds of groups as $R^4$. In this case, the combination of groups contained as $R^4$ in the compound (A1-2) and/or the compound (A1-3) may be the same as the combination of groups contained as $R^4$ in the compound (A1-1).

$m^2$, $n^2$, $m^3$, and $n^3$ may each be 0 to 65 or may be 1 to 60 or 2 to 50.

In the following description, a total number of moles of a group represented by Formula (a1-1), which is contained in the composition, is denoted as $C_{A1-1}$, a total number of moles of a group represented by Formula (a1-2), which is contained in the composition, is denoted as $C_{A1-2}$, and a total number of moles of a group represented by Formula (a1-3), which is contained in the composition, is denoted as $C_{A1-3}$.

[Chem. 70]

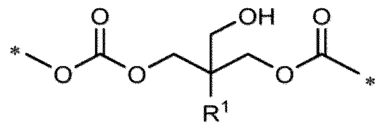

(a1-1)

[In Formula (a1-1), $R^1$ has the same meaning as defined above, and * represents a bonding site. A bonding site represented by * is directly bonded to a carbon atom.]

[Chem. 71]

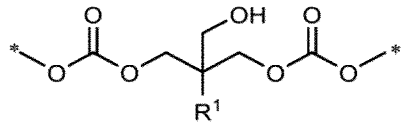

(a1-2)

[In Formula (a1-2), $R^1$ has the same meaning as defined above, and * represents a bonding site. A bonding site represented by * is directly bonded to a carbon atom.]

[Chem. 72]

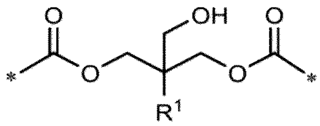

(a1-3)

[In Formula (a1-3), $R^1$ has the same meaning as defined above, and * represents a bonding site. A bonding site represented by * is directly bonded to a carbon atom.]

A molar ratio ($C_{A1-1}/(C_{A1-1} + C_{A1-2} + C_{A1-3}) \times 100$) is preferably 5.3 or more, more preferably 7.0 or more, still more preferably 10.0 or more, and even still more preferably 20.0 or more. In a case where the molar ratio ($C_{A1-1}/(C_{A1-1} + C_{A1-2} + C_{A1-3}) \times 100$) is 5.3 or more, a polyurethane resin that is excellent, particularly in hot water resistance tends to be formed easily. The molar ratio ($C_{A1-1}/(C_{A1-1} + C_{A1-2} + C_{A1-3}) \times 100$) is preferably 99 or less, more preferably 80 or less, still more preferably 70 or less, and particularly preferably 60 or less. In a case where the molar ratio ($C_{A1-1}/(C_{A1-1} + C_{A1-2} + C_{A1-3}) \times 100$) is 99 or less, a polyurethane resin that is excellent, particularly in 100% modulus and heat resistance tends to be formed easily. The molar ratio ($C_{A1-1}/(C_{A1-1} + C_{A1-2} + C_{A1-3}) \times 100$) may be 5.3 to 99. In a case where the molar ratio ($C_{A1-1}/(C_{A1-1} + C_{A1-2} + C_{A1-3}) \times 100$) is in the above-described range, a polyurethane resin having a good 100% modulus, good heat resistance, and good hot water resistance tends to be easily formed in a case where the composition is used as a raw material for a urethane resin.

The molar ratio ($C_{A1-1}/(C_{A1-1} + C_{A1-2} + C_{A1-3}) \times 100$) can be determined, for example, from a $^1$H-NMR measurement of the composition using deuterated chloroform as a solvent and tetramethylsilane as a reference substance, and an integrated value of the signal in the $^1$H-NMR spectrum obtained by the measurement. Specifically, the molar ratio ($C_{A1-1}/(C_{A1-1} + C_{A1-2} + C_{A1-3}) \times 100$) can be calculated from, for example, a ratio between an integrated value $\Delta_{S1-1}$ (equivalent to 2 mol of hydrogen atoms) of a signal (S1-1) of the ethylene located next to the hydroxy group contained in the group represented by Formula (a1-1), an integrated value $\Delta_{S1-2}$ (equivalent to 2 mol of hydrogen atoms) of a signal (S1-2) of the ethylene located next to the hydroxy group contained in the group represented by Formula (a1-2), and an integrated value $\Delta_{S1-3}$ (equivalent to 2 mol of hydrogen atoms) of a signal (S1-3) of the ethylene located next to the hydroxy group contained in the group represented by Formula (a1-3). In this case, the molar ratio ($C_{A1-1}/(C_{A1-1} + C_{A1-2} + C_{A1-3}) \times 100$) can be rephrased as a ratio of ($\Delta_{S1-1}/(\Delta_{S1-1} + \Delta_{S1-2} + \Delta_{S1-3}) \times 100$) between the integrated value $\Delta_{S1-1}$ of the signal (S1-1) and the sum of the integrated value $\Delta_{S1-1}$ of the signal (S1-1), the integrated value $\Delta_{S1-2}$ of the signal (S1-2), and the integrated value $\Delta_{S1-3}$ of the signal (S1-3).

The composition may further contain at least one of a polycarbonate polyol represented by Formula (A2-2) (hereinafter referred to as a "compound (A2-2)") or a polyester polyol represented by Formula (A2-3) (hereinafter referred to as a "compound (A2-3)").

[Chem. 73]

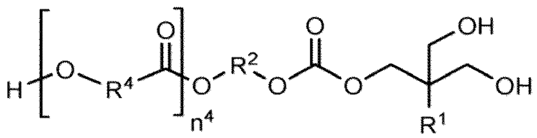

(A2-2)

[In Formula (A2-2), $R^1$, $R^2$, and $R^4$ respectively have the same meanings as defined above, and $n^4$ represents an integer of 0 or more. In a case where $R^4$ is present in plurality, a plurality thereof may be the same or different from each other.]

[Chem. 74]

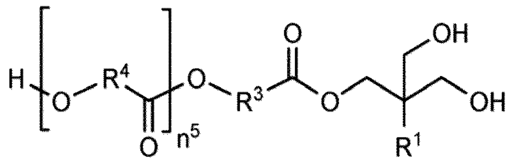

(A2-3)

[In Formula (A2-3), $R^1$, $R^3$, and $R^4$ respectively have the same meanings as defined above, and $n^5$ represents an integer of 0 or more. In a case where $R^4$ is present in plurality, a plurality thereof may be the same or different from each other.]

The atom or group contained as $R^1$ in the compound (A2-2) may be the same as the atom or group contained as $R^1$ in the compound (A1-1). Similarly, the atom or group contained as $R^1$ in the compound (A2-3) may be the same as the atom or group contained as $R^1$ in the compound (A1-1). In a case where a composition contains two or more kinds of compounds (A1-1) having different alkyl groups and/or hydroxyalkyl groups represented by $R^1$, the composition may contain two or more kinds of compounds (A2-2) having different alkyl groups and/or hydroxyalkyl groups represented by $R^1$, and/or two or more kinds of the compounds (A2-3) having different alkyl groups and/or hydroxyalkyl groups represented by $R^1$. In this case, the combination of groups contained as $R^1$ in a plurality of compounds corresponding to the compound (A2-2) and/or the compound (A2-3) may be the same as the combination of groups contained as $R^1$ in a plurality of compounds corresponding to the compound (A1-1).

The alkanediyl group contained as $R^2$ in the compound (A2-2) may be the same as the alkanediyl group contained as $R^2$ in the compound (A1-1). In a case where a composition contains two or more kinds of compounds (A1-1) having different alkanediyl groups represented by $R^2$, the composition may contain two or more kinds of compounds (A2-2) having different alkanediyl groups represented by $R^2$. In this case, the combination of alkanediyl groups contained as $R^2$ in a plurality of compounds corresponding to the compound (A2-2) may be the same as the combination of alkanediyl groups contained as $R^2$ in a plurality of compounds corresponding to the compound (A1-1).

The group contained as $R^3$ in the compound (A2-3) may be the same as the group contained as $R^3$ in the compound (A1-1). In a case where a composition contains two or more kinds of compounds (A1-1) having different groups represented by $R^3$, the composition may contain two or more kinds of compounds (A2-2) having different groups represented by $R^3$. In this case, the combination of groups contained as $R^3$ in a plurality of compounds corresponding to the compound (A2-2) may be the same as the combination of groups contained as $R^3$ in a plurality of compounds corresponding to the compound (A1-1).

The group contained as $R^4$ in the compound (A2-2) may be the same as the group contained as $R^4$ in the compound (A1-1). Similarly, the group contained as $R^4$ in the compound (A2-3) may be the same as the group contained as $R^4$ in the compound (A1-1). In a case where the compound (A1-1) contains two or more kinds of groups as $R^4$, the compound (A2-2) and/or the compound (A2-3) may also contain two or more kinds of groups as $R^4$. In this case, the combination of groups contained as $R^4$ in the compound (A2-2) and/or the compound (A2-3) may be the same as the combination of groups contained as $R^4$ in the compound (A1-1).

$n^4$ and $n^5$ may each be 0 to 65, or may be 1 to 60, or 2 to 50.

In the following description, a total number of moles of a group represented by Formula (a2-2), which is contained in the composition, is denoted as $C_{A2-2}$, and a total number of moles of a group represented by Formula (a2-3), which is contained in the composition, is denoted as $C_{A2-3}$.

[Chem. 75]

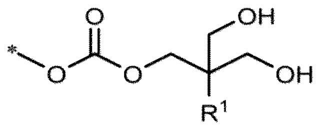

(a2-2)

[In Formula (a2-2), $R^1$ has the same meaning as defined above, and * represents a bonding site. A bonding site represented by * is directly bonded to a carbon atom.]

[Chem. 76]

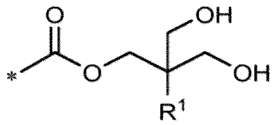

(a2-3)

[In Formula (a2-3), $R^1$ has the same meaning as defined above, and * represents a bonding site. A bonding site represented by * is directly bonded to a carbon atom.]

A molar ratio $((C_{A2-2} + C_{A2-3})/(C_{A1-1} + C_{A1-2} + C_{A1-3}))$ may be 0.010 or more, 0.050 or more, 0.100 or more, 0.200 or more, or 0.300 or more. In a case where the molar ratio $((C_{A2-2} + C_{A2-3})/(C_{A1-1} + C_{A1-2} + C_{A1-3}))$ is 0.010 or more, a polyurethane resin that is excellent, particularly in 100% modulus, breaking strength, glass transition temperature, and elongation rate tends to be formed easily. The molar ratio $((C_{A2-2} + C_{A2-3})/(C_{A1-1} + C_{A1-2} + C_{A1-3}))$ may be 0.750 or less, 0.700 or less, 0.650 or less, or 0.600 or less. In a case where the molar ratio $((C_{A2-2} + C_{A2-3})/(C_{A1-1} + C_{A1-2} + C_{A1-3}))$ is 0.750 or less, a polyurethane resin that is excellent, particularly in hot water resistance and breaking strength tends to be formed. The molar ratio $((C_{A2-2} + C_{A2-3})/(C_{A1-1} + C_{A1-2} + C_{A1-3}))$ may be 0.010 to 0.750. In a case where the molar ratio $(C_{A2-2} + C_{A2-3}/(C_{A1-1} + C_{A1-2} + C_{A1-3}) \times 100)$ is in the above-described range, a polyurethane resin having a good 100% modulus, good heat resistance, good breaking strength, a good elongation rate, a good glass transition temperature, and good hot water resistance tends to be easily formed in a case where the composition is used as a raw material for a urethane resin.

In the same manner as in the case of the molar ratio $(C_{A1-1}/(C_{A1-1} + C_{A1-2} + C_{A1-3}) \times 100)$, the molar ratio $((C_{A2-2} + C_{A2-3})/(C_{A1-1} + C_{A1-2} + C_{A1-3}))$ can be determined, for example, from a $^1$H-NMR measurement of the composition using deuterated chloroform as a solvent and tetramethylsilane as a reference substance, and an integrated value of the signal in the $^1$H-NMR spectrum obtained by the measurement. Specifically, the molar ratio $((C_{A2-2} + C_{A2-3})/(C_{A1-1} + C_{A1-2} + C_{A1-3}))$ can be calculated from, for example, the integrated value $\Delta_{S1-1}$ (equivalent to 2 mol of hydrogen atoms) of the signal (S1-1), the integrated value $\Delta_{S1-2}$ (equivalent to 2 mol of hydrogen atoms) of the signal (S1-2), the integrated value $\Delta_{S1-3}$ (equivalent to 2 mol of hydrogen atoms) of the signal (S1-3), an integral value $\Delta_{S2-2}$ (equivalent to 4 mol of hydrogen atoms) of a signal (S2-2) of the ethylene located next to the hydroxy group contained in the group represented by Formula (a2-2), and an integral value $\Delta_{S2-3}$ (equivalent to 4 mol of hydrogen atoms) of a signal (S2-3) of the ethylene located next to the hydroxy group contained in the group represented by Formula (a2-3). In this case, the molar ratio $((C_{A2-2}+ C_{A2-3})/(C_{A1-1} + C_{A1-2} + C_{A1-3}))$ can be rephrased as a value $(0.5 \times (\Delta_{S2-2} + \Delta_{S2-3})(\Delta_{S1-1} + \Delta_{S1-2} + \Delta_{S1-3}))$ of 0.5 times the ratio of the sum of the integral value $\Delta_{S2-2}$ of the signal (S2-2) and the integral value $\Delta_{S2-3}$ of the signal (S2-3) to the sum of the integral value $\Delta_{S1-1}$ of the signal (S1-1), the integral value $\Delta_{S1-2}$ of the signal (S1-2), and the integral value $\Delta_{S1-3}$ of the signal (S1-3).

The composition may further contain a polyhydric alcohol represented by Formula (e) (hereinafter also referred to as a "polyhydric alcohol (E)"). Hereinafter, the total number of moles of the polyhydric alcohol represented by Formula (e) is denoted as $C_E$. In addition, a signal of the ethylene located next to the hydroxy group contained in the polyhydric alcohol represented by Formula (e) is denoted as Se.

[Chem. 77]

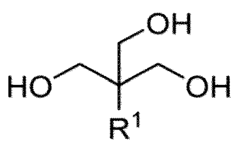

(e)

[In Formula (e), $R^1$ has the same meaning as defined above.]

The polyhydric alcohol (E) has the same meaning as that described above, and an alkyl group and a hydroxyalkyl

group, which are contained as $R^1$ in the polyhydric alcohol (E), may be the same as the atom or group contained as $R^1$ in the compound (A1-1).

The atom or group contained as $R^1$ in the polyhydric alcohol (E) may be the same as the atom or group contained as $R^1$ in the compound (A1-1). In a case where a composition contains two or more kinds of compounds (A1-1) having different alkyl groups and/or hydroxyalkyl groups represented by $R^1$, the composition may contain two or more kinds of the polyhydric alcohol (E) having different alkyl groups and/or hydroxyalkyl groups represented by $R^1$. In this case, the combination of groups contained as $R^1$ in a plurality of compounds corresponding to the polyhydric alcohol (E) may be the same as the combination of groups contained as $R^1$ in a plurality of compounds corresponding to the compound (A1-1).

The composition may further contain an oxetane compound represented by Formula (f) (hereinafter also referred to as an "oxetane compound (F)").

[Chem. 78]

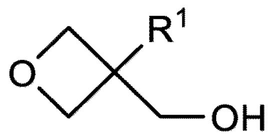

(f)

[In Formula (f), $R^1$ has the same meaning as defined above.]

The oxetane compound (F) has the same meaning as that described above, and an alkyl group and a hydroxyalkyl group, which are contained as $R^1$ in the oxetane compound (F), may be the same as the atom or group contained as $R^1$ in the compound (A1-1).

Similarly, the atom or group contained as $R^1$ in the oxetane compound (F) may be the same as the atom or group contained as $R^1$ in the compound (A1-1). In a case where a composition contains two or more kinds of compounds (A1-1) having different alkyl groups and/or hydroxyalkyl groups represented by $R^1$, the composition may contain two or more kinds of the oxetane compound (F) having different alkyl groups and/or hydroxyalkyl groups represented by $R^1$. In this case, the combination of groups contained as $R^1$ in a plurality of compounds corresponding to the oxetane compound (F) may be the same as the combination of groups contained as $R^1$ in a plurality of compounds corresponding to the compound (A1-1).

Specific examples of the oxetane compound (F) include 3-ethyl-3-hydroxymethyloxetane, 3-methyl-3-hydroxymethyloxetane, and 3,3-dihydroxymethyloxetane. These may be used alone, or two or more kinds thereof may be used in combination.

The composition may further contain a polycarbonate polyol represented by Formula (A-3) (hereinafter referred to as a "compound (A-3)").

[Chem. 79]

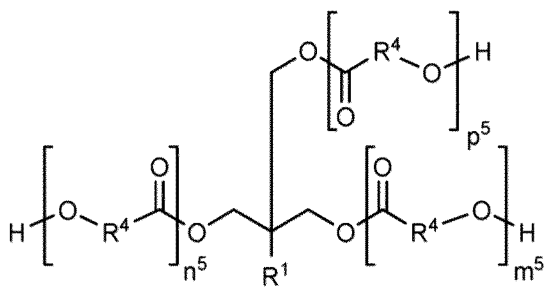

(A-3)

[In Formula (A-3), $R^1$ and $R^4$ respectively have the same meanings as defined above, and $n^5$, $m^5$, and $p^5$ each represent an integer of 1 or more. A plurality of $R^4$'s may be the same or different from each other.]

The atom or group contained as $R^1$ in the compound (A-3) may be the same as the atom or group contained as $R^1$ in the compound (A1-1). In a case where a composition contains two or more kinds of compounds (A1-1) having different alkyl groups and/or hydroxyalkyl groups represented by $R^1$, the composition may contain two or more kinds of the compound (A-3) having different alkyl groups and/or hydroxyalkyl groups represented by $R^1$. In this case, the combination of groups contained as $R^1$ in a plurality of compounds corresponding to the compound (A-3) may be the same as the combination of groups contained as $R^1$ in a plurality of compounds corresponding to the compound (A1-1).

The group contained as $R^4$ in the compound (A-3) may be the same as the group contained as $R^4$ in the

compound (A1-1). In a case where the compound (A1-1) contains two or more kinds of groups as $R^4$, the compound (A-3) may also contain two or more kinds of groups as $R^4$. In this case, the combination of two or more kinds of groups contained as $R^4$ in the compound (A-3) may be the same as the combination of two or more kinds of groups contained as $R^4$ in the compound (A1-1).

$n^5$, $m^5$, and $p^5$ may each be 1 to 65, or may be 2 to 60, or 3 to 50.

The composition may further contain a polycarbonate diol represented by Formula (A-4) (hereinafter referred to as a "compound (A-4)").

[Chem. 80]

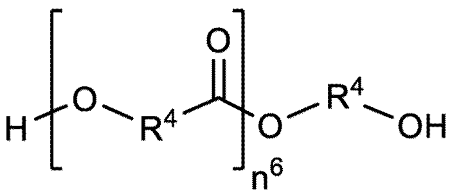

(A-4)

[In Formula (A-4), $R^4$ has the same meaning as defined above, and $n^6$ represents an integer of 1 or more. A plurality of $R^4$'s may be the same or different from each other.]

The group contained as $R^4$ in the compound (A-4) may be the same as the group contained as $R^4$ in the compound (A1-1). In a case where the compound (A1-1) contains two or more kinds of groups as $R^4$, the compound (A-4) may also contain two or more kinds of groups as $R^4$. In this case, the combination of two or more kinds of groups contained as $R^4$ in the compound (A-4) may be the same as the combination of two or more kinds of groups contained as $R^4$ in the compound (A1-1).

$n^6$ may be 1 to 65, or may be 2 to 60, or 3 to 50.

In the following description, the total number of moles of the group represented by Formula (I) contained in the composition is denoted as $C_{T.}$

[Chem. 81]

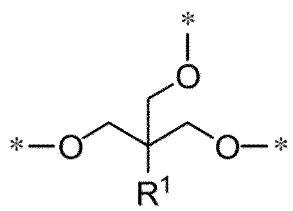

(I)

[In Formula (I), $R^1$ has the same meaning as defined above, and * represents a bonding site.]

In Formula (I), the bonding site represented by * is directly bonded to a carbon atom or a hydrogen atom.

A molar ratio ($C_{A1-1}/C_T$) may be 0.02 or more, 0.05 or more, or 0.1 or more. In a case where the molar ratio ($C_{A1-1}/C_T$) is 0.02 or more, a polyurethane resin that is excellent, particularly in hot water resistance tends to be formed. The molar ratio ($C_{A1-1}/C_T$) may be 0.990 or less, 0.800 or less, or 0.700 or less. In a case where the molar ratio ($C_{A1-1}/C_T$) is 0.990 or less a polyurethane resin that is excellent, particularly in 100% modulus and heat resistance tends to be formed easily. The molar ratio ($C_{A1-1}/C_T$) may be 0.02 to 0.99. In a case where the molar ratio ($C_{A1-1}/C_T$) is in the above-described range, a polyurethane resin having a good 100% modulus, good heat resistance, and good hot water resistance tends to be easily formed in a case where the composition is used as a raw material for a urethane resin.

A molar ratio ($C_{A1-2}/C_T$) may be 0.001 or more, 0.010 or more, or 0.050 or more. In a case where the molar ratio ($C_{A1-2}/C_T$) is 0.001 or more, a polyurethane resin that is excellent, particularly in breaking strength and hot water resistance tends to be formed. The molar ratio ($C_{A1-2}/C_T$) may be 0.990 or less, 0.400 or less, or 0.500 or less. The molar ratio ($C_{A1-2}/C_T$) may be 0.001 to 0.990. In a case where the molar ratio ($C_{A1-2}/C_T$) is in the above-described range, a polyurethane resin having a good 100% modulus, good heat resistance, good breaking strength, and good hot water resistance tends to be easily formed in a case where the composition is used as a raw material for a urethane resin.

A molar ratio ($C_{A1-3}/C_T$) may be 0.005 or more, 0.010 or more, 0.050 or more, 0.100 or more, 0.150 or more, 0.200 or more, 0.250 or more, or 0.300 or more. The molar ratio ($C_{A1-3}/C_T$) may be 0.340 or less, 0.250 or less, 0.200 or less, 0.150 or less, 0.100 or less, 0.050 or less, or 0.020 or less. In a case where the molar ratio ($C_{A1-3}/C_T$) is 0.340 or less, a polyurethane resin that is excellent, particularly in hot water resistance tends to be formed. The molar ratio ($C_{A1-3}/C_T$) may be 0.005 to 0.340. In a case where the molar ratio ($C_{A1-3}/C_T$) is in the above-described range, a polyurethane resin having a

good 100% modulus, good heat resistance, and good hot water resistance tends to be easily formed in a case where the composition is used as a raw material for a urethane resin.

A molar ratio ($C_{A2\text{-}3}/C_T$) may be 0.001 or more, 0.005 or more, 0.010 or more, 0.050 or more, 0.100 or more, 0.150 or more, 0.200 or more, or 0.220 or more. In a case where the molar ratio ($C_{A2\text{-}3}/ C_T$) is 0.001 or more, a polyurethane resin that is excellent, particularly in 100% modulus, breaking strength, glass transition temperature, and elongation rate tends to be formed easily. The molar ratio ($C_{A2\text{-}3}/C_T$) may be 0.234 or less, 0.200 or less, 0.150 or less, 0.100 or less, 0.050 or less, or 0.015 or less. In a case where the molar ratio ($C_{A2\text{-}3}/C_T$) is 0.234 or less, a polyurethane resin that is excellent, particularly in hot water resistance and breaking strength tends to be formed. The molar ratio ($C_{A2\text{-}3}/C_T$) may be 0.001 to 0.234. In a case where the molar ratio ($C_{A2\text{-}3}/C_T$) is in the above-described range, a polyurethane resin having a good 100% modulus, good heat resistance, good hot water resistance, good breaking strength, a good elongation rate, and a good glass transition temperature tends to be easily formed in a case where the composition is used as a raw material for a urethane resin.

In a case where all of the molar ratio ($C_{A1\text{-}1}/C_T$), the molar ratio ($C_{A1\text{-}2}/C_T$), the molar ratio ($C_{A1\text{-}3}/C_T$), and the molar ratio ($C_{A2\text{-}3}/C_T$) are in the above-described range, a polyurethane resin having better 100% modulus and better heat resistance tends to be easily formed in a case where the composition is used as a raw material for a urethane resin.

In the same manner as in the case of ($C_{A1\text{-}1}/(C_{A1\text{-}1} + C_{A1\text{-}2} + C_{A1\text{-}3}) \times 100$), the molar ratio ($C_{A1\text{-}1}/C_T$), the molar ratio ($C_{A1\text{-}2}/C_T$), the molar ratio ($C_{A1\text{-}3}/C_T$), and the molar ratio ($C_{A2\text{-}3}/C_T$) can be determined, for example, from a $^1$H-NMR measurement of the composition using deuterated chloroform as a solvent and tetramethylsilane as a reference substance, and an integrated value of the signal in the $^1$H-NMR spectrum obtained by the measurement. Specifically, the molar ratio ($C_{A1\text{-}1}/C_T$), the molar ratio ($C_{A1\text{-}2}/C_T$), the molar ratio ($C_{A1\text{-}3}/C_T$), and the molar ratio ($C_{A2\text{-}3}/C_T$) can be calculated from, for example, a ratio between the integrated value $\Delta_{S1\text{-}1}$ (equivalent to 2 mol of hydrogen atoms) of the signal (S1-1), the integrated value $\Delta_{S1\text{-}2}$ (equivalent to 2 mol of hydrogen atoms) of the signal (S1-2), the integrated value $\Delta_{S1\text{-}3}$ (equivalent to 2 mol of hydrogen atoms) of the signal (S1-3), the integrated value $\Delta_{S2\text{-}3}$ (equivalent to 4 mol of hydrogen atoms) of the signal (S2-3), and an integrated value $\Delta_{SI}$ (equivalent to 3 mol of hydrogen atoms) of a signal (SI) of the terminal methyl of $R^1$ (alkyl group) in Formula (I) in a case where $R^1$ in Formula (I) is a linear alkyl group. In this case, the molar ratio ($C_{A1\text{-}1}/C_T$) can be rephrased as a value ($1.5 \times (\Delta_{S1\text{-}1}/\Delta_{SI})$ of 1.5 times the ratio between the integral value $\Delta_{S1\text{-}1}$ of the signal (S1-1) and the integral value $\Delta_{SI}$ of the signal (SI), the molar ratio ($C_{A1\text{-}2}/C_T$) can be rephrased as a value ($1.5 \times (\Delta_{S1\text{-}2}/\Delta_{SI})$ of 1.5 times the ratio between the integral value $\Delta_{S1\text{-}2}$ of the signal (S1-2) and the integral value $\Delta_{SI}$ of the signal (SI), the molar ratio ($C_{A1\text{-}3}/C_T$) can be rephrased as a value ($1.5 \times (\Delta_{S1\text{-}3}/\Delta_{SI})$ of 1.5 times the ratio between the integral value $\Delta_{S1\text{-}3}$ of the signal (S1-3) and the integral value $\Delta_{SI}$ of the signal (SI), and the molar ratio ($C_{A2\text{-}3}/C_T$) can be rephrased as a value ($0.75 \times (\Delta_{S2\text{-}3}/\Delta_{SI})$ of 0.75 times the ratio between the integral value $\Delta_{S2\text{-}3}$ of the signal (S2-3) and the integral value $\Delta_{SI}$ of the signal (SI).

The composition may further contain the diol (D). The diol (D) has the same meaning as that described above.

In the following description, the total number of moles of groups represented by Formula (d) contained in the composition is denoted as $C_D$.

[Chem. 82]

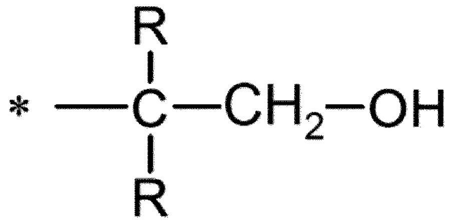

(d)

[In Formula (d), R is a hydrogen atom or an alkanediyl group, and * represents a bonding site. R's may be the same or different from each other.]

The molar ratio ($C_{A2\text{-}3}/(C_{A2\text{-}2} + C_{A2\text{-}3} + C_D) \times 100$) may be 0.010 or more, 0.050 or more, 0.100 or more, 0.500 or more, 1.0 or more, 3.0 or more, 5.0 or more, 7.0 or more, 8.5 or more, or 9.5 or more. In a case where the molar ratio ($C_{A2\text{-}3}/(C_{A2\text{-}2} + C_{A2\text{-}3} + C_D) \times 100$) is 0.010 or more, a polyurethane resin that is excellent, particularly in heat resistance tends to be formed. The molar ratio ($C_{A2\text{-}3}/(C_{A2\text{-}2} + C_{A2\text{-}3} + C_D) \times 100$) may be 10.20 or less, 9.0 or less, 5.0 or less, 3.0 or less, 1.0 or less, 0.900 or less, 0.600 or less, 0.300 or less, or 0.100 or less. In a case where the molar ratio ($C_{A2\text{-}3}/(C_{A2\text{-}2} + C_{A2\text{-}3} + C_D) \times 100$) is 10.20 or less, a polyurethane resin that is excellent, particularly in hot water resistance and breaking strength tends to be formed. The molar ratio ($C_{A2\text{-}3}/(C_{A2\text{-}2} + C_{A2\text{-}3} + C_D) \times 100$) may be 0.010 to 10.20. In a case where the molar ratio ($C_{A2\text{-}3}/(C_{A2\text{-}2} + C_{A2\text{-}3} + C_D) \times 100$) is in the above-described range, a polyurethane resin having a good 100% modulus, good heat resistance, good breaking strength, and good hot water resistance tends to be easily formed in a case

where the composition is used as a raw material for a urethane resin.

A molar ratio $((C_{A2-2} + C_{A2-3})/(C_{A2-2} + C_{A2-3} + C_D) \times 100)$ may be 0.100 or more, 0.300 or more, 0.600 or more, 1.00 or more, 3.00 or more, 5.00 or more, 7.00 or more, or 9.00 or more. In a case where the molar ratio $((C_{A2-2} + C_{A2-3})/(C_{A2-2} + C_{A2-3} + C_D) \times 100)$ is 0.100 or more, a polyurethane resin that is excellent, particularly in 100% modulus and heat resistance tends to be formed easily. The molar ratio $((C_{A2-2} + C_{A2-3})/(C_{A2-2} + C_{A2-3} + C_D) \times 100)$ may be 12.00 or less, 10.00 or less, 8.00 or less, 6.00 or less, 4.00 or less, 2.00 or less, or 1.000 or less. The molar ratio $((C_{A2-2} + C_{A2-3})/(C_{A2-2} + C_{A2-3} + C_D) \times 100)$ may be 0.100 to 12.00. In a case where the molar ratio $((C_{A2-2} + C_{A2-3})/(C_{A2-2} + C_{A2-3} + C_D) \times 100)$ is in the above-described range, a polyurethane resin having a good 100% modulus and good heat resistance tends to be easily formed in a case where the composition is used as a raw material for a urethane resin.

In a case where both the molar ratio $(C_{A2-3}/(C_{A2-2} + C_{A2-3} + C_D) \times 100)$ and the molar ratio $((C_{A2-2} + C_{A2-3})/(C_{A2-2} + C_{A2-3} + C_D) \times 100)$ are in the above-described range, a polyurethane resin having better 100% modulus and better heat resistance tends to be easily formed in a case where the composition is used as a raw material for a urethane resin.

In the same manner as in the case of $(C_{A1-1}/(C_{A1-1} + C_{A1-2} + C_{A1-3}) \times 100)$, the molar ratio $(C_{A2-3}/(C_{A2-2} + C_{A2-3} + C_D) \times 100)$ and the molar ratio $((C_{A2-2} + C_{A2-3})/(C_{A2-2} + C_{A2-3} + C_D) \times 100)$ can be determined from, for example, a $^1$H-NMR measurement of the composition using deuterated chloroform as a solvent and tetramethylsilane as a reference substance, and an integrated value of the signal in the $^1$H-NMR spectrum obtained by the measurement. Specifically, the molar ratio $(C_{A2-3}/(C_{A2-2} + C_{A2-3} + C_D) \times 100)$ and the molar ratio $((C_{A2-2} + C_{A2-3})/(C_{A2-2} + C_{A2-3} + C_D) \times 100)$ can be calculated from, for example, the integrated value $\Delta_{S2-2}$ (equivalent to 4 mol of hydrogen atoms) of the signal (S2-2), the integrated value $\Delta_{S2-3}$ (equivalent to 4 mol of hydrogen atoms) of the signal (S2-3), and an integral value $\Delta_{Sd}$ (equivalent to 2 mol of hydrogen atoms) of a signal (Sd) of the ethylene located next to the hydroxy group contained in the group represented by Formula (d). In this case, the molar ratio $(C_{A2-3}/(C_{A2-2} + C_{A2-3} + C_D) \times 100)$ can be rephrased as a ratio of $((\Delta_{S2-3})/(\Delta_{S2-2} + \Delta_{S2-3} + 2 \times \Delta_{Sd}) \times 100)$ between the sum of the integral value $\Delta_{S2-2}$ of the signal (S2-2), the integral value $\Delta_{S2-3}$ of the signal (S2-3), and the integral value $\Delta_{sd}$ of the signal (Sd), and the integral value $\Delta_{S2-3}$ of the signal (S2-3). In addition, the molar ratio $((C_{A2-2} + C_{A2-3})/(C_{A2-2} + C_{A2-3} + C_D) \times 100)$ can be rephrased as a ratio of $((\Delta_{S2-2} + \Delta_{S2-3})/(\Delta_{S2-2} + \Delta_{S2-3} + 2 \times \Delta_{Sd}) \times 100)$ between the sum of the integral value $\Delta_{S2-2}$ of the signal (S2-2), the integral value $\Delta_{S2-3}$ of the signal (S2-3), and the integral value $\Delta_{Sd}$ of the signal (Sd), and the sum of the integral value $\Delta_{S2-2}$ of the signal (S2-2) and the integral value $\Delta_{S2-3}$ of the signal (S2-3).

In the following description, the total number of moles of groups represented by Formula (f') contained in the composition is denoted as $C_F$.

[Chem. 83]

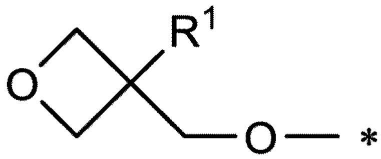

(f')

[In Formula (f), R$^1$ has the same meaning as defined above, and * represents a bonding site.]

A molar ratio $(C_F/C_T \times 100)$ may be 1.70 or more, 1.80 or more, 2.00 or more, 3.00 or more, 4.00 or more, 5.00 or more, 6.00 or more, 7.00 or more, 8.00 or more, 9.00 or more, 10.00 or more, or 15.00 or more. In a case where the molar ratio $(C_F/C_T \times 100)$ is 1.7 or more, a polyurethane resin that is excellent, particularly in heat resistance and 100% modulus tends to be formed easily due to self-crosslinking of the oxetane compound. The molar ratio $(C_F/C_T \times 100)$ may be 45.0 or less, 42.0 or less, 40.0 or less, 35.0 or less, 30.0 or less, 25.0 or less, 20.0 or less, 15.0 or less, or 10.0 or less. In a case where the molar ratio $(C_F/C_T \times 100)$ is 45.0 or less, a polyurethane resin that is excellent, particularly in heat resistance tends to be formed. The molar ratio $(C_F/C_T \times 100)$ may be 1.70 to 45.0, 1.80 to 42.0, 2.00 to 40.0, 3.00 to 30.0, 4.00 to 20.0, 5.00 to 15.0, or 6.00 to 10.0. In a case where the molar ratio $(C_F/C_T \times 100)$ is in the above-described range, a polyurethane resin having a good 100% modulus and good heat resistance tends to be easily formed in a case where the composition is used as a raw material for a urethane resin.

In the same manner as in the case of $(C_{A1-1}/(C_{A1-1} + C_{A1-2} + C_{A1-3}) \times 100)$, the molar ratio $(C_F/C_T \times 100)$ can be determined, for example, from a $^1$H-NMR measurement of the composition using deuterated chloroform as a solvent and tetramethylsilane as a reference substance, and an integrated value of the signal in the $^1$H-NMR spectrum obtained by the measurement. Specifically, the molar ratio $(C_F/C_T \times 100)$ can be calculated from, for example, a ratio between the integrated value $\Delta_{SI}$ (equivalent to 3 mol of hydrogen atoms) of the signal (SI) and an integral value $\Delta_{Sf}$ (equivalent to 4 mol of hydrogen atoms) of a signal (Sf) of the ethylene located next to the oxygen atom of the oxetane group in Formula (f). In this case, the molar ratio $(C_F/C_T \times 100)$ can be rephrased as a value $(0.75 \times \Delta_{Sf}/\Delta_{SI} \times 100)$ of 0.75 times the ratio between the integral value $\Delta_{SI}$ of the signal (SI) and the integral value $\Delta_{Sf}$ of the signal (Sf).

The composition may be a reaction mixture of the polycarbonate polyol (B), the polyester polyol (C), the diol (D), the polyhydric alcohol (E), and/or the oxetane compound (F), where the diol (D), the polyhydric alcohol (E), and/or the oxetane compound (F) are added as necessary. Since the above reaction is usually carried out in the presence of a transesterification catalyst, the composition may further contain a transesterification catalyst. As the transesterification catalyst, lithium acetylacetonate is preferably used. The content of the transesterification catalyst may be 0.0001% to 0.100% by mass based on the total mass of the composition.

The state of the composition is not particularly limited, and it may be a solid at 25°C or may be a liquid at 25°C. The state of the composition can be changed by the kind, content rate, and the like of the components to be contained (for example, compounds (A1-1) to (A1-3), compounds (A2-2) to (A2-3), compound (A-3), compound (A-4), and the oxetane compound (F)).

The number average molecular weight of the composition may be, for example, 200 to 6,000 g/mol. The lower limit of the number average molecular weight of the composition may be, for example, 200 g/mol or more, 400 g/mol or more, 600 g/mol or more, 800 g/mol or more, 1,000 g/mol or more, 1,200 g/mol or more, 1,400 g/mol or more, 1,600 g/mol or more, or 1,800 g/mol or more. The upper limit of the number average molecular weight of the composition may be, for example, 6,000 g/mol or less, 5,000 g/mol or less, 4,000 g/mol or less, 3,000 g/mol or less, 2,500 g/mol or less, 2,000 g/mol or less, 1,800 g/mol or less, 1,600 g/mol or less, 1,400 g/mol or less, 1,200 g/mol or less, 1,000 g/mol or less, or 800 g/mol or less.

The number average molecular weight of the composition is the number average molecular weight in terms of a difunctional polyoxypropylene polyol, which is measured for the entire composition as a measurement target using gel permeation chromatography (GPC).

The hydroxyl group value of the composition may be, for example, 30 to 800 mgKOH/g. The lower limit of the hydroxyl group value of the composition may be, for example, 30 mgKOH/g or more, 40 mgKOH/g or more, 50 mgKOH/g or more, 60 mgKOH/g or more, 70 mgKOH/g or more, 80 mgKOH/g or more, 90 mgKOH/g or more, 100 mgKOH/g or more, 120 mgKOH/g or more, 140 mgKOH/g or more, 160 mgKOH/g or more, or 180 mgKOH/g or more. The upper limit of the hydroxyl group value of the composition may be, for example, 800 mgKOH/g or less, 700 mgKOH/g or less, 600 mgKOH/g or less, 500 mgKOH/g or less, 400 mgKOH/g or less, 300 mgKOH/g or less, 250 mgKOH/g or less, 200 mgKOH/g or less, 180 mgKOH/g or less, 160 mgKOH/g or less, 140 mgKOH/g or less, 120 mgKOH/g or less, 100 mgKOH/g or less, or 80 mgKOH/g or less.

The hydroxyl group value of the composition means the number of milligrams (mg) of potassium hydroxide equivalent to the hydroxyl group in 1 g of the composition, and it is measured in accordance with JIS K1557-1.

The acid value of the composition may be, for example, 0.01 to 10.0 mgKOH/g. The lower limit of the acid value of the composition may be, for example, 0.01 mgKOH/g or more, 0.02 mgKOH/g or more, 0.03 mgKOH/g or more, 0.04 mgKOH/g or more, 0.05 mgKOH/g or more, 0.06 mgKOH/g or more, or 0.07 mgKOH/g or more. The upper limit of the acid value of the composition may be, for example, 10.0 mgKOH/g or less, 5.0 mgKOH/g or less, 3.0 mgKOH/g or less, 1.0 mgKOH/g or less, 0.5 mgKOH/g or less, 0.4 mgKOH/g or less, 0.3 mgKOH/g or less, or 0.2 mgKOH/g or less.

The acid value of the composition means the number of milligrams (mg) of potassium hydroxide equivalent to the hydroxyl group in 1 g of the composition, and it is measured in accordance with JIS K1557-5.

In the present embodiment, in a case where a $^1$H-NMR measurement of the composition is carried out using deuterated chloroform as a solvent and tetramethylsilane as a reference substance, for example, the signal (S1-1) is observed in a range of 3.435 ppm or more and 3.475 ppm or less in the $^1$H-NMR spectrum, the signal (S1-2) is observed in a range of 3.475 ppm or more and 3.520 ppm or less in the $^1$H-NMR spectrum, the signal (S1-3) is observed in a range of 3.400 ppm or more and 3.435 ppm or less in the $^1$H-NMR spectrum, the signal (S2-2) is observed in a range of 3.595 ppm or more and 3.618 ppm or less in the $^1$H-NMR spectrum, the signal (S2-3) is observed in a range of 3.550 ppm or more and 3.595 ppm or less in the $^1$H-NMR spectrum, and the signal (Sd) is observed in a range of 3.618 ppm or more and 3.710 ppm or less in the $^1$H-NMR spectrum. In addition, an integrated value $\Delta_{Se}$ of a signal (Se) of the ethylene located next to the hydroxy group contained in the polyhydric alcohol (E) is observed in a range of 3.710 ppm or more and 3.760 ppm or less in the $^1$H-NMR spectrum, and the signal (Sf) is observed in a range of 4.390 ppm or more and 4.500 ppm or less in the $^1$H-NMR spectrum. In addition, in a case where $R^1$ in Formula (I) is an ethyl group, the signal (SI) is observed in a range of 0.700 ppm or more and 1.000 ppm or less, and in a case where $R^1$ in Formula (I) is a methyl group, the signal (SI) is observed in a range of 0.700 ppm or more and 1.130 ppm or less. Therefore, in the present embodiment, from the ratio between the integrated values of these signals, it is possible to determine the molar ratio ($C_{A1-1}/(C_{A1-1} + C_{A1-2} + C_{A1-3}) \times 100$), the molar ratio ($(C_{A2-2} + C_{A2-3})/(C_{A1-1} + C_{A1-2} + C_{A1-3})$), the molar ratio ($C_{A1-1}/C_T$), the molar ratio ($C_{A1-2}/C_T$), the molar ratio ($C_{A1-3}/C_T$), the molar ratio ($C_{A2-3}/C_T$), the molar ratio ($C_{A2-3}/(C_{A2-2} + C_{A2-3} + C_D) \times 100$), the molar ratio ($(C_{A2-2} + C_{A2-3})/(C_{A2-2} + C_{A2-3} + C_D) \times 100$), and the molar ratio ($C_F/C_T \times 100$).

According to the present embodiment, it is possible to provide a composition that contributes to the formation of a urethane resin having a low 100% modulus and a high softening temperature.

<Method for producing polycarbonate polyol and composition>

The compound (A1-1) according to the above-described embodiment can be obtained, for example, by a method including a reaction step of subjecting a polycarbonate polyol and a polyester polyol to a reaction (transesterification reaction) in a mixed liquid containing the polycarbonate polyol (B), the polyester polyol (C), and a transesterification catalyst, thereby obtaining the compound (A1-1). In this method, at least one of the polycarbonate polyol or the polyester polyol contains a group represented by Formula (I), or the mixed liquid further contains a polyhydric alcohol represented by Formula (e).

In the above method, the composition according to the above-described embodiment can also be obtained as a reaction mixture containing the compound (A1-1). Therefore, the above method can also be referred to as a method for producing the composition according to the above-described embodiment.

The mixed liquid may contain, as an optional component, the diol (D) and/or the oxetane compound (F). Even in the case where the above method is a method in which at least one of the polycarbonate polyol (B) or the polyester polyol (C) contains a group represented by Formula (I), the mixed liquid may contain the polyhydric alcohol (E) as an optional component. Details of the polycarbonate polyol (B), the polyester polyol (C), the diol (D), the polyhydric alcohol (E), and the oxetane compound (F) are as described above, and suitable examples thereof (preferred examples of $R^1$, $R^2$, $R^3$, $R^4$, and R, and the preferred examples of the combination thereof) are also the same as the preferred examples of $R^1$, $R^2$, $R^3$, $R^4$, and R contained in the compound (A1-1) and the preferred examples of the combination thereof. As the transesterification catalyst, lithium acetylacetonate is preferably used from the viewpoint that the desired compound (A1-1) is easily obtained.

The mixing ratio of the polycarbonate polyol (B) to the polyester polyol (C) (content of polycarbonate polyol (B) in mixed liquid/content of polyester polyol (C) in mixed liquid) is preferably 95/5 to 5/95, more preferably 90/10 to 10/90, still more preferably 80/20 to 20/80, and particularly preferably 70/30 to 30/70 in terms of weight ratio. In a case where the mixing ratio of the polycarbonate polyol (B) to the polyester polyol (C) is set in the above-described range, the compound (A-1) can be obtained efficiently.

The mixing ratio of the polycarbonate polyol (B) to the polyester polyol ($\beta$) and/or polyester polyol ($\beta$') (content of polycarbonate polyol (B) in mixed liquid/content of polyester polyol ($\beta$) and/or polyester polyol ($\beta$') in mixed liquid) is preferably 95/5 to 5/95, more preferably 90/10 to 10/90, still more preferably 80/20 to 20/80, and particularly preferably 70/30 to 30/70 in terms of weight ratio. In a case where the mixing ratio of the polycarbonate polyol (B) to the polyester polyol ($\beta$) and/or polyester polyol ($\beta$') is set in the above-described range, the compound (A-1) can be obtained efficiently.

From the viewpoint that it is easy to suitably control the reaction temperature and it is possible to suppress an increase in the number of colors of the reaction product, the content of the transesterification catalyst in the mixed liquid may be 0.0001 to 0.1 parts by mass, may be 0.001 to 0.050 parts by mass, or may be 0.005 to 0.01 parts by mass, with respect to 100 parts by mass of the total amount of the polyol components in the mixed liquid. From the viewpoint of facilitating the control of the reactivity of the urethanization reaction, the smaller the content of the transesterification catalyst, the more preferable. In a case where the content of the transesterification catalyst creases, the reactivity of the urethanization reaction tends to increase. From the viewpoint of facilitating the control of the urethanization reaction, the content of the transesterification catalyst in the mixed liquid is preferably 0.001 parts by mass or more, more preferably 0.002 parts by mass or more, and still more preferably 0.003 parts by mass or more, with respect to 100 parts by mass of the total amount of the polyol components in the mixed liquid. From the viewpoint of suppressing an increase in the number of colors of the reaction product, the content of the transesterification catalyst in the mixed liquid is preferably 0.050 parts by mass or less, more preferably 0.040 parts by mass or less, and still more preferably 0.030 parts by mass or less, with respect to 100 parts by mass of the total amount of the polyol components in the mixed liquid. From these viewpoints, the content of the transesterification catalyst in the mixed liquid is preferably 0.001 to 0.050 parts by mass, more preferably 0.002 to 0.040 parts by mass, and still more preferably 0.003 to 0.030 parts by mass, with respect to 100 parts by mass of the total amount of the polyol components in the mixed liquid. The total amount of the polyol components is a total amount of compounds having two or more hydroxy groups (for example, the polycarbonate polyol (B), the polyester polyol (C), the polyhydric alcohol (E), and the optionally added diol (D)), which are contained in the mixed liquid, and the oxetane compound (F) which an optionally added component.

In the reaction step, the reaction may be allowed to proceed by heating the mixed liquid or may be allowed to proceed without heating. The reaction temperature of the mixed liquid is, for example, 0°C to 250°C, and may be 100°C to 220°C. In a case where the reaction temperature is 0°C or higher, the transesterification reaction proceeds easily, and thus the desired compound (A1-1) is easily obtained. In a case where the reaction temperature is 250°C or lower, the number of colors of the obtained compound (A1-1) and the composition (polyol-containing composition) is reduced. Further, in a case where the reaction temperature is 250°C or lower, it is possible to suppress an oxetane compound and/or oxetane structure derived from a polyhydric alcohol which is tri- or higher functional, where the oxetane compound and/or the oxetane structure is produced as a by-product by a decarboxylation reaction of a carbonate group or by a dehydration reaction between terminal hydroxyl groups. In addition, the transesterification reaction may be carried out at a constant temperature or may be carried out while increasing the temperature stepwise or continuously, depending on the degree of

reaction progress. From the viewpoint of making it easy to obtain the desired compound (A1-1), it is preferable to carry out heating at a temperature T1 that satisfies a relationship of the following Expression (α), and then to carry out heating at a temperature T2 that satisfies a relationship of the following Expression (β). It is noted that it is preferable that the temperature T1 and the temperature T2 satisfy a relationship of the following Expression (γ). In addition, it is preferable that the average temperature $T1_m$ of temperatures in the first heating and the average temperature $T2_m$ of temperatures in the second heating satisfy a relationship of the following Expression (δ). Here, the degree of reaction progress can be estimated from the consumption amounts of raw materials, which are obtained from a GPC chart.

$$180°C \leq T1 \leq 200°C \cdots (\alpha)$$

$$190°C \leq T2 \leq 200°C \cdots (\beta)$$

$$T1 < T2 \cdots (\gamma)$$

$$T1_m < T2_m \cdots (\delta)$$

The mixed liquid can be heated under normal pressure; however, it can also be heated under reduced pressure (for example, under a pressure of 101 to 1 kPa). This makes it possible to remove moisture remaining in the mixed liquid, accelerate the progress of the reaction, and suppress the coloration of the composition. Further, the reduced pressure makes it possible to reduce the acid value of the composition. It is noted that in the present specification, normal pressure means a pressure of 101.325 kPa ± 20.000 kPa. From the viewpoint of making it easy to obtain the desired compound (A1-1), it is preferable that the heating of the mixed liquid includes carrying out heating under a pressure of 101.325 kPa ± 20.000 kPa (first heating) and then carrying out heating under a reduced pressure of 20.000 kPa or less (second heating), it is more preferable that the temperature of the first heating is the temperature T1 that satisfies the relationship of Expression (α) and the temperature of the second heating is the temperature T2 that satisfies the relationship of Expression (β), and it still more preferable that the temperature of the first heating (temperature T1) and the temperature of the second heating (temperature T2) satisfy the relationship of Expression (γ).

The heating of the mixed liquid can also be carried out while nitrogen is being introduced. This makes it possible to remove moisture from the mixed liquid and accelerate the progress of the reaction. Further, the nitrogen purging makes it possible to suppress the coloration of the composition. From the viewpoint of making it easy to obtain the desired compound (A1-1), the nitrogen flow rate of the mixed liquid is preferably 2 to 1,000 ml/min/scale (kg), and more preferably 5 to 200 ml/min/scale (kg).

In the above production method, the obtained reaction mixture may be subjected to post-treatment such as distillation or drying. In addition, in the above production method, after obtaining the compound (A1-1) or a composition containing the compound (A1-1), a component such as the polyhydric alcohol (E) and/or the oxetane compound (F) may be added to carry out the preparation.

<Urethane resin and method for producing same>

The urethane resin is a polycondensate of a polyol component and a polyisocyanate component or a crosslinked product thereof. Here, the crosslinked product means a product in which polycondensates are crosslinked with each other by a chain extender or the like.

(Polyol component)

The polyol component contains the above-described compound (A1-1). The polyol component may contain a polyol (a compound having two or more terminal hydroxyl groups) other than the compound (A1-1), or the oxetane compound (F) (a compound having one hydroxyl group). The polyol component may further contain, for example, polyols that can be contained in the above composition (the compound (A1-2), the compound (A1-3), the compound (A2-2), the compound (A2-3), the compound (A-3), the compound (A-4), the polyhydric alcohol (E), the diol (D), the oxetane compound (F), and the like). The content rate of these polyols may be the same as the content rate of the polyols in the composition (for example, the molar ratio ($C_{A1-1}/(C_{A1-1} + C_{A1-2} + C_{A1-3}) \times 100$), the molar ratio ($(C_{A2-2} + C_{A2-3})/(C_{A1-1} + C_{A1-2} + C_{A1-3})$), the molar ratio ($C_{A1-1}/C_T$), the molar ratio ($C_{A1-2}/C_T$), the molar ratio ($C_{A1-3}/C_T$), the molar ratio ($C_{A2-3}/C_T$), the molar ratio ($C_{A2-3}/(C_{A2-2} + C_{A2-3} + C_D) \times 100$), the molar ratio ($(C_{A2-2} + C_{A2-3})/(C_{A2-2} + C_{A2-3} + C_D) \times 100$), and the

molar ratio ($C_F/C_T \times 100$). In other words, the polyol component may contain a mixture of polyols excluding compounds other than the polyols from the above composition.

The polyol component may further contain a polyol having an acidic group. In this case, the urethane resin contains an acidic group. The urethane resin having an acidic group is suitably used in an aqueous urethane resin dispersion. The aqueous urethane resin dispersion will be described later.

The acidic group is, for example, a functional group (hydrophilic group) that is capable of imparting hydrophilicity to an isocyanate group-terminated prepolymer obtained by a reaction with an isocyanate. Examples of such a polyol having an acidic group include dimethylol alkanoic acids such as dimethylol propionic acid (DMPA), dimethylol butanoic acid (DMBA), dimethylol pentanoic acid, and dimethylol nonanoic acid.

(Polyisocyanate component)

Examples of the polyisocyanate component include an aromatic polyisocyanate, an aliphatic-aromatic polyisocyanate, an aliphatic polyisocyanate, and an alicyclic polyisocyanate. In addition, modified polyisocyanates, which are modified forms of these, can also be used. Examples of the modified polyisocyanate include an isocyanurate-modified polyisocyanate (an isocyanate trimer), an allophanate-modified polyisocyanate, a uretdione-modified polyisocyanate, a urethane-modified polyisocyanate, a biuret-modified polyisocyanate, a uretonimine-modified polyisocyanate, and an acyl urea-modified polyisocyanate. These can be used alone, or two or more kinds thereof may be used in combination.

Examples of the aromatic isocyanate include 2,4-tolylene diisocyanate, 2,6-tolylene diisocyanate, a mixture of 2,4-tolylene diisocyanate and 2,6-tolylene diisocyanate, 4,4'-diphenylmethane diisocyanate, 2,4'-diphenylmethane diisocyanate, a mixture of 2,4'-diphenylmethane diisocyanate and 4,4'-diphenylmethane diisocyanate, m-xylylene diisocyanate, p-xylylene diisocyanate, 4,4'-diphenyl ether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate, and 3,3'-dimethoxydiphenyl-4,4'-diisocyanate.

Examples of the aliphatic-aromatic isocyanate include 1,3-xylylene diisocyanate, 1,4-xylylene diisocyanate, and a mixture thereof; 1,3-bis(1-isocyanato-1-methylethyl)benzene, 1,4-bis(1-isocyanato-1-methylethyl)benzene, and a mixture thereof; and ω,ω'-diisocyanato-1,4-diethylbenzene.

Examples of the aliphatic isocyanate include hexamethylene diisocyanate, pentamethylene diisocyanate, tetramethylene diisocyanate, 2-methylpentane-1,5-diisocyanate, 3-methylpentane-1,5-diisocyanate, lysine diisocyanate, trioxyethylene diisocyanate, ethylene diisocyanate, trimethylene diisocyanate, octamethylene diisocyanate, nonamethylene diisocyanate, 2,2'-dimethylpentane diisocyanate, 2,2,4-trimethylhexane diisocyanate, decamethylene diisocyanate, butene diisocyanate, 1,3-butadiene-1,4-diisocyanate, 2,4,4-trimethylhexamethylene diisocyanate, 1,6,11-undecane triisocyanate, 1,3,6-hexamethylene triisocyanate, 1,8-diisocyanato-4-(isocyanatomethyl)octane, 2,5,7-trimethyl-1,8-diisocyanato-5-(isocyanatomethyl)octane, bis(isocyanatoethyl)carbonate, bis(isocyanatoethyl)ether, 1,4-butylene glycol dipropyl ether-α,α'-diisocyanate, lysine diisocyanatomethyl ester, 2-isocyanatoethyl-2,6-diisocyanatohexanoate, and 2-isocyanatopropyl-2,6-diisocyanatohexanoate.

Examples of the alicyclic isocyanate include isophorone diisocyanate, cyclohexyl diisocyanate, bis(isocyanatomethyl)cyclohexane, dicyclohexylmethane diisocyanate, methylcyclohexyl diisocyanate, dicyclohexyldimethylmethane diisocyanate, 2,2'-dimethyldicyclohexylmethane diisocyanate, bis(4-isocyanato-n-butylidene)pentaerythritol, a hydrogenated dimer acid diisocyanate, 2-isocyanatomethyl-3-(3-isocyanatopropyl)-5-(isocyanatomethyl)bicycl o[2.2.1]heptane, 2-(isocyanatomethyl)-3-(3-isocyanatopropyl)-6-(isocyanatomethyl)-bicy clo[2.2.1]heptane, 2-(isocyanatomethyl)-2-(3-isocyanatopropyl)-5-(isocyanatomethyl)bicy clo[2.2.1]heptane, 2-(isocyanatomethyl)-2-(3-isocyanatopropyl)-6-(isocyanatomethyl)bicy clo[2.2.1]heptane, 2-(isocyanatomethyl)-3-(3-isocyanatopropyl)-5-(2-isocyanatoethyl)bicy clo[2.2.1]heptane, 2-(isocyanatomethyl)-3-(3-isocyanatopropyl)-6-(2-isocyanatoethyl)bicy clo[2.2.1]heptane, 2-(isocyanatomethyl)-2-(3-isocyanatopropyl)-5-(2-isocyanatoethyl)bicy clo[2.2.1]heptane, 2-(isocyanatomethyl)-2-(3-isocyanatopropyl)-6-(2-isocyanatoethyl)bicy clo[2.2.1]heptane, 2,5-bis(isocyanatomethyl)bicyclo[2.2.1]heptane, a hydrogenated diphenylmethane diisocyanate, norbornane diisocyanate, a hydrogenated tolylene diisocyanate, a hydrogenated xylene diisocyanate, and a hydrogenated tetramethylxylene diisocyanate.

(Blending ratio of polyol component/polyisocyanate component)

Regarding the blending ratio between the polyol component and the polyisocyanate component, a molar ratio of active hydrogen in the polyol component to the isocyanate group in the polyisocyanate component is preferably 9:1 to 1:9, and more preferably 6:4 to 4:6. In a case where the blending ratio is within this range, the urethane resin tends to have more excellent performance.

(Chain extender)

The chain extender can be appropriately selected depending on the intended purpose, the use application and the like. Examples of the chain extender include water; polyols having a low molecular weight such as ethylene glycol, 1,3-propanediol, 1,4-butanediol, 1,5-pentanediol, 1,6-hexanediol, neopentyl glycol, 1,10-decanediol, 1,1-cyclohexanedimethanol, 1,4-cyclohexanedimethanol, tricyclodecanedimethanol, xylylene glycol, bis(p-hydroxy)diphenyl, bis(p-hydroxyphenyl)propane, 2,2-bis[4-(2-hydroxyethoxy)phenyl]propane, bis[4-(2-hydroxyethoxy)phenyl]sulfone, and 1,1-bis[4-(2-hydroxyethoxy)phenyl]cyclohexane; polyols having a high molecular weight such as a polyester polyol, a polyesteramide polyol, a polyether polyol, a polyetherester polyol, a polycarbonate polyol, a polyolefin polyol; and polyamines such as ethylenediamine, isophoronediamine, 2-methyl-1,5-pentanediamine, aminoethylethanolamine, diethylenetriamine, triethylenetetramine, tetraethylenepentamine, and pentaethylenehexamine. The blending amount of the chain extender (the proportion of the structure derived from the chain extender contained in the urethane resin) may be 0.1 to 50 parts by mass with respect to 100 parts by mass of the total amount of the polyol component and the polyisocyanate component. It is noted that in a case where the chain extender is a polyol, the content of the polyol is calculated assuming that the polyol is included in both the chain extender and the polyol component.

The urethane resin can be obtained by subjecting a polyol component, a polyisocyanate component, and a chain extender as necessary to a reaction (urethanization reaction). The urethanization reaction may be carried out at room temperature (for example, 25°C) or may be carried out under heating (for example, 40°C to 200°C).

During the urethanization reaction, a catalyst (urethanization catalyst) can be added for the intended purposes of shortening the reaction time, improving the reaction rate, and the like. Examples of the catalyst include tertiary amine catalysts such as triethylamine, triethylenediamine, tetramethylethylenediamine, tetramethylpropylenediamine, and tetramethylhexamethylenediamine, and metal catalysts represented by tin-based catalysts such as stannous octoate, stannous oleate, and dibutyltin dilaurate, and the like. These can be used alone, or two or more kinds thereof may be used in combination. Among these, dibutyltin dilaurate is preferably used. The using amount of the catalyst may be 0.001 to 100 parts by mass with respect to 100 parts by mass of the total amount of the polyol component and the polyisocyanate component.

In a case where a catalyst is used in the urethanization reaction, it is preferable to use a phosphorus compound for treating the catalyst. The phosphorus compound is not particularly limited. However, examples thereof include phosphate triesters such as trimethyl phosphate, triethyl phosphate, tributyl phosphate, di-2-ethylhexyl phosphate, triphenyl phosphate, tricresyl phosphate, and cresyl diphenyl phosphate; acidic phosphate esters such as methyl acid phosphate, ethyl acid phosphate, propyl acid phosphate, isopropyl acid phosphate, butyl acid phosphate, lauryl acid phosphate, stearyl acid phosphate, 2-ethylhexyl acid phosphate, isodecyl acid phosphate, butoxyethyl acid phosphate, oleyl acid phosphate, tetracosyl acid phosphate, acetylene glycol acid phosphate, 2-hydroxyethyl methacrylate acid phosphate, dibutyl phosphate, monobutyl phosphate, monoisodecyl phosphate, and bis(2-ethylhexyl) phosphate; phosphite esters such as triphenyl phosphite, trisnonylphenyl phosphite, tricresyl phosphite, triethyl phosphite, tris(2-ethylhexyl)phosphite, tridecyl phosphite, trilauryl phosphite, tris(tridecyl)phosphite, trioleyl phosphite, diphenyl mono(2-ethylhexyl)phosphite, diphenyl monodecyl phosphite, diphenyl (monodecyl)phosphite, trilauryl phosphite, diethyl hydrogen phosphite, bis(2-ethylhexyl)hydrogen phosphite, dilauryl hydrogen phosphite, dioleyl hydrogen phosphite, diphenyl hydrogen phosphite, tetraphenyl dipropylene glycol diphosphite, bis(decyl)pentaerythritol diphosphite, tristearyl phosphite, distearyl pentaerythritol diphosphite, and tris(2,4-di-tert-butylphenyl)phosphite; and phosphoric acid, phosphorous acid, and hypophosphorous acid. These can be used alone, or two or more kinds thereof may be used in combination. Among these, an acidic phosphate ester is preferable, and 2-ethylhexyl acid phosphate is more preferable. The using amount of the phosphorus compound may be 10 to 2,000 parts by mass with respect to 100 parts by mass of the catalyst.

The urethanization reaction can be carried out in the presence of a solvent. As the solvent, the following substances can be used: esters such as ethyl acetate, butyl acetate, propyl acetate, γ-butyrolactone, δ-valerolactone, and ε-caprolactone; amides such as dimethylformamide, diethylformamide, and dimethylacetamide; sulfoxides such as dimethyl sulfoxide; ethers such as tetrahydrofuran, dioxane, and 2-ethoxyethanol; ketones such as methyl ethyl ketone, methyl isobutyl ketone, and cyclohexanone; and aromatic hydrocarbons such as benzene and toluene.

The urethane resin described above has a good elongation rate and good texture, excellent durability, and furthermore, good breaking strength in some cases. Therefore, the urethane resin can be suitably used for synthetic leather, artificial leather, coating agents, and the like.

<Coating agent>

A coating agent according to the present embodiment contains the above-described urethane resin. The specific aspect of the urethane resin may be as described above.

One example of use as a coating agent includes an in-mold coating method that applies reaction injection molding (RIM). Specifically, it is a method of molding a plastic base material in an injection molding die and then forming a

urethane coating film on the surface of the molded product in the side of the die. With this method, the internal volume of the mold is constant, and not only the density, thickness, and hardness of the urethane coating film are stable, but also the unevenness of the die surface can be faithfully reproduced, which makes it possible to obtain an appearance having high design quality.

<Aqueous urethane resin dispersion>

The aqueous urethane resin dispersion contains an aqueous medium and a urethane resin or a neutralized product thereof, which is dispersed in the aqueous medium. The urethane resin is a resin having an acidic group among the urethane resins described above (a resin in which a polyol component includes a polyol having an acidic group).

As the aqueous medium, in addition to water, a solution or the like, which contains an emulsifying agent, a dispersant, or the like, can be used. The aqueous medium preferably contains water and more preferably consists of water alone.

In a case where the aqueous urethane resin dispersion contains a neutralized product of a urethane resin, the acidic group contained in the urethane resin may be neutralized by a neutralizing agent. Examples of the neutralizing agent include organic amines such as ammonia, ethylamine, trimethylamine, triethylamine, triisopropylamine, tributylamine, triethanolamine, N-methyldiethanolamine, N-phenyldiethanolamine, monoethanolamine, dimethylethanolamine, diethylethanolamine, morpholine, N-methylmorpholine, 2-amino-2-ethyl-1-propanol, and a higher alkyl-modified morpholine, alkali metals such as lithium, potassium, and sodium, and inorganic alkalis such as sodium hydroxide and potassium hydroxide. From the viewpoint of improving the durability, smoothness, and the like of the coating film, a neutralizing agent having high volatility such as ammonia, trimethylamine, or triethylamine, which is easily dissociated by heating, is preferably used. These neutralizing agents can be used alone, or two or more kinds thereof may be used in combination.

In producing the aqueous urethane resin dispersion, an anionic polar group-containing compound can also be used. Examples of the anionic polar group-containing compound include those consisting of an organic acid having one or more active hydrogens and a neutralizing agent. Examples of the organic acid include a carboxylate, a sulfonate, a phosphate, a phosphonate, a phosphinate, and a thiosulfonate. These anionic polar groups contained in organic acids may be introduced alone or may be associated with a metal ion as in the case of a chelate.

In producing the aqueous urethane resin dispersion, a cationic polar group-containing compound can also be used. The cationic polar group-containing compound consists of, for example, a tertiary amine having one or more active hydrogens and one substance selected from the group consisting of a neutralizing agent for an inorganic acid, a neutralizing agent for an organic acid, and a quaternizing agent. In addition, as the cationic polar group-containing compound, a cationic compound such as a primary amine salt, a secondary amine salt, a tertiary amine salt, or a pyridinium salt can also be used.

Examples of tertiary amine having one or more active hydrogens include N,N-dimethylethanolamine, N,N-diethylethanolamine, N,N-dipropylethanolamine, N,N-diphenylethanolamine, N-methyl-N-ethylethanolamine, N-methyl-N-phenylethanolamine, N,N-dimethylpropanolamine, N-methyl-N-ethylpropanolamine, N-methyldiethanolamine, N-ethyldiethanolamine, N-methyldipropanolamine, N-phenyldiethanolamine, N-phenyldipropanolamine, N-hydroxyethyl-N-hydroxypropyl-methylamine, N,N'-dihydroxyethylpiperazine, triethanolamine, trisisopropanolamine, N-methyl-bis-(3-aminopropyl)-amine, and N-methyl-bis-(2-aminopropyl)-amine. In addition, it is also possible to use those in which an alkylene oxide is added to ammonia, a primary amine such as methylamine, or a secondary amine such as dimethylamine.

Examples of the inorganic acid and the organic acid include hydrochloric acid, acetic acid, lactic acid, cyanoacetic acid, phosphoric acid, and sulfuric acid.

Examples of the quaternizing agent include dimethyl sulfate, benzyl chloride, bromoacetamide, and chloroacetamide. In addition, it is also possible to use alkyl halides such as ethyl bromide, propyl bromide, and butyl bromide.

The aqueous urethane resin dispersion can be produced, for example, by sequentially carrying out a step of reacting a polyol component including a polyol having an acidic group with a polyisocyanate component in the presence of a solvent or in the absence of a solvent, thereby forming a urethane prepolymer, a step of neutralizing an acidic group in the prepolymer with a neutralizing agent, a step of dispersing the neutralized prepolymer in an aqueous medium, and a step of reacting the prepolymer dispersed in the aqueous medium, with a chain extender. It is noted that in each of the steps, a catalyst can be used as necessary to promote the reaction and control the amount of by-products.

A film formed from the aqueous urethane resin dispersion described above (for example, a film formed by coating the aqueous urethane resin dispersion on a base material) is excellent in adherence, flexibility, touch, and the like. Therefore, the aqueous urethane resin dispersion can be suitably used for artificial leather, synthetic leather, and coating agents.

<Two-pack composition set>

The polyol component and the polyisocyanate component for forming the urethane resin may be subjected to

storing, transporting, and the like in separate containers as a two-pack composition set. The two-pack composition set contains a first liquid containing at least the polyol component and a second liquid containing at least the polyisocyanate component. In a case where a chain extender, catalyst, solvent, and the like are used, these may be contained in the first liquid and/or the second liquid, or may be blended separately from the first liquid and the second liquid. The above-described two-pack composition set can be suitably used, for example, as a coating agent, and can also be suitably used in the production of artificial leather, synthetic leather, and the like. In a case where the above-described two-pack composition set is used as a coating agent, a coating film (for example, a cured film containing a urethane resin) can be formed, for example, by mixing the first liquid with the second liquid and then applying the mixed liquid onto a base material and, followed by optional heating.

As one example of the case where the two-pack composition set is used as a coating agent, the two-pack composition set can be also suitably used, as a resin composition that does not use an organic solvent, in the production of artificial leather, synthetic leather, and the like, whereby a polyurethane resin that is excellent in adherence, flexibility, touch, and the like is formed.

The composition for forming the urethane resin, which contains the above-described polyol component and the above-described polyisocyanate component, and the polyurethane resin composition containing the above-described urethane resin are preferably used as an aqueous polyurethane resin emulsion, a polyurethane resin synthesized in the absence of a solvent, or a precursor thereof. In addition, in a case where the aqueous polyurethane resin emulsion or the polyurethane resin synthesized in the absence of a solvent is cured, it is possible to obtain a molded body such as a coating film or film, which is tough, has a reduced 100% modulus (has good texture), and has a high softening temperature, where the molded body can be suitably used for the use application to leather such as artificial leather and synthetic leather, or as a surface treatment agent for leather. The 100% modulus is one of the indices that quantify the moisturized, elastic, and luxurious feeling in a case of touching synthetic leather, and in a case where the numerical value thereof is within a certain numerical value range, the above characteristics of the urethane resin are favorable.

<Use application>

The above-described composition, urethane resin, aqueous urethane resin dispersion, and coating agent according to the present embodiment can be used for a coating material composition that is suitably used as a clear coating material for automobile exteriors and a coating material for automobile interiors. In addition, the composition, urethane resin, aqueous urethane resin dispersion, and coating agent according to the present embodiment can be preferably used for the surface treatment of home appliances, OA (office automation) products, and leather, the surface treatment of synthetic leather, and the like.

## Examples

Hereinafter, Examples of the present invention will be described; however, the present invention is not limited to these Examples.

[Synthesis Example 1: Synthesis 1 of polycarbonate polyol (B)]

In a 2 L two-neck glass reactor equipped with a stirrer, a thermometer, a heating device, and a cooler, 826 g of 1,6-hexanediol, 787 g of diethyl carbonate, and 0.05 g of tetrabutyl titanate were mixed and reacted at 100°C to 190°C for 8 hours under normal pressure while removing low boiling point components. Further, the reaction temperature was set to 190°C, the pressure inside the flask was reduced to 1 kPa, and then the reaction was further carried out for 8 hours to obtain a polycarbonate polyol (PC-1).

[Synthesis Example 2: Synthesis 2 of polycarbonate polyol (B)]

In a 1 L two-neck glass reactor equipped with a stirrer, a thermometer, a heating device, and a cooler, 272.7 g of trimethylolpropane, 266.2 g of 1,6-hexanediol, 461.2 g of diethyl carbonate, and 0.05 g of potassium hydrogen carbonate were mixed and reacted at 100°C to 150°C for 8 hours under normal pressure while removing low boiling point components. Further, the reaction temperature was set to 150°C, the pressure inside the flask was reduced to 1 kPa, and then the reaction was further carried out for 8 hours to obtain a polycarbonate polyol (PC-2).

[Synthesis Example 3: Synthesis 3 of polycarbonate polyol (B)]

In a 2 L two-neck glass reactor equipped with a stirrer, a thermometer, a heating device, and a cooler, 174.1 g of 1,4-butanediol, 225.9 g of diethyl carbonate, and 0.02 g of tetrabutyl titanate were mixed and reacted at 100°C to 190°C for

8 hours under normal pressure while removing low boiling point components. Further, the reaction temperature was set to 190°C, the pressure inside the flask was reduced to 1 kPa, and then the reaction was further carried out for 8 hours to obtain a polycarbonate polyol (PC-3).

[Synthesis Example 4: Synthesis 4 of polycarbonate polyol (B)]

In a 2 L two-neck glass reactor equipped with a stirrer, a thermometer, a heating device, and a cooler, 202.6 g of 3-methyl-1,5-pentanediol, 197.5 g of diethyl carbonate, and 0.02 g of tetrabutyl titanate were mixed and reacted at 100°C to 190°C for 8 hours under normal pressure while removing low boiling point components. Further, the reaction temperature was set to 190°C, the pressure inside the flask was reduced to 1 kPa, and then the reaction was further carried out for 8 hours to obtain a polycarbonate polyol (PC-4).

<Examples>

(Example 1)

322 g of N-980N, 140 g of PLACCEL 220, 13 g of PLACCEL 305, 24.6 g of 1,6-hexanediol (HG), and 0.05 g of lithium acetylacetonate were mixed in a 0.5 L four-neck glass reactor (a reactor A) equipped with a stirrer, a thermometer, a heating device, and a cooler. The resultant mixture was heated at 180°C to 200°C (initial: 180°C, final: 200°C) under normal pressure and reacted for 5 hours at a flow rate of 50 ml/min in a nitrogen atmosphere. Further, the pressure inside the flask was reduced to 26.7 kPa at a reaction temperature of 200°C, and the reaction was further carried out for 5 hours to obtain a composition (PCP-1) containing the polycarbonate polyol represented by Formula (A1-1).

(Example 2)

A composition (PCP-2) containing the polycarbonate polyol represented by Formula (A1-1) was obtained in the same manner as in Example 1, except that a mixed liquid obtained by mixing 319 g of N-980N, 111 g of PLACCEL 220, 51 g of PLACCEL 305, 18.3 g of 1,6-hexanediol, and 0.05 g of lithium acetylacetonate was used in the reactor A.

(Example 3)

A composition (PCP-3) containing the polycarbonate polyol represented by Formula (A1-1) was obtained in the same manner as in Example 1, except that a mixed liquid obtained by mixing 153 g of the polycarbonate polyol (PC-1) obtained in Synthesis Example 1, 259 g of N-980N, 66 g of PLACCEL 305, 21.8 g of trimethylolpropane (TMP), and 0.05 g of lithium acetylacetonate was used in the reactor A.

(Example 4)

A composition (PCP-4) containing the polycarbonate polyol represented by Formula (A1-1) was obtained in the same manner as in Example 1, except that a mixed liquid obtained by mixing 3.0 g of the polycarbonate polyol (PC-1) obtained in Synthesis Example 1, 359 g of N-980N, 132 g of PLACCEL 305, 5.6 g of trimethylolpropane, and 0.05 g of lithium acetylacetonate was used in the reactor A.

(Example 5)

A composition (PCP-5) containing the polycarbonate polyol represented by Formula (A1-1) was obtained in the same manner as in Example 1, except that a mixed liquid obtained by mixing 300 g of the polycarbonate polyol (PC-1) obtained in Synthesis Example 1, 200 g of PLACCEL 305, and 0.05 g of lithium acetylacetonate was used in the reactor A.

(Example 6)

A composition (PCP-6) containing the polycarbonate polyol represented by Formula (A1-1) was obtained in the same manner as in Example 1, except that a mixed liquid obtained by mixing 212 g of N-980N, 149 g of PLACCEL 220, 134 g of PLACCEL 305, 5.3 g of trimethylolpropane, and 0.05 g of lithium acetylacetonate was used in the reactor A.

(Example 7)

A composition (PCP-7) containing the polycarbonate polyol represented by Formula (A1-1) was obtained in the

same manner as in Example 1, except that a mixed liquid obtained by mixing 112 g of N-980N, 249 g of PLACCEL 220, 134 g of PLACCEL 305, 5.3 g of trimethylolpropane, and 0.05 g of lithium acetylacetonate was used in the reactor A.

(Example 8)

A composition (PCP-8) containing the polycarbonate polyol represented by Formula (A1-1) was obtained in the same manner as in Example 1, except that a mixed liquid obtained by mixing 12 g of N-980N, 349 g of PLACCEL 220, 134 g of PLACCEL 305, 5.3 g of trimethylolpropane, and 0.05 g of lithium acetylacetonate was used in the reactor A.

(Example 9)

A composition (PCP-9) containing the polycarbonate polyol represented by Formula (A1-1) was obtained in the same manner as in Example 1, except that a mixed liquid obtained by mixing 348 g of the polycarbonate polyol (PC-1) obtained in Synthesis Example 1, 47 g of N-980N, 98 g of PLACCEL 210, 6.9 g of PLACCEL 305, and 0.05 g of lithium acetylacetonate was used in the reactor A.

(Example 10)

A composition (PCP-10) containing the polycarbonate polyol represented by Formula (A1-1) was obtained in the same manner as in Example 1, except that a mixed liquid obtained by mixing 450 g of N-980N, 50 g of PLACCEL 320, and 0.05 g of lithium acetylacetonate was used in the reactor A.

(Example 11)

A composition (PCP-11) containing the polycarbonate polyol represented by Formula (A1-1) was obtained in the same manner as in Example 1, except that a mixed liquid obtained by mixing 400 g of N-980N, 100 g of PLACCEL 320, and 0.05 g of lithium acetylacetonate was used in the reactor A.

(Example 12)

A composition (PCP-12) containing the polycarbonate polyol represented by Formula (A1-1) was obtained in the same manner as in Example 1, except that a mixed liquid obtained by mixing 1,356 g of the polycarbonate polyol (PC-1) obtained in Synthesis Example 1, 472 g of PLACCEL 210, 171 g of PLACCEL 305, and 0.20 g of lithium acetylacetonate in a 2 L four-neck glass reactor equipped with a stirrer, a thermometer, a heating device, and a cooler was used in the reactor A.

(Example 13)

A composition (PCP-13) containing the polycarbonate polyol represented by Formula (A1-1) was obtained in the same manner as in Example 1, except that a mixed liquid obtained by mixing 250 g of the polycarbonate polyol (PC-1) obtained in Synthesis Example 1, 250 g of PLACCEL 320, and 0.05 g of lithium acetylacetonate was used in the reactor A.

(Example 14)

A composition (PCP-14) containing the polycarbonate polyol represented by Formula (A1-1) was obtained in the same manner as in Example 1, except that a mixed liquid obtained by mixing 150 g of N-980N, 100 g of PLACCEL 220, 250 g of PLACCEL 320, and 0.05 g of lithium acetylacetonate was used in the reactor A.

(Example 15)

A composition (PCP-15) containing the polycarbonate polyol represented by Formula (A1-1) was obtained in the same manner as in Example 1, except that a mixed liquid obtained by mixing 50 g of N-980N, 200 g of PLACCEL 220, 250 g of PLACCEL 320, and 0.05 g of lithium acetylacetonate was used in the reactor A.

(Example 16)

A composition (PCP-16) containing the polycarbonate polyol represented by Formula (A1-1) was obtained in the same manner as in Example 1, except that a mixed liquid obtained by mixing 250 g of N-980N, 250 g of PLACCEL 320, and

0.05 g of lithium acetylacetonate was used in the reactor A.

(Example 17)

90 g of the composition (PCP-13) obtained in Example 13 and 10 g of trimethylolpropane were mixed at 80°C in the reactor A to obtain a composition (PCP-17) containing the polycarbonate polyol represented by Formula (A1-1).

(Example 18)

A composition (PCP-18) containing the polycarbonate polyol represented by Formula (A1-1) was obtained in the same manner as in Example 1, except that a mixed liquid obtained by mixing 305 g of the polycarbonate polyol (PC-1) obtained in Synthesis Example 1, 45 g of the polycarbonate polyol (PC-2) obtained in Synthesis Example 2, 103 g of PLACCEL 220, 47 g of PLACCEL 210, 0.05 g of lithium acetylacetonate was used in the reactor A.

(Example 19)

A composition (PCP-19) containing the polycarbonate polyol represented by Formula (A1-1) was obtained in the same manner as in Example 1, except that a mixed liquid obtained by mixing 289 g of the polycarbonate polyol (PC-1) obtained in Synthesis Example 1, 126 g of the polycarbonate polyol (PC-2) obtained in Synthesis Example 2, 85 g of PLACCEL 220, 0.05 g of lithium acetylacetonate was used in the reactor A.

(Example 20)

A composition (PCP-20) containing the polycarbonate polyol represented by Formula (A1-1) was obtained in the same manner as in Example 1, except that a mixed liquid obtained by mixing 318 g of N-980N, 150 g of N-135, 32 g of trimethylolpropane, and 0.05 g of lithium acetylacetonate was used in the reactor A.

(Example 21)

A composition (PCP-21) containing the polycarbonate polyol represented by Formula (A1-1) was obtained in the same manner as in Example 1, except that a mixed liquid obtained by mixing 250 g of the polycarbonate polyol (PC-3) obtained in Synthesis Example 3, 250 g of PLACCEL 320, and 0.05 g of lithium acetylacetonate was used in the reactor A.

(Example 22)

A composition (PCP-22) containing the polycarbonate polyol represented by Formula (A1-1) was obtained in the same manner as in Example 1, except that a mixed liquid obtained by mixing 250 g of the polycarbonate polyol (PC-4) obtained in Synthesis Example 4, 250 g of PLACCEL 320, and 0.05 g of lithium acetylacetonate was used in the reactor A.

(Example 23)

A composition (PCP-23) containing the polycarbonate polyol represented by Formula (A1-1) was obtained in the same manner as in Example 1, except that a mixed liquid obtained by mixing 250 g of N-980N, 250 g of PLACCEL 320, 14.5 g of 3-ethyl-3-hydroxymethyloxetane, and 0.05 g of lithium acetylacetonate was used in the reactor A.

(Comparative Example 1)

50 g of N-982R and 50 g of trimethylolpropane were mixed at 80°C to obtain a composition (PCD-1) containing a polycarbonate diol.

(Comparative Example 2)

N-982R was heated to 80°C to obtain a composition (PCD-2) containing a polycarbonate diol.

(Comparative Example 3)

N-980R was heated to 80°C to obtain a composition (PCD-3) containing a polycarbonate diol.

(Comparative Example 4)

300 g of the polycarbonate polyol (PC-1) obtained in Synthesis Example 1, 200 g of PLACCEL 305, and 0.05 g of tetrabutyl titanate were mixed in the reactor A. The resultant mixture was heated at 190°C under normal pressure and reacted for 5 hours to obtain a composition (PCP-24) containing a polycarbonate polyol.

(Comparative Example 5)

A composition (PCP-25) containing a polycarbonate polyol was obtained in the same manner as in Comparative Example 4, except that a mixed liquid obtained by mixing 300 g of the polycarbonate polyol (PC-1) obtained in Synthesis Example 1, 200 g of PLACCEL 305, and 0.05 g of barium acetate was used in the reactor A.

(Analysis and evaluation)

[Measurement of number average molecular weight]

The polycarbonate polyol obtained above and the composition obtained above were subjected to GPC analysis under the following conditions to measure the number average molecular weight of the polycarbonate polyol and the number average molecular weight of the composition. The results are shown in Table 1, Table 3, Table 5, and Table 7.

- Conditions -

(1) Measuring instrument: HLC-8420 (manufactured by Tosoh Corporation)
(2) Column: TSKgel (manufactured by Tosoh Corporation)

· G3000H-XL

· G3000H-XL

· G2000H-XL

· G2000H-XL

(3) Mobile phase: tetrahydrofuran (THF)
(4) Detector: refractive index (RI) detector (an accessory for HLC-8420)
(5) Temperature: 40°C
(6) Flow rate: 1.000 ml/min
(7) Calibration curve: A calibration curve was obtained using the following commercial products (all of which are difunctional polyoxypropylene polyols manufactured by Sanyo Chemical Industries, Ltd.).

· "SANNIX PP-200" (number average molecular weight = 200, average number of functional groups: 2)
· "SANNIX PP-400" (number average molecular weight = 400, average number of functional groups: 2)
· "SANNIX PP-1000" (number average molecular weight = 1,000, average number of functional groups: 2)
· "SANNIX PP-2000" (number average molecular weight = 2,000, average number of functional groups: 2)
· "SANNIX PP-3000" (number average molecular weight = 3,200, average number of functional groups: 2)
· "SANNIX PP-4000" (number average molecular weight = 4,160, average number of functional groups: 2)

(8) Approximate expression for calibration curve: Cubic equation
(9) Sample solution concentration: 0.5% by mass in THF solution

[Measurement of hydroxyl group value]

The hydroxyl group value of the polycarbonate polyol obtained above and the hydroxyl group value of the composition obtained above were measured according to a method using an acetylation reagent in accordance with JIS K1557-1. The results are shown in Table 1, Table 3, Table 5, and Table 7.

[Measurement of acid value]

The acid value of the composition obtained above was measured according to a method using an acetylation reagent in accordance with JIS K1557-5. The results are shown in Table 3, Table 5, and Table 7.

[State evaluation]

The composition obtained above was used as a sample, and the sample was heated at 80°C for 1 hour and then allowed to stand at 25°C for 3 days. The state of the sample after being allowed to stand was visually checked, and then it was determined to be liquid in a case where even a slight degree of fluidity was exhibited at the above temperature, and it was determined to be solid in a case where no fluidity was exhibited. The results are shown in Table 3, Table 5, and Table 7.

[Composition analysis]

The composition was analyzed by the following procedure.

First, the composition (sample) obtained above was dissolved in deuterated chloroform (manufactured by FUJIFILM Wako Pure Chemical Corporation) to obtain a solution. Tetramethylsilane (TMS) was added to the solution as a chemical shift standard to obtain a test solution. The obtained test solution was subjected to a $^{1}$H-NMR measurement using JNM-ECX400 manufactured by JEOL Ltd., and a $^{1}$H-NMR spectrum was obtained with the TMS signal being set to 0 ppm. For reference, the $^{1}$H-NMR spectrum of the composition obtained in Example 5 is shown in FIG. 1 and FIG. 2. It is noted that the measurement was carried out under the following conditions.

- Conditions -

· Resonance frequency: 400 MHz
· Pulse width: 45 degrees
· Waiting time: 5 seconds
· Number of times of integration: 64
· Sample solution concentration (TMS-containing deuterated chloroform): 3% by mass

Next, the integral value $\Delta_{S1-1}$ of the signal (S1-1) of the methylene located next to the hydroxy group contained in the group represented by Formula (a1-1), the integral value $\Delta_{S1-2}$ of the signal (S1-2) of the methylene located next to the hydroxy group contained in the group represented by Formula (a1-2), the integral value $\Delta_{S1-3}$ of the signal (S1-3) of the methylene located next to the hydroxy group contained in the group represented by Formula (a1-3), the integral value $\Delta_{S2-2}$ of the signal (S2-2) of the methylene located next to the hydroxy group contained in the group represented by Formula (a2-2), the integral value $\Delta_{S2-3}$ of the signal (S2-3) of the methylene located next to the hydroxy group contained in the group represented by Formula (a2-3), the integral value $\Delta_{Sd}$ of the signal (Sd) of the methylene located next to the hydroxy group contained in the group represented by Formula (d), the integral value $\Delta_{Se}$ of the signal (Se) of the methylene located next to the hydroxy group contained in the group represented by Formula (e), and the integral value $\Delta_{Sf}$ of the signal (Sf) of the methylene located next to the oxygen atom of the oxetane group contained in the group represented by Formula (f) were determined from the $^{1}$H-NMR spectrum obtained above. In addition, in a case where $R^1$ in the group represented by Formula (I) is a methyl group or an ethyl group, the integrated value of the terminal methyl signal was determined, and the determined integrated value was used as the integrated value $\Delta_{SI}$ of the signal (SI).

Specifically, a signal in a range of 3.435 ppm or more and 3.475 ppm or less was defined as the signal (S1-1), a signal in a range of 3.475 ppm or more and 3.520 ppm or less was defined as the signal (S1-2), a signal in a range of 3.400 ppm or more and 3.435 ppm or less was defined as the signal (S1-3), a signal in a range of 3.595 ppm or more and 3.618 ppm or less was defined as the signal (S2-2), a signal in a range of 3.550 ppm or more and 3.595 ppm or less was defined as the signal (S2-3), a signal in a range of 3.618 ppm or more and 3.710 ppm or less was defined as the signal (Sd), a signal in a range of 3.710 ppm or more and 3.760 ppm or less was defined as the signal (Se), a signal in a range of 4.390 ppm or more and 4.500 ppm or less was defined as the signal (Sf), a signal in a range of 0.700 ppm or more and 1.130 ppm or less was defined as the signal (SI) in a case where $R^1$ of the group represented by Formula (I) is a methyl group (in a case where the polyhydric alcohol (E) is trimethylolethane), and a signal in a range of 0.700 ppm or more and 1.000 ppm or less was defined as the signal (SI) in a case where $R^1$ of the group represented by Formula (I) is an ethyl group (in a case where the polyhydric alcohol (E) is trimethylolpropane).

It is noted that the baseline involved in the measurement of the integrated value was set to a straight line that was obtained by comparing spectral intensities in the specified spectral range and drawing a horizontal line with the lowest

spectral intensity as the reference. In general, the signal (S1-1), the signal (S1-2), the signal (S2-2), and the signal (Se) show a single peak; however, a trace amount of moisture may affect the peak, whereby the peak is split. In a case of being detected as a split peak, they deviate from the above integration range, and thus the accurate $C_{A1-1}$, $C_{A1-2}$, $C_{A2-2}$, and $C_E$ are not obtained. Therefore, the integrated value determined from each signal adopts an integrated value in a case where the signal shows a single peak.

The molar ratio ($C_{A1-1}/(C_{A1-1} + C_{A1-2} + C_{A1-3}) \times 100$), the molar ratio ($(C_{A2-2} + C_{A2-3})/(C_{A1-1} + C_{A1-2} + C_{A1-3})$), the molar ratio ($C_{A1-1}/C_T$), the molar ratio ($C_{A1-2}/C_T$), the molar ratio ($C_{A1-3}/C_T$), the molar ratio ($C_{A2-3}/C_T$), the molar ratio ($C_{A2-3}/(C_{A2-2} + C_{A2-3} + C_D) \times 100$), the molar ratio ($(C_{A2-2} + C_{A2-3})/(C_{A2-2} + C_{A2-3} + C_D) \times 100$), and the molar ratio ($C_F/C_T \times 100$) were calculated from the obtained integrated values. The results are shown in Table 3, Table 5, and Table 7.

It is noted that in PCP-1 to PCP-23, the presence of the signal (S1-1) suggested the presence of the compound (A1-1). On the other hand, no signal (S1-1) was observed in PCD-1 to PCD-3 and PCP-24 and PCP-25.

In addition, in a case where the total number of moles of groups in which all three bonding sites in Formula (I) are bonding sites to a carbonyl group is denoted as $C_{A3}$, $C_T$ is equal to the sum of $C_{A1-1}$, $C_{A1-2}$, $C_{A1-3}$, $C_{A2-2}$, $C_{A2-3}$, $C_{A3}$, $C_E$, and $C_F$. In PCP-1 to PCP-19, based on the integrated values of the above signals (SI), (S1-1) to (S1-3), (S2-2) to (S2-3), (Se) and (Sf), it was confirmed that values obtained by subtracting $C_{A1-1}$, $C_{A1-2}$, $C_{A1-3}$, $C_{A2-2}$, $C_{A2-3}$, $C_E$, and $C_F$, from $C_T$ are positive, which suggested the presence of the compound (A-3).

[Table 1]

| | | Synthesis Example 1 | Synthesis Example 2 | Synthesis Example 3 | Synthesis Example 4 |
|---|---|---|---|---|---|
| | | PC-1 | PC-2 | PC-3 | PC-4 |
| Blend | 1,6-hexanediol | 826 | 266.2 | | |
| | 1,4-butanediol | | | 174.1 | |
| | 3-methyl-1,5-pentanediol | | | | 202.6 |
| | trimethylolpropane | | 272.7 | | |
| | diethyl carbonate | 787 | 461.2 | 225.9 | 197.5 |
| | tetrabutyl titanate | 0.05 | | 0.02 | 0.02 |
| | potassium hydrogen carbonate | | 0.05 | | |
| | Total | 1613 | 1000 | 400 | 400 |
| Composition | Number average molecular weight (g/mol) | 2540 | 710 | 942 | 1398 |
| | Hydroxyl group value (OHv) (mgKOH/g) | 37.4 | 395 | 131.6 | 74.3 |

[Table 2]

| | | | Example 1 | Example 2 | Example 3 | Example 4 | Example 5 | Example 6 | Example 7 | Example 8 | Example 9 |
|---|---|---|---|---|---|---|---|---|---|---|---|
| Composition | | | PCP -1 | PCP -2 | PCP -3 | PCP -4 | PCP -5 | PCP -6 | PCP -7 | PCP -8 | PCP -9 |
| Composition | Polycarbonate polyol (B) | PC-1 | | | 153 | 3 | 300 | | | | 348 |
| | | N-980N | 322 | 319 | 259 | 359 | | 212 | 112 | 12 | 47 |
| | | PC-2 | | | | | | | | | |
| | | PC-3 | | | | | | | | | |
| | | PC-4 | | | | | | | | | |
| | Polyester polyol (C) | PLACCEL 220 | 140 | 111 | | | | 149 | 249 | 349 | |
| | | PLACCEL 210 | | | | | | | | | 98 |
| | | N-135 | | | | | | | | | |
| | | PLACCEL 320 | | | | | | | | | |
| | | PLACCEL 305 | 13 | 51 | 66 | 132 | 200 | 134 | 134 | 134 | 6.9 |
| | Difunctional glycol (D) HG | | 24.6 | 18.3 | | | | | | | |
| | Polyhydric alcohol (E) TMP | | | | 21.8 | 5.6 | | 5.3 | 5.3 | 5.3 | |
| | Oxetane compound (F) 3-ethyl-3-hydroxymethyloxetane | | | | | | | | | | |
| | Composition | PCP-13 | | | | | | | | | |
| | | N-982R | | | | | | | | | |
| | | N-980R | | | | | | | | | |
| | Catalyst | Lithium acetylacetonate | 0.05 | 0.05 | 0.05 | 0.05 | 0.05 | 0.05 | 0.05 | 0.05 | 0.05 |
| | | Tetrabutyl titanate | | | | | | | | | |
| | | Barium acetate | | | | | | | | | |

[Table 3]

| | | | Example 1 | Example 2 | Example 3 | Example 4 | Example 5 | Example 6 | Example 7 | Example 8 | Example 9 |
|---|---|---|---|---|---|---|---|---|---|---|---|
| Composition | | | PCP -1 | PCP -2 | PCP -3 | PCP -4 | PCP -5 | PCP -6 | PCP -7 | PCP -8 | PCP -9 |
| Analysis evaluation | Hydroxyl group value of composition (KOHmg/g) | | 107.8 | 115.0 | 136.1 | 136.9 | 146.8 | 137.0 | 136.5 | 133.2 | 62.4 |
| | Acid value of composition (KOHmg/g) | | 0.01 | 0.02 | 0.02 | 0.03 | 0.05 | 0.04 | 0.04 | 0.04 | 0.01 |
| | Number average molecular weight (g/mol) | | 1130 | 1110 | 1100 | 1070 | 1040 | 1050 | 1030 | 1060 | 1690 |
| | State at 25°C | | Solid | Solid | Liquid | Liquid | Liquid | Liquid | Liquid | Solid | Liquid |
| | Composition analysis ¹H-NMR measurement | $C_{A1-1}/(C_{A1-1} + C_{A1-2} + C_{A1-3}) \times 100$ | 52.3 | 43.6 | 15.9 | 30.3 | 41.4 | 50.0 | 36.7 | 10.3 | 37.7 |
| | | CA2-2 + $C_{A2-3})/(C_{A1-1} + C_{A1-2} + C_{A1-3}$ | 0.248 | 0.510 | 0.581 | 0.614 | 0.691 | 0.506 | 0.587 | 0.732 | 0.384 |
| | | $C_{A1-1}/C_T$ | 0.290 | 0.220 | 0.060 | 0.110 | 0.160 | 0.205 | 0.130 | 0.037 | 0.260 |
| | | $C_{A1-2}/C_T$ | 0.170 | 0.170 | 0.305 | 0.230 | 0.195 | 0.095 | 0.029 | 0.001 | 0.235 |
| | | $C_{A1-3}/C_T$ | 0.095 | 0.115 | 0.0126 | 0.0227 | 0.0319 | 0.11 | 0.195 | 0.32 | 0.195 |
| | | $C_{A2-3}/C_T$ | 0.048 | 0.073 | 0.022 | 0.043 | 0.065 | 0.085 | 0.123 | 0.229 | 0.080 |
| | | $C_{A2-3}/(C_{A2-2} + C_{A2-3} + C_D) \times 100$ | 0.142 | 0.763 | 0.645 | 1.299 | 2.527 | 2.789 | 3.923 | 8.588 | 0.246 |
| | | $(C_{A2-2} + C_{A2-3})/(C_{A2-2} + C_{A2-3} + C_D) \times 100)$ | 0.410 | 2.710 | 6.438 | 6.799 | 10.398 | 6.809 | 6.645 | 9.807 | 0.876 |
| | | $C_F/C_T \times 100$ | 3.68 | 2.50 | 2.27 | 3.55 | 3.30 | 2.19 | 1.96 | 2.01 | 3.30 |

[Table 4]

| | | | Example 10 | Example 11 | Example 12 | Example 13 | Example 14 | Example 15 | Example 16 | Example 17 | Example 18 |
|---|---|---|---|---|---|---|---|---|---|---|---|
| Composition | | | PCP -10 | PCP -11 | PCP -12 | PCP -13 | PCP -14 | PCP -15 | PCP -16 | PCP 17 | PCP -18 |
| Composition | Polycarbonate polyol (B) | PC-1 | | | 1356 | 250 | | | | | 305 |
| | | N-980N | 450 | 400 | | | 150 | 50 | 250 | | |
| | | PC-2 | | | | | | | | | 45 |
| | | PC-3 | | | | | | | | | |
| | | PC-4 | | | | | | | | | |
| | Polyester polyol (C) | PLACCEL 220 | | | | | 100 | 200 | | | 103 |
| | | PLACCEL 210 | | | 472 | | | | | | 47 |
| | | N-135 | | | | | | | | | |
| | | PLACCEL 320 | 50 | 100 | | 250 | 250 | 250 | 250 | | |
| | | PLACCEL 305 | | | 171 | | | | | | |
| | Difunctional glycol (D) HG | | | | | | | | | | |
| | Polyhydric alcohol (E) TMP | | | | | | | | | 10 | |
| | Oxetane compound (F) 3-ethyl-3-hydroxymethyloxetane | | | | | | | | | | |
| | Composition | PCP-13 | | | | | | | | 90 | |
| | | N-982R | | | | | | | | | |
| | | N-980R | | | | | | | | | |
| | Catalyst | Lithium acetylacetonate | 0.05 | 0.05 | 0.20 | 0.05 | 0.05 | 0.05 | 0.05 | | 0.050 |
| | | Tetrabutyl titanate | | | | | | | | | |
| | | Barium acetate | | | | | | | | | |

[Table 5]

| | | | Example 10 | Example 11 | Example 12 | Example 13 | Example 14 | Example 15 | Example 16 | Example 17 | Example 18 |
|---|---|---|---|---|---|---|---|---|---|---|---|
| Composition | | | PCP -10 | PCP -11 | PCP -12 | PCP -13 | PCP -14 | PCP -15 | PCP -16 | PCP -17 | PCP -18 |
| Analysis evaluation | Hydroxyl group value of composition (KOHmg/g) | | 57.9 | 61.6 | 71.2 | 71.2 | 72.9 | 71.5 | 66.7 | 189.5 | 77.5 |
| | Acid value of composition (KOHmg/g) | | 0.01 | 0.01 | 0.01 | 0.02 | 0.02 | 0.03 | 0.03 | 0.02 | 0.01 |
| | Number average molecular weight (g/mol) | | 1850 | 1830 | 1780 | 1670 | 1610 | 1650 | 1750 | 640 | 1613 |
| | State at 25°C | | Solid | Solid | Solid | Liquid | Liquid | Solid | Liquid | Liquid | Solid |
| | Composition analysis $^1$H-NMR measurement | $C_{A1-1}/(C_{A1-1} + C_{A1-2} + C_{A1-3}) \times 100$ | 24.1 | 32.5 | 32.1 | 45.2 | 42.3 | 5.8 | 47.4 | 34.6 | 37.9 |
| | | CA2-2 + $C_{A2-3})/(C_{A1-1} + C_{A1-2} + C_{A1-3}$ | 0.254 | 0.233 | 0.214 | 0.298 | 0.321 | 0.315 | 0.276 | 0.148 | 0.411 |
| | | $C_{A1-1}/C_T$ | 0.130 | 0.130 | 0.160 | 0.190 | 0.165 | 0.021 | 0.180 | 0.026 | 0.115 |
| | | $C_{A1-2}/C_T$ | 0.220 | 0.150 | 0.260 | 0.135 | 0.055 | 0.003 | 0.145 | 0.027 | 0.170 |
| | | $C_{A1-3}/C_T$ | 0.19 | 0.12 | 0.0789 | 0.095 | 0.17 | 0.335 | 0.055 | 0.022 | 0.019 |
| | | $C_{A2-3}/C_T$ | 0.005 | 0.013 | 0.022 | 0.038 | 0.063 | 0.098 | 0.025 | 0.003 | 0.017 |
| | | $C_{A2-3}/(C_{A2-2} + C_{A2-3} + C_D) \times 100$ | 0.025 | 0.143 | 0.343 | 0.909 | 1.499 | 2.564 | 0.651 | 0.348 | 0.457 |
| | | $(C_{A2-2} + C_{A2-3})/(C_{A2-2} + C_{A2-3} + C_D) \times 100)$ | 0.759 | 1.006 | 1.689 | 3.030 | 2.998 | 2.975 | 2.734 | 1.173 | 3.305 |
| | | $C_F/C_T \times 100$ | 2.01 | 2.03 | 2.28 | 1.86 | 2.17 | 1.91 | 2.63 | 0.42 | 2.80 |

[Table 6]

| | | | Exampl e 19 | Exampl e 20 | Exampl e 21 | Exampl e 22 | Exampl e 23 | Comparativ e Example 1 | Comparativ e Example 2 | Comparativ e Example 3 | Comparativ e Example 4 | Comparativ e Example 5 |
|---|---|---|---|---|---|---|---|---|---|---|---|---|
| Composition | | | PCP -19 | PCP -20 | PCP -21 | PCP -22 | PCP -23 | PCD -1 | PCD -2 | PCD -3 | PCP -24 | PCP -25 |
| Compositio n | Polycarbonat e polyol (B) | PC-1 | 289 | | | | | | | | 300 | 300 |
| | | N-980N | | 318 | | | 250 | | | | | |
| | | PC-2 | 126 | | | | | | | | | |
| | | PC-3 | | | 250 | | | | | | | |
| | | PC-4 | | | | 250 | | | | | | |
| | Polyester polyol (C) | PLACCEL 220 | 85 | | | | | | | | | |
| | | PLACCEL 210 | | | | | | | | | | |
| | | N-135 | | 150 | | | | | | | | |
| | | PLACCEL 320 | | | 250 | 250 | 250 | | | | | |
| | | PLACCEL 305 | | | | | | | | | 200 | 200 |
| | Difunctional glycol (D) HG | | | | | | | | | | | |
| | Polyhydric alcohol (E) TMP | | | 32 | | | | 50 | | | | |
| | Oxetane compound (F) 3-ethyl-3-hydroxymethyloxeta ne | | | | | | 14.5 | | | | | |
| | Composition | PCP-13 | | | | | | | | | | |
| | | N-982R | | | | | | 50 | 100 | | | |
| | | N-980R | | | | | | | | 100 | | |
| | Catalyst | Lithium acetylacetonat e | 0.050 | 0.050 | 0.050 | 0.050 | 0.050 | | | | | |
| | | Tetrabutyl titanate | | | | | | | | | 0.05 | |
| | | Barium acetate | | | | | | | | | | 0.05 |

[Table 7]

| | | | Exampl e 19 | Exampl e 20 | Exampl e 21 | Exampl e 22 | Exampl e 23 | Comparativ e Example 1 | Comparativ e Example 2 | Comparativ e Example 3 | Comparativ e Example 4 | Comparativ e Example 5 |
|---|---|---|---|---|---|---|---|---|---|---|---|---|
| Composition | | | PCP -19 | PCP -20 | PCP -21 | PCP -22 | PCP -23 | PCD -1 | PCD -2 | PCD -3 | PCP -24 | PCP -25 |
| Analysis evaluatio n | Hydroxyl group value of composition (KOHmg/g) | | 113.9 | 128.2 | 112.3 | 82.7 | 111.4 | 655.9 | 56.1 | 56.1 | 149.0 | 149.5 |
| | Acid value of composition (KOHmg/g) | | 0.01 | 0.01 | 0.02 | 0.03 | 0.02 | 0.04 | 0.07 | 0.01 | 0.21 | 0.21 |
| | Number average molecular weight (g/mol) | | 1416 | 1080 | 1196 | 1447 | 1243 | 210 | 1810 | 1890 | 1077 | 1079 |
| | State at 25°C | | Liquid | Liquid | Liquid | Liquid | Liquid | Solid | Liquid | Solid | Solid | Solid |
| | Composition analysis $^1$H-NMR mea-suremen t | $C_{A1-1}/(C_{A1-1} + C_{A1-2} + C_{A1-3}) \times 100$ | 26.0 | 29.4 | 44.0 | 47.0 | 50.2 | - | - | - | - | - |
| | | CA2-2 + $C_{A2-3})/(C_{A1-1} + C_{A1-2} + C_{A1-3}$ | 0.419 | 0.596 | 0.367 | 0.347 | 0.396 | - | - | - | 0.761 | 0.791 |
| | | $C_{A1-1}/C_T$ | 0.095 | 0.111 | 0.165 | - | 0.095 | - | - | - | - | - |
| | | $C_{A1-2}/C_T$ | 0.255 | 0.241 | 0.150 | - | 0.070 | - | - | - | - | - |
| | | $C_{A1-3}/C_T$ | 0.016 | 0.025 | 0.060 | - | 0.024 | - | - | - | 0.345 | 0.345 |
| | | $C_{A2-3}/C_T$ | 0.023 | 0.047 | 0.040 | - | 0.025 | - | - | - | 0.235 | 0.235 |
| | | $C_{A2-3}/(C_{A2-2} + C_{A2-3} + C_D) \times 100$ | 1.390 | 1.356 | 0.644 | - | 0.934 | 0.000 | 0.000 | 0.000 | 10.21 | 10.25 |
| | | $(C_{A2-2} + C_{A2-3})/(C_{A2-2} + C_{A2-3} + C_D) \times 100)$ | 9.159 | 6.910 | 1.611 | - | 1.898 | 0.000 | 0.000 | 0.000 | 12.05 | 12.54 |
| | | $C_F/C_T \times 100$ | 3.55 | 0.99 | 3.08 | - | 49.0 | - | - | - | 0.11 | 0.14 |

In Table 2, Table 4, and Table 6, the "Composition" (unit: g) of Examples 1 to 16, Examples 18 to 23, and Comparative Examples 4 and 5 indicates the reaction raw material, and the "Composition" (unit: g) of Example 17 and Comparative Examples 1 to 3 indicates the blended component.

(Evaluation of physical properties)

A urethane cured film coat (film) was prepared by the following method, and the physical properties (tensile characteristics, heat resistance, and hot water resistance) of the obtained film were evaluated as a sample.

[Preparation of urethane cured coat]

First, the composition obtained above, a polyisocyanate component (C-2612), a urethanization catalyst, a phosphorus compound (JP508), and a dilution solvent were mixed in a 200 mL glass bottle by blending them (unit: g) as shown in Table 8, Table 9, and Table 10. Immediately after mixing, the mixed liquid was poured onto a release paper and cast with a bar coater so that a film having a thickness of 200 μm was obtained. Next, the cast film was cured by heating under the conditions of 25°C for 30 minutes, 50°C for 30 minutes, 80°C for 30 minutes, 120°C for 1 hour, and 50°C for 18 hours to obtain a urethane cured coat (film).

[Evaluation of tensile characteristics and 100% modulus characteristics]

The tensile characteristics and 100% modulus characteristics of the obtained film were measured in accordance with JIS K6251 under the following conditions. (100% modulus, strength at breaking, elongation at breaking)

- Conditions -

· Test device: Tensilon UTA-500 (manufactured by A&D Company, Limited)
· Measurement conditions: 25°C × 50% RH
· Head speed: 200 mm/min
· Dumbbell No. 4

[Softening temperature]

A test piece was obtained from the obtained film, by using a dumbbell, and then a 2 cm marked line was drawn on the test piece to measure the thickness at the central part of the marked line. A weight having a predetermined weight was attached to one gripping part of the test piece, the other gripping part was pinched with a double clip, and the test piece was hung in a dryer with the clip on the upper side. Then, the temperature inside the dryer was raised, the distance between the marked lines was observed, and the temperature when the distance between the marked lines reached 4 cm was read as the softening temperature.

· Treatment device: Constant temperature blowing dryer DRK633DA (manufactured by Advantech Co., Ltd.)
· Weight of weight: Thickness at central part of marked line (μm) × 0.05 g
· Dumbbell No. 2 (in accordance with JIS K6251)
· Temperature rising rate: 5 °C/min

[Glass transition temperature]

A test piece (width: 0.4 cm, length: 2.5 cm) was obtained from the obtained film, by using a dumbbell, and then the thickness (about 100 to 200 μm) of the central part of the marked line was measured. The glass transition temperature was determined as a temperature at a peak top obtained from loss elastic modulus (E")/storage elastic modulus (E') = tanδ.

- Conditions -

· Treatment device: RHEOVIBRON DDV-01GP Dynamic Viscoelastometer (manufactured by ORIENTEC CO., LTD.)
· Range: -50°C to 40°C

· Temperature rising rate: 3 °C/min
· Frequency: 35 Hz
· Amplitude: 16 μm
· Static tension: 5.00 gf

[Evaluation of hot water resistance]

In a state of being immersed in water, the obtained film was allowed to stand for 28 days in a thermostatic chamber at 90°C to prepare a test specimen. Thereafter, the appearance of each test specimen was visually evaluated. The test device used was an ESPEC CORP (manufactured by ESPEC Corp.). The change in the appearance of the film after the test with respect to the appearance of the film before the test was evaluated as A, B, C, or D (A: no change, B: deformed, C: white, D: dissolved).

In a case where the polyurethane film is good, the film shape is maintained even after a water resistance test. In the water resistance test, the reorientation and degradation of the polyurethane are promoted at the same time. A case where deformation is observed in the appearance of the film after the water resistance test suggests the progress of reorientation of the polyurethane, and the film undergoes whitening in a case where the reorientation progresses markedly. In addition, the film may dissolve due to the degradation of the carbonate bond in the polyurethane.

[Evaluation standard]

The values of the respective physical properties of 100% modulus, breaking strength, breaking elongation, softening temperature, glass transition temperature, and hot water resistance (90°C water resistance) were evaluated as A, B, C, D, or E (A: very good, B: particularly good, C: good, D: moderate, E: poor). In addition, the overall evaluation was rated as A, B, C, D, or E (A: very good, B: particularly good, C: good, D: moderate, E: poor).

<100% modulus>

A: 1.2 MPa or more and 3.2 MPa or less
D: Less than 1.2 MPa
E: More than 3.2 MPa

<Breaking strength>

A: More than 11 MPa
D: 11 MPa or less

<Breaking elongation>

A: 300 MPa or more
B: Less than 300 MPa

<Softening temperature>

A: More than 210°C
D: 190°C or more and 210°C or less
E: Less than 190°C

<Overall evaluation>

A: The evaluations of the values of the respective physical properties are all A.
B: The evaluations of the values of the respective physical properties do not include C, D, and E but include at least B.
C: The evaluations of the values of the respective physical properties do not include D and E but include at least C.
D: The evaluations of the values of the respective physical properties do not include E but include at least D.
E: The evaluations of the values of the respective physical properties include E.

[Table 8]

| | | | Example 1 | Example 2 | Example 3 | Example 4 | Example 5 | Example 6 | Example 7 | Example 8 | Example 9 |
|---|---|---|---|---|---|---|---|---|---|---|---|
| Kind of composition | | | PCP -1 | PCP -2 | PCP -3 | PCP -4 | PCP -5 | PCP -6 | PCP -7 | PCP -8 | PCP -9 |
| Blend | Composition | | 26.8 | 26.2 | 24.7 | 24.6 | 23.9 | 24.6 | 24.6 | 24.9 | 31.1 |
| | Polyisocyanate component | C-2612 | 13.2 | 13.8 | 15.3 | 15.4 | 16.1 | 15.4 | 15.4 | 15.1 | 8.9 |
| | Urethanization catalyst | DOTDL | 0.01 | 0.01 | 0.01 | 0.01 | 0.01 | 0.01 | 0.01 | 0.01 | 0.01 |
| | Phosphorus compound | JP-508 | 0.01 | 0.01 | 0.01 | 0.01 | 0.01 | 0.01 | 0.01 | 0.01 | 0.01 |
| | Dilution solvent | Methyl ethyl ketone | 42 | 42 | 42 | 42 | 42 | 42 | 42 | 42 | 42 |
| | | Toluene | 18 | 18 | 18 | 18 | 18 | 18 | 18 | 18 | 18 |
| | Leveling agent | BYK-331 | 0.4 | 0.4 | 0.4 | 0.4 | 0.4 | 0.4 | 0.4 | 0.4 | 0.4 |
| | Molar ratio (isocyanate group/hydroxyl group) | | 1.05/1.0 | 1.05/1.0 | 1.05/1.0 | 1.05/1.0 | 1.05/1.0 | 1.05/1.0 | 1.05/1.0 | 1.05/1.0 | 1.05/1.0 |
| Physical properties | 100% modulus (MPa) | | 3.1 | 2.7 | 2.1 | 2.1 | 2.2 | 2.3 | 2.4 | 2.3 | 2 |
| | | | A | A | A | A | A | A | A | A | A |
| | Breaking strength (MPa) | | 59 | 36 | 30 | 24 | 25 | 27 | 23 | 13 | 32 |
| | | | A | A | A | A | A | A | A | A | A |
| | Breaking elongation (%) | | 575 | 525 | 392 | 360 | 362 | 368 | 367 | 325 | 641.7 |
| | | | A | A | A | A | A | A | A | A | A |
| | Softening temperature (°C) | | 206 | 219 | 226 | 245 | 236 | 224 | 227 | 259 | 213.0 |
| | | | A | A | A | A | A | A | A | A | A |
| | Glass transition temperature (°C) | | -14.8 | -10.8 | 0.7 | -1.3 | -4.5 | -5.3 | -6.8 | -9.8 | -23.80 |
| | | | A | A | A | A | A | A | A | A | A |
| | Appearance in 90°C water resistance test | | B | B | A | A | A | A | B | B | B |
| | Overall evaluation | | B | B | A | A | A | A | B | B | B |

[Table 9]

| | | | Example 10 | Example 11 | Example 12 | Example 13 | Example 14 | Example 15 | Example 16 | Example 17 | Example 18 |
|---|---|---|---|---|---|---|---|---|---|---|---|
| Kind of composition | | | PCP -10 | PCP -11 | PCP -12 | PCP -13 | PCP -14 | PCP -15 | PCP -16 | PCP -17 | PCP -18 |
| Blend | Composition | | 31.6 | 31.2 | 30.2 | 30.2 | 30.0 | 30.1 | 30.7 | 21.4 | 29.5 |
| | Polyisocyanate component | C-2612 | 8.4 | 8.8 | 9.8 | 9.8 | 10.0 | 9.9 | 9.3 | 18.6 | 10.5 |
| | Urethanization catalyst | DOTDL | 0.01 | 0.01 | 0.01 | 0.01 | 0.01 | 0.01 | 0.01 | 0.01 | 0.01 |
| | Phosphorus compound | JP-508 | 0.01 | 0.01 | 0.01 | 0.01 | 0.01 | 0.01 | 0.01 | 0.01 | 0.01 |
| | Dilution solvent | Methyl ethyl ketone | 42 | 42 | 42 | 42 | 42 | 42 | 42 | 42 | 42 |
| | | Toluene | 18 | 18 | 18 | 18 | 18 | 18 | 18 | 18 | 18 |
| | Leveling agent | BYK-331 | 0.4 | 0.4 | 0.4 | 0.4 | 0.4 | 0.4 | 0.4 | 0.4 | 0.4 |
| | Molar ratio (isocyanate group/-hydroxyl group) | | 1.05/1.0 | 1.05/1.0 | 1.05/1.0 | 1.05/1.0 | 1.05/1.0 | 1.05/1.0 | 1.05/1.0 | 1.05/1.0 | 1.05/1.0 |
| Physical properties | 100% modulus (MPa) | | 1.4 | 1.5 | 1.6 | 1.7 | 1.8 | 1.9 | 1.6 | 3.2 | 2.0 |
| | | | A | A | A | A | A | A | A | A | A |
| | Breaking strength (MPa) | | 31 | 24 | 26 | 31 | 26 | 29 | 25 | 11 | 32 |
| | | | A | A | A | A | A | A | A | D | A |
| | Breaking elongation (%) | | 580 | 522 | 505 | 472 | 475 | 450 | 493 | 285 | 447 |
| | | | A | A | A | A | A | A | A | B | A |
| | Softening temperature (°C) | | 212 | 216 | 218 | 220 | 228 | 234 | 241 | 270 | 217 |
| | | | A | A | A | A | A | A | A | A | A |
| | Glass transition temperature (°C) | | -21.2 | -20.3 | -20.7 | -20.8 | -24.3 | -28.2 | -23.8 | 7.7 | -15.3 |
| | | | A | A | A | A | A | A | A | A | A |
| | Appearance in 90°C water resistance test | | B | B | A | A | C | D | A | C | A |
| | Overall evaluation | | B | B | A | A | C | D | A | D | A |

[Table 10]

| | | | Exampl e 19 | Exampl e 20 | Exampl e 21 | Exampl e 22 | Exampl e 23 | Comparativ e Example 1 | Comparativ e Example 2 | Comparativ e Example 3 | Comparativ e Example 24 | Comparativ e Example 25 |
|---|---|---|---|---|---|---|---|---|---|---|---|---|
| Kind of composition | | | PCP -19 | PCP -20 | PCP -21 | PCP -22 | PCP -23 | PCD -1 | PCD -2 | PCD -3 | PCP -24 | PCP -25 |
| Blend | Composition | | 26.6 | 25.2 | 26.4 | 29.0 | 26.5 | 10.0 | 31.8 | 31.8 | 23.8 | 23.8 |
| | Polyisocyanat e component | C-2612 | 13.4 | 14.8 | 13.6 | 11.0 | 13.5 | 30.0 | 8.2 | 8.2 | 16.2 | 16.2 |
| | Urethanization catalyst | DOTDL | 0.01 | 0.01 | 0.01 | 0.01 | 0.01 | 0.01 | 0.01 | 0.01 | 0.01 | 0.01 |
| | Phosphorus compound | JP-508 | 0.01 | 0.01 | 0.01 | 0.01 | 0.01 | 0.01 | 0.01 | 0.01 | 0.01 | 0.01 |
| | Dilution solvent | Methyl ethyl ketone | 42 | 42 | 42 | 42 | 42 | 42 | 42 | 42 | 42 | 42 |
| | | Toluene | 18 | 18 | 18 | 18 | 18 | 18 | 18 | 18 | 18 | 18 |
| | Leveling agent | BYK-33 1 | 0.4 | 0.4 | 0.4 | 0.4 | 0.4 | 0.4 | 0.4 | 0.4 | 0.4 | 0.4 |
| | Molar ratio (isocyanate group/hydroxyl group) | | 1.05/1.0 | 1.05/1.0 | 1.05/1.0 | 1.05/1.0 | 1.05/1.0 | 1.05/1.0 | 1.05/1.0 | 1.05/1.0 | 1.05/1.0 | 1.05/1.0 |

(continued)

| | | Example 19 | Example 20 | Example 21 | Example 22 | Example 23 | Comparative Example 1 | Comparative Example 2 | Comparative Example 3 | Comparative Example 24 | Comparative Example 25 |
|---|---|---|---|---|---|---|---|---|---|---|---|
| Kind of composition | | PCP -19 | PCP -20 | PCP -21 | PCP -22 | PCP -23 | PCD -1 | PCD -2 | PCD -3 | PCP -24 | PCP -25 |
| Physical properties | 100% modulus (MPa) | 2.4 | 1.6 | 1.4 | 1.4 | 1.1 | 18.5 | 0.1 | 3.3 | 4.4 | 3.7 |
| | | A | A | A | A | D | E | D | E | E | E |
| | Breaking strength (MPa) | 15 | 37 | 26 | 12 | 14 | 50 | 1 | 42 | 32 | 35 |
| | | A | A | A | A | A | A | D | A | A | A |
| | Breaking elongation (%) | 297 | 475 | 522 | 480 | 572 | 193 | 1500 | 550 | 200 | 227 |
| | | B | A | A | A | A | B | A | A | B | B |
| | Softening temperature (°C) | 260 | 244 | 230 | 252 | 210 | 270 | 87 | 187 | 225 | 232 |
| | | A | A | A | A | D | A | E | E | A | A |
| | Glass transition temperature (°C) | 1.2 | -5.3 | -10.2 | -15.3 | -12.2 | 40.3 | -22.5 | -10.2 | 1.3 | 3.2 |
| | | A | A | A | A | A | B | A | A | A | A |
| | Appearance in 90°C water resistance test | A | B | A | A | B | C | D | C | A | A |
| | Overall evaluation | B | B | A | A | D | E | E | E | E | E |

Details of the materials used in Examples are as follows:

· 1,6-hexanediol: Manufactured by BASF Japan Ltd.
· 1,4-butanediol: Manufactured by Tokyo Chemical Industry Co., Ltd.
· 3-methyl-1,5-pentanediol: Manufactured by FUJIFILM Wako Pure Chemical Corporation
· Trimethylolpropane: Manufactured by Sigma-Aldrich Co., LLC
· Diethyl carbonate: Manufactured by Sigma-Aldrich Co., LLC
· Potassium bicarbonate: Manufactured by FUJIFILM Wako Pure Chemical Corporation
· Tetrabutyl titanate: Manufactured by Tokyo Chemical Industry Co., Ltd.
· N-980N, N-980R: Polycarbonate diol (number average molecular weight = 2,000, hydroxyl group value = 56.1, number of functional groups = 2, 1,6-hexanediol-based polycarbonate diol), manufactured by Tosoh Corporation
· PLACCEL 220: Polycaprolactone diol (number average molecular weight = 2,000, hydroxyl group value = 56.1, number of functional groups = 2), manufactured by Daicel Corporation
· PLACCEL 210: Polycaprolactone diol (number average molecular weight = 1,000, hydroxyl group value = 112, number of functional groups = 2), manufactured by Daicel Corporation
· N-135: Polyester polyol (number average molecular weight = 2,600, hydroxyl group value = 43.1, number of functional groups = 2, adipic acid/1,4-butanediol polyester diol), manufactured by Tosoh Corporation
· PLACCEL 320: Polycaprolactone triol (number average molecular weight = 2,000, hydroxyl group value = 84.2, number of functional groups = 3), manufactured by Daicel Corporation
· PLACCEL 305: Polycaprolactone triol (number average molecular weight = 550, hydroxyl group value = 305, number of functional groups = 3), manufactured by Daicel Corporation
· 3-ethyl-3-hydroxymethyloxetane: Manufactured by Tokyo Chemical Industry Co., Ltd.
· N-982R: Polycarbonate diol (number average molecular weight = 2,000, hydroxyl group value = 56.1, number of functional groups = 2, 1,6-hexanediol/ester copolymer-based polycarbonate diol), manufactured by Tosoh Corporation
· Lithium acetylacetonate: Manufactured by Sigma-Aldrich Co., LLC
· Barium acetate: Manufactured by FUJIFILM Wako Pure Chemical Corporation
· JP-508: Trade name, 2-ethylhexyl acid phosphate, manufactured by JOHOKU CHEMICAL Co., Ltd.
· C-2612: CORONATE 2612 (trade name), hexamethylene diisocyanate adduct-modified polyisocyanate, isocyanate content = 17.2%, manufactured by Tosoh Corporation
· DOTDL: Dioctyl + tin dilaurate, manufactured by KISHIDA CHEMICAL Co., Ltd.
· BYK-331: Silicone-based surface conditioner, manufactured by BYK Additives & Instruments
· Methyl ethyl ketone: Manufactured by Maruzen Petrochemical CO., LTD.
· Toluene: Manufactured by FUJIFILM Wako Pure Chemical Corporation

## Claims

**1.** A compound represented by Formula (A1-1),

[Chem. 1]

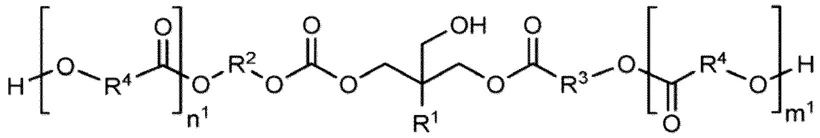

(A1-1)

[in Formula (A1-1),

$R^1$ represents a hydrogen atom, an alkyl group, or a hydroxyalkyl group,
$R^2$ represents an alkanediyl group,
$R^3$ represents an alkanediyl group or * 1-$R^a$-C(=O)-O-$R^b$-*2,
$R^4$ represents an alkanediyl group, *1-O-$R^c$-*2, or * 1-$R^a$-C(=O)-O-$R^b$-*2,
$R^a$, $R^b$, and $R^c$ each independently represent an alkanediyl group,
*1 represents a site for bonding to a carbonyl group,

*2 represents a site for bonding to an oxygen atom,
$n^1$ and $m^1$ each represent an integer of 0 or more, and
in a case where $R^4$ is present in plurality, a plurality thereof may be the same or different from each other].

**2.** A composition comprising:

the compound according to claim 1;
a polycarbonate polyol represented by Formula (A1-2); and
a polyester polyol represented by Formula (A1-3),
wherein in a case where a total number of moles of a group represented by Formula (a1-1), which is contained in the composition, is denoted as $C_{A1-1}$, a total number of moles of a group represented by Formula (al-2), which is contained in the composition, is denoted as $C_{A1-2}$, and a total number of moles of a group represented by Formula (al-3), which is contained in the composition, is denoted as $C_{A1-3}$,
a molar ratio $(C_{A1-1}/(C_{A1-1} + C_{A1-2} + C_{A1-3}) \times 100)$ is 5.3 to 99,

[Chem. 2]

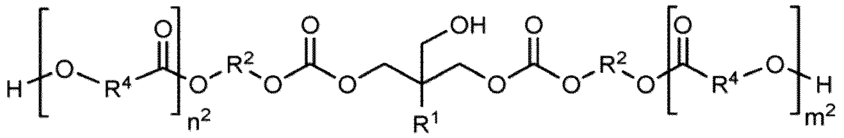

(A1-2)

[in Formula (A1-2), $R^1$, $R^2$, and $R^4$ respectively have the same meanings as defined above, and $n^2$ and $m^2$ each represent an integer of 0 or more,
a plurality of $R^2$'s may be the same or different from each other, and
in a case where $R^4$ is present in plurality, a plurality thereof may be the same or different from each other]

[Chem. 3]

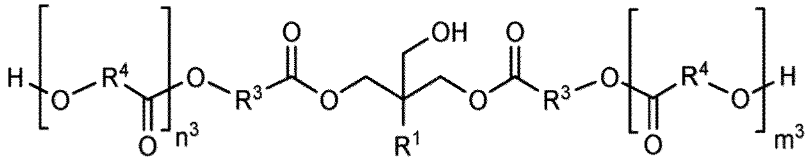

(A1-3)

[in Formula (A1-3), $R^1$, $R^3$, and $R^4$ respectively have the same meanings as defined above,
$n^3$ and $m^3$ each represent an integer of 0 or more,
a plurality of $R^3$'s may be the same or different from each other, and
in a case where $R^4$ is present in plurality, a plurality thereof may be the same or different from each other]

[Chem. 4]

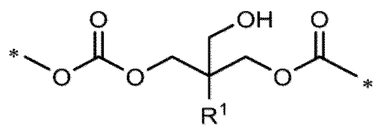

(a1-1)

[in Formula (a1-1), $R^1$ has the same meaning as defined above, and * represents a bonding site]

[Chem. 5]

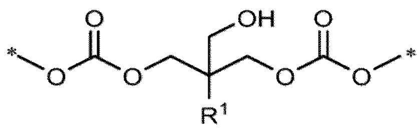

(a1-2)

[in Formula (al-2), $R^1$ has the same meaning as defined above, and * represents a bonding site]

[Chem. 6]

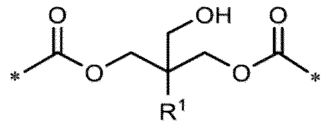

(a1-3)

[in Formula (al-3), $R^1$ has the same meaning as defined above, and * represents a bonding site].

**3.** The composition according to claim 2, further comprising:

a polycarbonate polyol represented by Formula (A2-2); and
a polyester polyol represented by Formula (A2-3),
wherein in a case where a total number of moles of a group represented by Formula (a1-1), which is contained in the composition, is denoted as $C_{A1-1}$, a total number of moles of a group represented by Formula (al-2), which is contained in the composition, is denoted as $C_{A1-2}$, a total number of moles of a group represented by Formula (al-3), which is contained in the composition, is denoted as $C_{A1-3}$, a total number of moles of a group represented by Formula (a2-2), which is contained in the composition, is denoted as $C_{A2-2}$, and a total number of moles of a group represented by Formula (a2-3), which is contained in the composition, is denoted as $C_{A2-3}$,
a molar ratio $((C_{A2-2} + C_{A2-3})/(C_{A1-1} + C_{A1-2} + C_{A1-3}))$ is 0.01 to 0.750,

[Chem. 7]

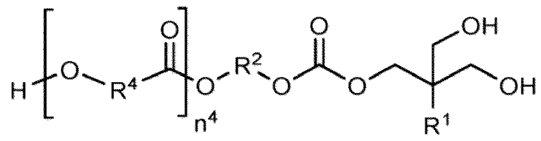

(A2-2)

[in Formula (A2-2), $R^1$, $R^2$, and $R^4$ respectively have the same meanings as defined above,
$n^4$ represents an integer of 0 or more, and
in a case where $R^4$ is present in plurality, a plurality thereof may be the same or different from each other]

[Chem. 8]

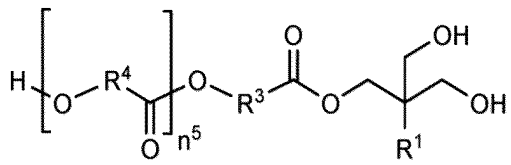

(A2-3)

[in Formula (A2-3), $R^1$, $R^3$, and $R^4$ respectively have the same meanings as defined above,
$n^5$ represents an integer of 0 or more, and
in a case where $R^4$ is present in plurality, a plurality thereof may be the same or different from each other]

[Chem. 9]

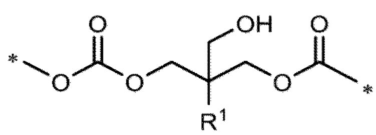

(a1-1)

[in Formula (a1-1), $R^1$ has the same meaning as defined above, and * represents a bonding site]

[Chem. 10]

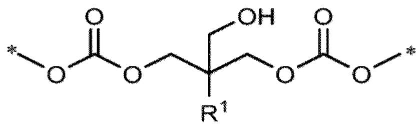

(a1-2)

[in Formula (al-2), $R^1$ has the same meaning as defined above, and * represents a bonding site]

[Chem. 11]

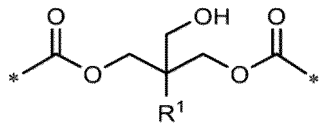

(a1-3)

[in Formula (al-3), $R^1$ has the same meaning as defined above, and * represents a bonding site]

[Chem. 12]

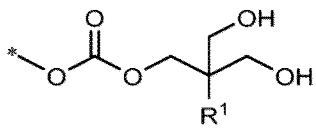

(a2-2)

[in Formula (a2-2), $R^1$ has the same meaning as defined above, and * represents a bonding site]

[Chem. 13]

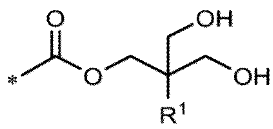

(a2-3)

[in Formula (a2-3), $R^1$ has the same meaning as defined above, and * represents a bonding site].

**4.** The composition according to claim 2 or 3, further comprising:

a polycarbonate polyol represented by Formula (A-3); and
a polycarbonate diol represented by Formula (A-4),

[Chem. 14]

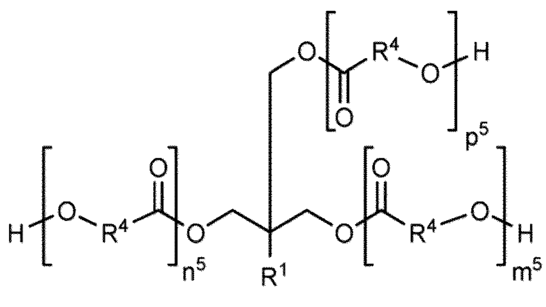

(A-3)

[in Formula (A-3), $R^1$ and $R^4$ respectively have the same meanings as defined above,
$n^5$, $m^5$, and $p^5$ each represent an integer of 1 or more, and
a plurality of $R^4$'s may be the same or different from each other]

[Chem. 15]

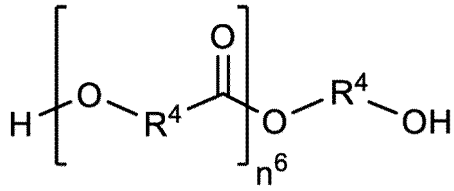

(A-4)

[in Formula (A-4), $R^4$ has the same meaning as defined above, and $n^6$ represents an integer of 1 or more, and
a plurality of $R^4$'s may be the same or different from each other].

**5.** The composition according to claim 2 or 3,

wherein in a case where a total number of moles of a group represented by Formula (a1-1), which is contained in the composition, is denoted as $C_{A1-1}$, and a total number of moles of a group represented by Formula (I), which is contained in the composition, is denoted as $C_T$,
a molar ratio ($C_{A1-1}/C_T$) is 0.02 to 0.99,

[Chem. 16]

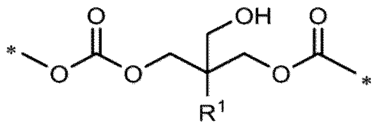

(a1-1)

[in Formula (a1-1), $R^1$ has the same meaning as defined above, and * represents a bonding site]

[Chem. 17]

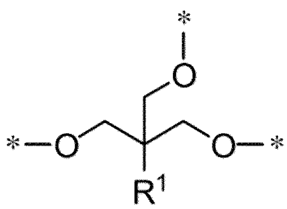

(I)

[in Formula (I), $R^1$ has the same meaning as defined above, and * represents a bonding site].

**6.** The composition according to claim 2 or 3,

wherein in a case where a total number of moles of a group represented by Formula (al-2), which is contained in the composition, is denoted as $C_{A1-2}$, and a total number of moles of a group represented by Formula (I), which is contained in the composition, is denoted as $C_T$,
a molar ratio ($C_{A1-2}/C_T$) is 0.001 to 0.99,

[Chem. 18]

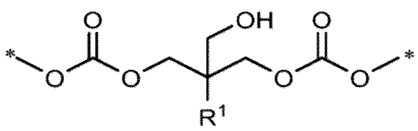

(a1-2)

[in Formula (al-2), $R^1$ has the same meaning as defined above, and * represents a bonding site]

[Chem. 19]

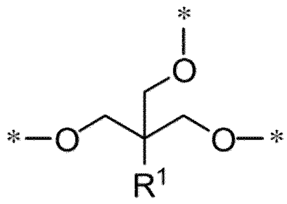

(I)

[in Formula (I), $R^1$ has the same meaning as defined above, and * represents a bonding site].

**7.** The composition according to claim 2 or 3,

wherein in a case where a total number of moles of a group represented by Formula (al-3), which is contained in the composition, is denoted as $C_{A1-3}$, and a total number of moles of a group represented by Formula (I), which is contained in the composition, is denoted as $C_T$,
a molar ratio ($C_{A1-3}/C_T$) is 0.005 to 0.34,

[Chem. 20]

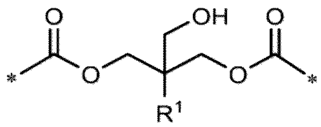

(a1-3)

[in Formula (al-3), $R^1$ has the same meaning as defined above, and * represents a bonding site]

[Chem. 21]

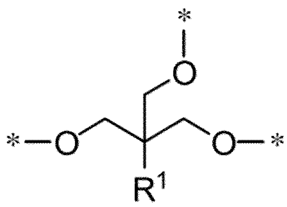

(I)

[in Formula (I), $R^1$ has the same meaning as defined above, and * represents a bonding site].

**8.** The composition according to claim 3,

wherein in a case where a total number of moles of a group represented by Formula (a2-3), which is contained in the composition, is denoted as $C_{A2-3}$, and a total number of moles of a group represented by Formula (I), which is contained in the composition, is denoted as $C_T$,
a molar ratio ($C_{A2-3}/C_T$) is 0.001 to 0.234,

[Chem. 22]

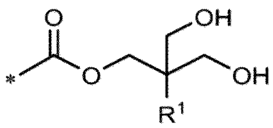

(a2-3)

[in Formula (a2-3), $R^1$ has the same meaning as defined above, and * represents a bonding site]

[Chem. 23]

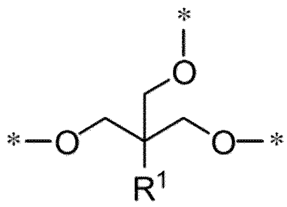

(I)

[in Formula (I), $R^1$ has the same meaning as defined above, and * represents a bonding site].

**9.** The composition according to claim 3,

wherein in a case where a total number of moles of a group represented by Formula (d), which is contained in the composition, is denoted as $C_D$, a total number of moles of a group represented by Formula (a2-2), which is contained in the composition, is denoted as $C_{A2-2}$, and a total number of moles of a group represented by Formula (a2-3), which is contained in the composition, is denoted as $C_{A2-3}$,
a molar ratio ($C_{A2-3}/(C_{A2-2} + C_{A2-3} + C_D) \times 100$) is 0.010 to 10.20,

[Chem. 24]

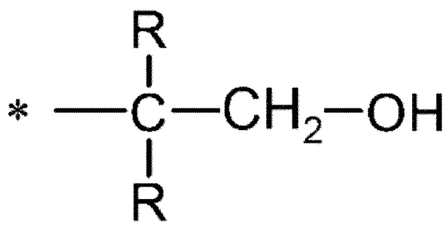

(d)

[in Formula (d), R is a hydrogen atom or an alkanediyl group, and * represents a bonding site, and R's may be the same or different from each other]

[Chem. 25]

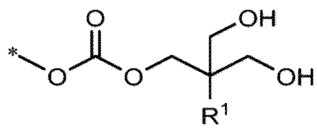

(a2-2)

[in Formula (a2-2), $R^1$ has the same meaning as defined above, and * represents a bonding site]

[Chem. 26]

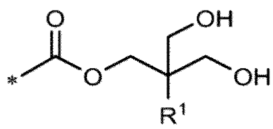

(a2-3)

[in Formula (a2-3), $R^1$ has the same meaning as defined above, and * represents a bonding site].

**10.** The composition according to claim 3,

wherein in a case where a total number of moles of a group represented by Formula (d), which is contained in the composition, is denoted as $C_D$, a total number of moles of a group represented by Formula (a2-2), which is contained in the composition, is denoted as $C_{A2-2}$, and a total number of moles of a group represented by Formula (a2-3), which is contained in the composition, is denoted as $C_{A2-3}$,
a molar ratio ($(C_{A2-2} + C_{A2-3})/(C_{A2-2} + C_{A2-3} + C_D) \times 100$) is 0.100 to 12.00,

[Chem. 27]

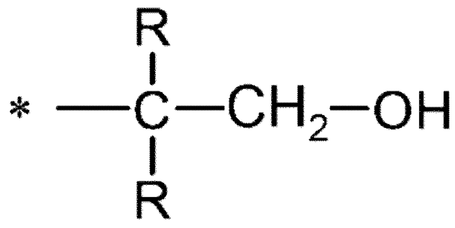

(d)

[in Formula (d), R is a hydrogen atom or an alkanediyl group, and * represents a bonding site, and R's may be the same or different from each other]

[Chem. 28]

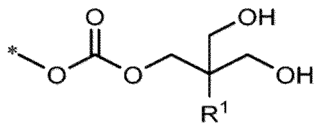

(a2-2)

[in Formula (a2-2), $R^1$ has the same meaning as defined above, and * represents a bonding site]

[Chem. 29]

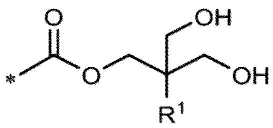

(a2-3)

[in Formula (a2-3), $R^1$ has the same meaning as defined above, and * represents a bonding site].

**11.** The composition according to claim 2 or 3,

wherein in a case where a total number of moles of a group represented by Formula (f'), which is contained in the composition, is denoted as $C_F$, and a total number of moles of a group represented by Formula (I), which is contained in the composition, is denoted as $C_T$,
a molar ratio ($C_F/C_T \times 100$) is 1.70 to 45.0,

[Chem. 30]

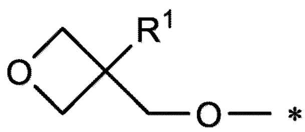

(f')

[in Formula (f), $R^1$ has the same meaning as defined above, and * represents a bonding site]

[Chem. 31]

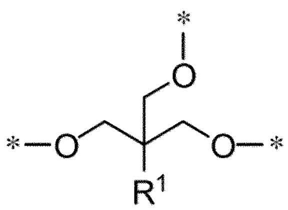

(I)

[in Formula (I), $R^1$ has the same meaning as defined above, and * represents a bonding site].

**12.** The composition according to claim 2 or 3,

wherein $R^3$ is an alkanediyl group, and
$R^4$ is an alkanediyl group or * 1-O-$R^c$-*2.

**13.** The composition according to claim 12,

wherein the composition contains a reaction product of a polycarbonate polyol (B) and a polyester polyol (C), and the polyester polyol (C) includes a polyester polyol (β) which is a ring-opening addition polymer of a cyclic ester compound, where the ring-opening addition polymer is obtained by using a diol as an initiator, and/or a polyester polyol (β') which is a ring-opening addition polymer of a cyclic ester compound, where the ring-opening addition polymer is obtained by using, as an initiator, a polyhydric alcohol having three or more hydroxyl groups as functional groups.

**14.** A method for producing the compound according to claim 1, the method comprising:

a reaction step of reacting a polycarbonate polyol with a polyester polyol in a mixed liquid containing the polycarbonate polyol, the polyester polyol, and a transesterification catalyst to obtain the compound,
wherein at least one of the polycarbonate polyol or the polyester polyol contains a group represented by Formula (I), or
the mixed liquid further contains a polyhydric alcohol represented by Formula (e),

[Chem. 32]

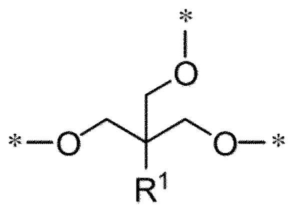

(I)

[in Formula (I), $R^1$ has the same meaning as defined above, and * represents a bonding site]

[Chem. 33]

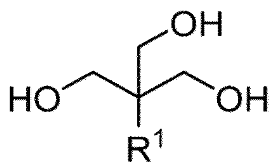

(e)

[in Formula (e), $R^1$ has the same meaning as defined above].

**15.** The method for producing the same according to claim 14, wherein a content of the transesterification catalyst in the mixed liquid is 0.001 to 0.050 parts by mass with respect to 100 parts by mass of a total amount of a polyol component in the mixed liquid.

**16.** The method for producing the same according to claim 15, wherein the transesterification catalyst includes lithium acetylacetonate.

**17.** A urethane resin,

wherein the urethane resin is a polycondensate of a polyol component and a polyisocyanate component, or a crosslinked product thereof, and
the polyol component includes the compound according to claim 1.

**18.** The urethane resin according to claim 17,

wherein the polyol component includes a polycarbonate polyol represented by Formula (A1-2) and a polyester polyol represented by Formula (A1-3), and
in a case where a total number of moles of a group represented by Formula (a1-1), which is contained in the polyol component, is denoted as $C_{A1-1}$, a total number of moles of a group represented by Formula (al-2), which is contained in the polyol component, is denoted as $C_{A1-2}$, and a total number of moles of a group represented by Formula (al-3), which is contained in the polyol component, is denoted as $C_{A1-3}$,
a molar ratio ($C_{A1-1}/(C_{A1-1} + C_{A1-2} + C_{A1-3}) \times 100$) is 5.3 to 99,

[Chem. 34]

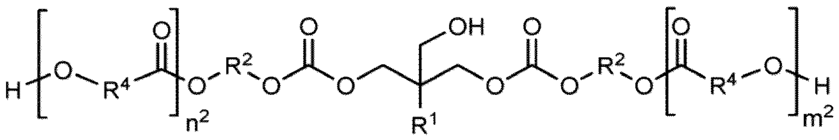

(A1-2)

[in Formula (A1-2), $R^1$, $R^2$, and $R^4$ respectively have the same meanings as defined above, and $n^2$ and $m^2$ each represent an integer of 0 or more,
a plurality of $R^2$'s may be the same or different from each other, and
in a case where $R^4$ is present in plurality, a plurality thereof may be the same or different from each other]

[Chem. 35]

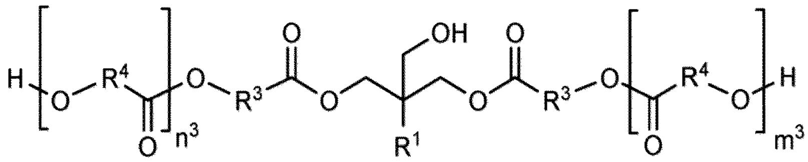

(A1-3)

[in Formula (A1-3), $R^1$, $R^3$, and $R^4$ respectively have the same meanings as defined above,
$n^3$ and $m^3$ each represent an integer of 0 or more,
a plurality of $R^3$'s may be the same or different from each other, and
in a case where $R^4$ is present in plurality, a plurality thereof may be the same or different from each other]

[Chem. 36]

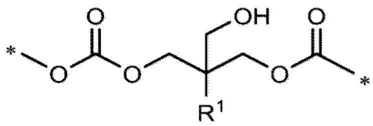

(a1-1)

[in Formula (a1-1), $R^1$ has the same meaning as defined above, and * represents a bonding site]

[Chem. 37]

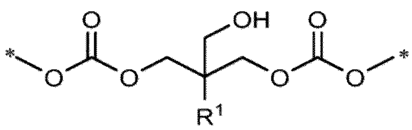

(a1-2)

[in Formula (al-2), $R^1$ has the same meaning as defined above, and * represents a bonding site]

[Chem. 38]

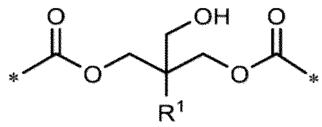

(a1-3)

[in Formula (al-3), $R^1$ has the same meaning as defined above, and * represents a bonding site].

**19.** The urethane resin according to claim 18,

wherein the polyol component further includes a polycarbonate polyol represented by Formula (A2-2) and a polyester polyol represented by Formula (A2-3), and
in a case where a total number of moles of a group represented by Formula (a1-1), which is contained in the polyol component, is denoted as $C_{A1-1}$, a total number of moles of a group represented by Formula (al-2), which is contained in the polyol component, is denoted as $C_{A1-2}$, a total number of moles of a group represented by Formula (al-3), which is contained in the polyol component, is denoted as $C_{A1-3}$, a total number of moles of a group represented by Formula (a2-2) contained in the polyol component is denoted as $C_{A2-2}$, and a total number of moles of a group represented by Formula (a2-3) contained in the polyol component is denoted as $C_{A2-3}$,
a molar ratio $((C_{A2-2} + C_{A2-3})/(C_{A1-1} + C_{A1-2} + C_{A1-3}))$ is 0.01 to 0.750,

[Chem. 39]

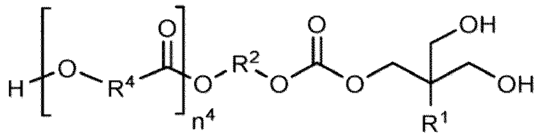

(A2-2)

[in Formula (A2-2), $R^1$, $R^2$, and $R^4$ respectively have the same meanings as defined above,
$n^4$ represents an integer of 0 or more, and
in a case where $R^4$ is present in plurality, a plurality thereof may be the same or different from each other]

[Chem. 40]

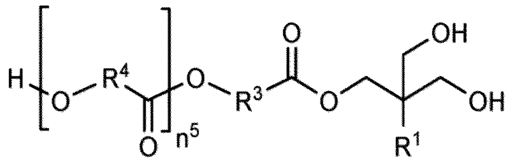

(A2-3)

[in Formula (A2-3), $R^1$, $R^3$, and $R^4$ respectively have the same meanings as defined above,
$n^5$ represents an integer of 0 or more, and
in a case where $R^4$ is present in plurality, a plurality thereof may be the same or different from each other]

[Chem. 41]

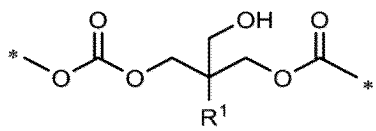

(a1-1)

[in Formula (a1-1), $R^1$ has the same meaning as defined above, and * represents a bonding site]

[Chem. 42]

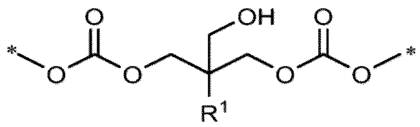

(a1-2)

[in Formula (al-2), $R^1$ has the same meaning as defined above, and * represents a bonding site]

[Chem. 43]

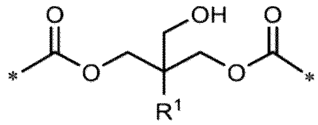

(a1-3)

[in Formula (al-3), $R^1$ has the same meaning as defined above, and * represents a bonding site]

[Chem. 44]

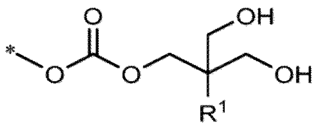

(a2-2)

[in Formula (a2-2), $R^1$ has the same meaning as defined above, and * represents a bonding site]

[Chem. 45]

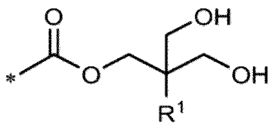

(a2-3)

[in Formula (a2-3), $R^1$ has the same meaning as defined above, and * represents a bonding site].

**20.** The urethane resin according to any one of claims 17 to 19, wherein the polyol component further includes a polycarbonate polyol represented by Formula (A-3) and a polycarbonate diol represented by Formula (A-4),

[Chem. 46]

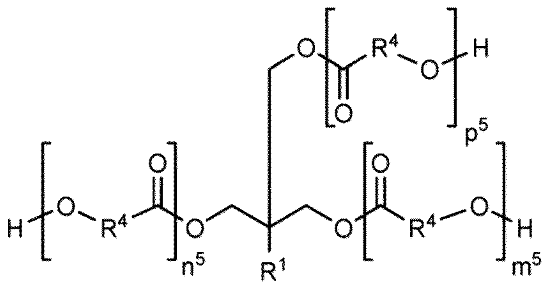

(A-3)

[in Formula (A-3), $R^1$ and $R^4$ respectively have the same meanings as defined above,
$n^5$, $m^5$, and $p^5$ each represent an integer of 1 or more, and
a plurality of $R^4$'s may be the same or different from each other]

[Chem. 47]

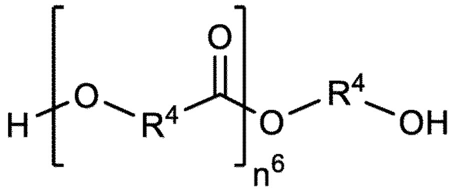

(A-4)

[in Formula (A-4), $R^4$ has the same meaning as defined above, and $n^6$ represents an integer of 1 or more, and a plurality of $R^4$'s may be the same or different from each other].

**21.** The urethane resin according to any one of claims 17 to 19,

wherein in a case where a total number of moles of a group represented by Formula (a1-1), which is contained in the polyol component, is denoted as $C_{A1-1}$, and a total number of moles of a group represented by Formula (I) contained in the polyol component is denoted as $C_T$,
a molar ratio ($C_{A1-1}/C_T$) is 0.02 to 0.99,

[Chem. 48]

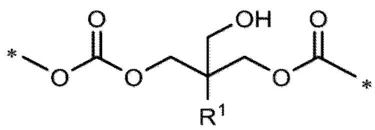

(a1-1)

[in Formula (a1-1), $R^1$ has the same meaning as defined above, and * represents a bonding site]

[Chem. 49]

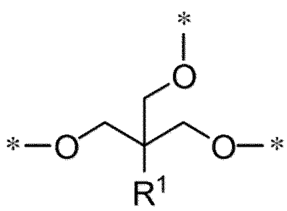

(I)

[in Formula (I), $R^1$ has the same meaning as defined above, and * represents a bonding site].

**22.** The urethane resin according to any one of claims 17 to 19,

wherein in a case where a total number of moles of a group represented by Formula (al-2), which is contained in the polyol component, is denoted as $C_{A1-2}$, and a total number of moles of a group represented by Formula (I) contained in the polyol component is denoted as $C_T$,
a molar ratio ($C_{A1-2}/C_T$) is 0.001 to 0.99,

[Chem. 50]

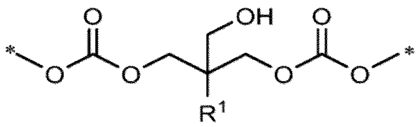

(a1-2)

[in Formula (al-2), $R^1$ has the same meaning as defined above, and * represents a bonding site]

[Chem. 51]

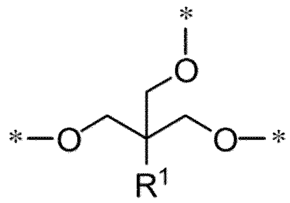

(I)

[in Formula (I), $R^1$ has the same meaning as defined above, and * represents a bonding site].

**23.** The urethane resin according to any one of claims 17 to 19,

wherein in a case where a total number of moles of a group represented by Formula (al-3), which is contained in the polyol component, is denoted as $C_{A1-3}$, and a total number of moles of a group represented by Formula (I) contained in the polyol component is denoted as $C_T$,
a molar ratio ($C_{A1-3}/C_T$) is 0.005 to 0.340,

[Chem. 52]

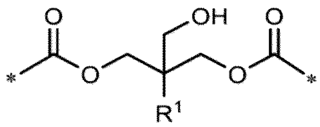

(a1-3)

[in Formula (al-3), $R^1$ has the same meaning as defined above, and * represents a bonding site]

[Chem. 53]

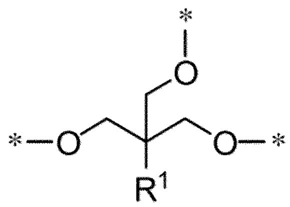

(I)

[in Formula (I), $R^1$ has the same meaning as defined above, and * represents a bonding site].

**24.** The urethane resin according to claim 19,

wherein in a case where a total number of moles of a group represented by Formula (a2-3) contained in the polyol component is denoted as $C_{A2-3}$, and a total number of moles of a group represented by Formula (I) contained in the polyol component is denoted as $C_T$,
a molar ratio ($C_{A2-3}/C_T$) is 0.001 to 0.234,

[Chem. 54]

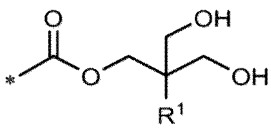

(a2-3)

[in Formula (a2-3), $R^1$ has the same meaning as defined above, and * represents a bonding site]

[Chem. 55]

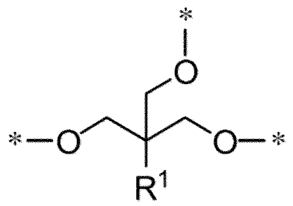

(I)

[in Formula (I), $R^1$ has the same meaning as defined above, and * represents a bonding site].

**25.** The urethane resin according to claim 19,

wherein in a case where a total number of moles of a group represented by Formula (d) contained in the polyol component is denoted as $C_D$, a total number of moles of a group represented by Formula (a2-2) contained in the polyol component is denoted as $C_{A2-2}$, and a total number of moles of a group represented by Formula (a2-3) contained in the polyol component is denoted as $C_{A2-3}$,
a molar ratio ($C_{A2-3}/(C_{A2-2} + C_{A2-3} + C_D) \times 100$) is 0.010 to 10.20,

[Chem. 56]

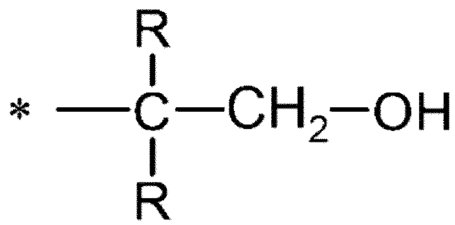

(d)

[in Formula (d), R is a hydrogen atom or an alkanediyl group, and * represents a bonding site, and R's may be the same or different from each other]

[Chem. 57]

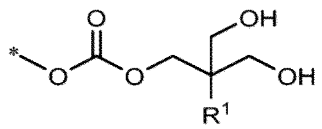

(a2-2)

[in Formula (a2-2), $R^1$ has the same meaning as defined above, and * represents a bonding site]

[Chem. 58]

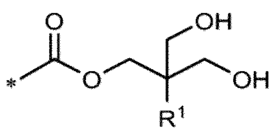

(a2-3)

[in Formula (a2-3), $R^1$ has the same meaning as defined above, and * represents a bonding site].

**26.** The urethane resin according to claim 19,

wherein in a case where a total number of moles of a group represented by Formula (d) contained in the polyol component is denoted as $C_D$, a total number of moles of a group represented by Formula (a2-2) contained in the polyol component is denoted as $C_{A2-2}$, and a total number of moles of a group represented by Formula (a2-3) contained in the polyol component is denoted as $C_{A2-3}$,

a molar ratio $((C_{A2-2} + C_{A2-3})/(C_{A2-2} + C_{A2-3} + C_D) \times 100)$ is 0.100 to 12.00,

[Chem. 59]

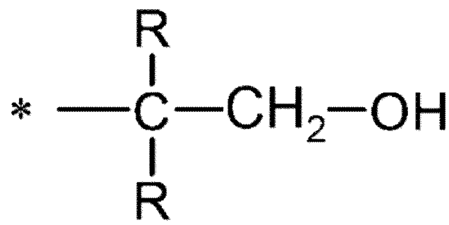

(d)

[in Formula (d), R is a hydrogen atom or an alkanediyl group, and * represents a bonding site, and R's may be the same or different from each other]

[Chem. 60]

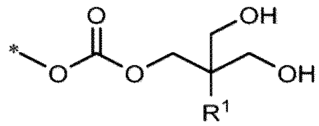

(a2-2)

[in Formula (a2-2), $R^1$ has the same meaning as defined above, and * represents a bonding site]

[Chem. 61]

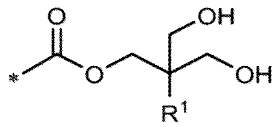

(a2-3)

[in Formula (a2-3), $R^1$ has the same meaning as defined above, and * represents a bonding site].

**27.** The urethane resin according to any one of claims 17 to 19,

wherein in a case where a total number of moles of a group represented by Formula (f) contained in the polyol component is denoted as $C_F$, and a total number of moles of a group represented by Formula (I) contained in the polyol component is denoted as $C_T$,
a molar ratio $(C_F/C_T \times 100)$ is 1.70 to 45.0,

[Chem. 62]

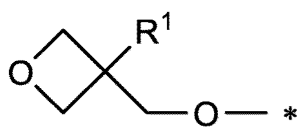

(f')

[in Formula (f), $R^1$ has the same meaning as defined above, and * represents a bonding site]

[Chem. 63]

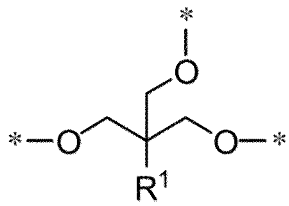

(I)

[in Formula (I), $R^1$ has the same meaning as defined above, and * represents a bonding site].

**28.** The urethane resin according to any one of claims 17 to 19,

wherein $R^3$ is an alkanediyl group, and
$R^4$ is an alkanediyl group or *1-O-$R^c$-*2.

**29.** The urethane resin according to claim 28,

wherein the polyol component is a reaction product of a polycarbonate polyol (B) and a polyester polyol (C), and the polyester polyol (C) includes a polyester polyol (β) which is a ring-opening addition polymer of a cyclic ester compound, where the ring-opening addition polymer is obtained by using a diol as an initiator, and/or a polyester polyol (β') which is a ring-opening addition polymer of a cyclic ester compound, where the ring-opening addition polymer is obtained by using, as an initiator, a polyhydric alcohol having three or more hydroxyl groups as functional groups.

**30.** The urethane resin according to any one of claims 17 to 19,
wherein the polyol component further includes a polyol having an acidic group.

**31.** An aqueous urethane resin dispersion comprising:

an aqueous medium; and
the urethane resin according to claim 30 which is dispersed in the aqueous medium, or a neutralized product thereof.

**32.** A coating agent comprising:
the urethane resin according to any one of claims 17 to 19.

Fig.1

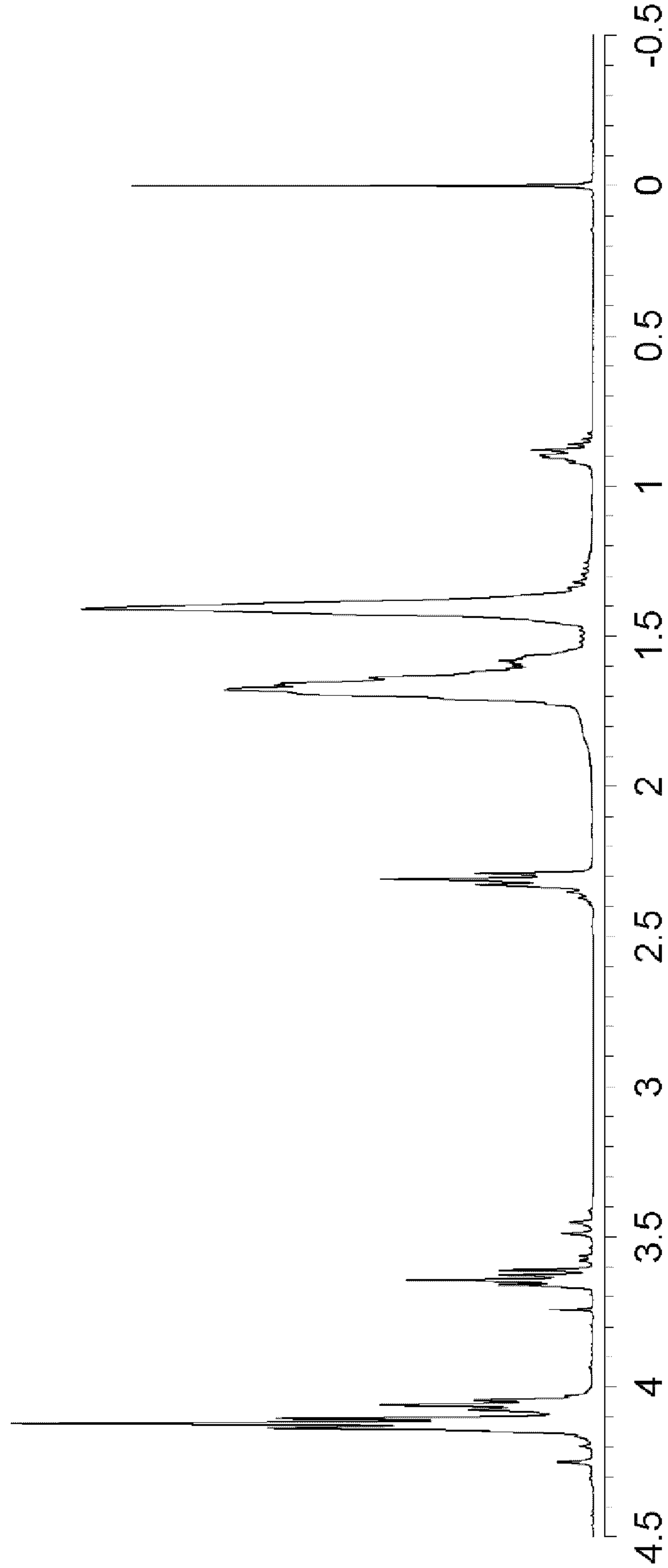

*Fig.2*

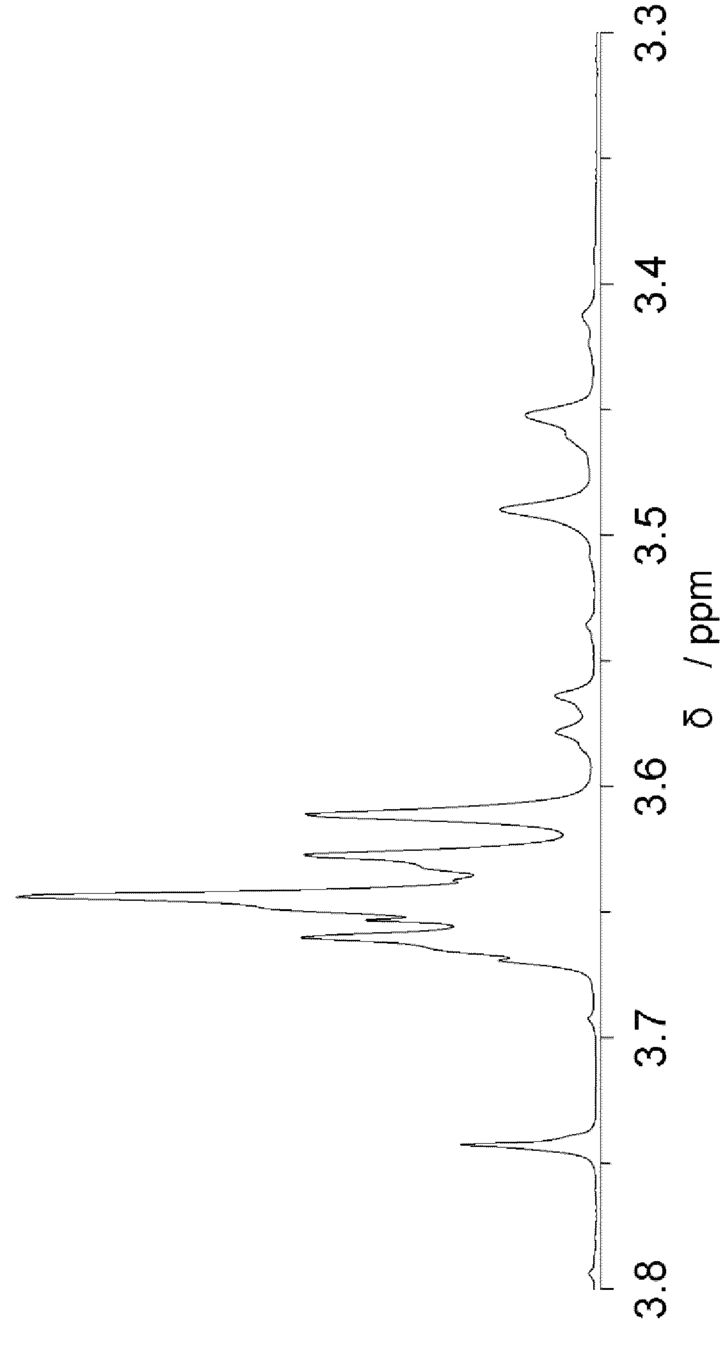

## INTERNATIONAL SEARCH REPORT

International application No.
**PCT/JP2023/013493**

### A. CLASSIFICATION OF SUBJECT MATTER

***C08G 64/00***(2006.01)i; ***C09D 175/04***(2006.01)i; ***C08G 18/00***(2006.01)i; ***C08G 18/42***(2006.01)i; ***C08G 18/44***(2006.01)i
FI: C08G64/00; C08G18/00 C; C08G18/42 069; C08G18/44; C09D175/04

According to International Patent Classification (IPC) or to both national classification and IPC

### B. FIELDS SEARCHED

Minimum documentation searched (classification system followed by classification symbols)

C08G64/00; C09D175/04; C08G18/00; C08G18/42; C08G18/44

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2020-111666 A (TOSOH CORP.) 27 July 2020 (2020-07-27)<br>claims, paragraphs [0030], [0035], examples (particularly, example 1) | 1-15, 17-29, 32<br>16, 30, 31 |
| Y | JP 54-041815 A (NITTO CHEM. IND. CO., LTD.) 03 April 1979 (1979-04-03)<br>claims, page 3, lower left column, line 7 to page 4, upper left column, line 7 | 16 |
| Y | WO 03/089486 A1 (NIPPON SHOKUBAI CO., LTD.) 30 October 2003 (2003-10-30)<br>page 21, line 25 to page 22, line 14 | 16 |
| Y | JP 2019-131766 A (TOSOH CORP.) 08 August 2019 (2019-08-08)<br>claims, examples | 30, 31 |
| A | JP 2004-346094 A (DAICEL CHEM. IND., LTD.) 09 December 2004 (2004-12-09)<br>claims, examples | 1-32 |
| A | JP 2001-040073 A (UBE IND., LTD.) 13 February 2001 (2001-02-13)<br>claims, examples | 1-32 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 May 2023** | **13 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (January 2015)

**INTERNATIONAL SEARCH REPORT**

International application No.
**PCT/JP2023/013493**

**C. DOCUMENTS CONSIDERED TO BE RELEVANT**

| Category* | Citation of document, with indication, where appropriate, of the relevant passages | Relevant to claim No. |
|---|---|---|
| P, A | WO 2022/080491 A1 (TOSOH CORP.) 21 April 2022 (2022-04-21) claims, examples | 1-32 |

Form PCT/ISA/210 (second sheet) (January 2015)

**INTERNATIONAL SEARCH REPORT**
**Information on patent family members**

International application No.
**PCT/JP2023/013493**

| Patent document cited in search report | Publication date (day/month/year) | Patent family member(s) | Publication date (day/month/year) |
|---|---|---|---|
| JP 2020-111666 A | 27 July 2020 | WO 2020/145352 A1 | |
| JP 54-041815 A | 03 April 1979 | (Family: none) | |
| WO 03/089486 A1 | 30 October 2003 | US 2003/0199655 A1<br>paragraph [0092]<br>EP 1505090 A1<br>CN 1625573 A<br>KR 10-0738275 B1 | |
| JP 2019-131766 A | 08 August 2019 | (Family: none) | |
| JP 2004-346094 A | 09 December 2004 | WO 2004/101640 A1<br>TW 200508453 A | |
| JP 2001-040073 A | 13 February 2001 | (Family: none) | |
| WO 2022/080491 A1 | 21 April 2022 | JP 2022-66229 A<br>JP 2022-103293 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H3220233 A
- JP 2012184380 A